(19) **Europäisches Patentamt / European Patent Office / Office européen des brevets**

(11) **EP 3 021 589 A1**

(12) **EUROPEAN PATENT APPLICATION**
published in accordance with Art. 153(4) EPC

(43) Date of publication:
**18.05.2016 Bulletin 2016/20**

(21) Application number: **14822640.0**

(22) Date of filing: **08.07.2014**

(51) Int Cl.:
*H04N 19/70* (2014.01)    *H04N 19/30* (2014.01)

(86) International application number:
**PCT/JP2014/068169**

(87) International publication number:
**WO 2015/005331 (15.01.2015 Gazette 2015/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.07.2013   JP 2013144617**

(71) Applicant: **Sharp Kabushiki Kaisha Osaka-shi, Osaka 545-8522 (JP)**

(72) Inventors:
• **IKAI, Tomohiro Osaka-shi, Osaka 545-8522 (JP)**
• **YAMAMOTO, Tomoyuki Osaka-shi, Osaka 545-8522 (JP)**

(74) Representative: **Müller Hoffmann & Partner Patentanwälte mbB St.-Martin-Strasse 58 81541 München (DE)**

(54) **IMAGE DECODING DEVICE AND IMAGE ENCODING DEVICE**

(57)    Provided is an image decoding device including layer dependency information decoding means for decoding dependent layer information that is information indicating a layer, different from a target layer, having the possibility of being referenced by the target layer, actual dependent layer information decoding means for decoding information that indicates a picture, of a layer different from the target layer, referenced by a target picture of the target layer, and reference picture set deriving means for generating at least an inter-layer reference picture set on the basis of the actual dependent layer information, in which the layer dependency information decoding means decodes an actual layer dependency flag that indicates whether a picture of each layer belonging to the dependent layer list is referenced by the target picture.

FIG. 5

**Description**

Technical Field

The present invention relates to an image decoding device and an image coding device.

Background Art

One of the basic techniques for coding a moving image is inter-frame predictive coding that performs prediction between images (pictures) which are continuous in the time direction. Pictures that are close in time are highly correlated with each other. If the difference between the pictures is obtained, the value of the difference is close to zero. Thus, the difference value can be used to reduce a coding amount significantly.

A coding method for a moving image configured of a plurality of layers is generally called v scalable coding, or hierarchical coding. A layer referred hereto means a set of moving image data configured of a plurality of pictures that is continuous in the time direction. In the scalable coding, a high coding efficiency is realized by performing prediction between layers in addition to performing the above inter-frame prediction. A layer that serves as a reference in which inter-layer prediction is not used is called a base layer, and a layer other than the base layer is called an enhancement layer. Scalable coding in the case where a layer is configured of viewpoint images is called view scalable coding. At this time, the base layer is called a base view, and the enhancement layer is called a non-base view (dependent view) as well.

In addition to the view scalable coding, there are spatial scalable coding (processes a low-resolution picture as the base layer and a high-resolution picture as the enhancement layer), SNR scalable coding (processes a low-quality picture as the base layer and a high-quality picture as the enhancement layer), and the like in the scalable coding. In the scalable coding, a temporally preceding or succeeding picture that is previously coded/decoded within each layer can be used as a reference picture, or a picture of a layer different from a target layer can also be used as a reference layer. Temporal prediction within a layer is called motion prediction in which a vector indicating a shift between pictures is a motion vector. Prediction between layers is called inter-layer prediction in which a vector indicating a shift between pictures is called a displacement vector. In the case such as the view scalable coding where a layer is configured of viewpoint images, the displacement vector is a vector that represents parallax between viewpoint images and is called a parallax vector as well.

A review has been started of deliberation of a scalable coding scheme for a plurality of layers as a standard extended from H.265 / high efficiency video coding (HEVC, NPL 1) as an example of the scalable coding in the international standardization of moving image coding schemes.

In the extension of such a coding scheme, dependent layer information that is information indicating a layer, different from the target layer, having the possibility of being referenced by the target layer is coded into a parameter set, and actual dependent layer information for decoding information that indicates pictures, of a layer different from the target layer, referenced by a target picture of the target layer is decoded in a slice segment header (NPL 2 and NPL 3).

Citation List

Non Patent Literature

NPL 1: "Recommendation ITU-T H.265 High efficiency video coding", TELECOMMUNICATION STANDARDIZATION SECTOR OF ITU, 04/2013
NPL 2: "SHVC Working Draft 2", JCTVC-M1008, JCT-VC, Incheon, KR, 18-26 Apr. 2013
NPL 3: "MV-HEVC Draft Text 4", JCT3V-D1004, JCT-3V, Incheon, KR, 20-26 Apr. 2013

Summary of Invention

Technical Problem

A problem, however, arises in that while the number of actual dependent layers and an index indicating each actual dependent layer are coded as the actual dependent layer information in NPL 2 and NPL 3, these pieces of information are redundant.

In addition, while there is a flag that restricts the number of actual dependent layers to one in NPL 2 and NPL 3, the flag cannot indicate the case where the number of actual dependent layers is restricted to a number other than one. Thus, a problem arises in that the information indicating the actual dependent layer is redundant in the case where the number of actual dependent layers is not one.

In addition, while the maximum dependency type value is decoded in NPL 2 and NPL 3, this value is greater than or equal to two, thereby posing the problem of necessitating decoding the dependency type.

In addition, while an inter-layer picture set is generated on the basis of the actual dependent layer to generate a reference picture list in NPL 2 and NPL 3, the elements of the inter-layer picture set are inserted in the same order into reference lists of an L0 reference picture list and an L1 reference picture list. Thus, a problem arises in that the L0 reference picture list and the L1 reference picture list cannot be used separately, thereby increasing the coding amount of the reference picture index.

The present invention is devised with consideration of the above problem to provide an image decoding device and an image coding device that can reduce the coding amount of actual dependent layer information, a dependent layer type, and a reference picture index.

Solution to Problem

In order to resolve the above problem, according to an aspect of the present invention, there is provided a moving image decoding device including layer dependency information decoding means for decoding dependent layer information that indicates a dependency relationship between a target layer and a reference layer, actual dependent layer information decoding means for decoding actual dependent layer information that indicates a picture of the reference layer, and reference picture set deriving means for generating at least an inter-layer reference picture set on the basis of the actual dependent layer information, in which the actual dependent layer information decoding means decodes the number of actual dependent layers that indicates the number of pictures of the reference layer and decodes an actual dependent layer index that indicates an element of a dependent layer list from coded data only in a case where the number of actual dependent layers is different from the number of dependent layers.

In order to resolve the above problem, according to another aspect of the present invention, there is provided a moving image decoding device including layer dependency information decoding means for decoding dependent layer information that indicates a dependency relationship between a target layer and a reference layer, actual dependency flag existence flag decoding means for indicating whether to decode actual dependent layer information in a slice segment header, actual dependent layer information decoding means for decoding actual dependent layer information that indicates a picture of the reference layer, and reference picture set deriving means for generating at least an inter-layer reference picture set on the basis of the actual dependent layer information, in which the actual dependent layer information decoding means decodes an actual dependent layer list from coded data only in a case where the actual dependency flag existence flag decoded by the actual dependency flag existence flag decoding means has a value that indicates existence.

In order to resolve the above problem, according to still another aspect of the present invention, there is provided a moving image decoding device including layer dependency information decoding means for decoding dependent layer information that indicates a dependency relationship between a target layer and a reference layer, actual dependent layer information decoding means for decoding information that indicates a picture of the reference layer, and reference picture set deriving means for generating at least an inter-layer reference picture set on the basis of the actual dependent layer information, in which the layer dependency information decoding means decodes an actual layer dependency flag that indicates whether a picture of each layer belonging to a dependent layer list is referenced by a target picture.

In order to resolve the above problem, according to still another aspect of the present invention, there is provided a moving image coding device including layer dependency information decoding means for coding dependent layer information that indicates a dependency relationship between a target layer and a reference layer, and actual dependent layer information coding means for coding actual dependent layer information that indicates a picture of the reference layer, in which the actual dependent layer information coding means codes an actual layer dependency flag that indicates whether a picture of each layer belonging to a dependent layer list is referenced by a target picture.

In order to resolve the above problem, according to still another aspect of the present invention, there is provided a moving image decoding device including layer dependency information decoding means for decoding dependent layer information that indicates a dependency relationship between a target layer and a reference layer, maximum actual layer number decoding means for decoding the maximum number of actual dependent layers that is the maximum number of pictures, of the reference layer, referenced by a picture of the target layer, actual dependent layer information decoding means for decoding actual dependent layer information that indicates a picture of the reference layer, and reference picture set deriving means for generating at least an inter-layer reference picture set on the basis of the actual dependent layer information, in which the layer dependency information decoding means decodes an actual dependent layer that indicates an element of a dependent layer list having a size less than or equal to the maximum number of actual layers.

In order to resolve the above problem, according to still another aspect of the present invention, there is provided a moving image decoding device including maximum dependency type value decoding means for decoding a maximum layer dependency type value, dependency type decoding means for decoding a layer dependency type that has a value less than or equal to the maximum dependency type value, and reference picture set deriving means for generating an inter-layer reference picture set on the basis of the layer dependency type, in which the maximum dependency type value decoding means decodes the maximum dependency type value that has a value greater than or equal to zero, the dependency type decoding means decodes the layer dependency type from coded data in a case where the maximum dependency type value is other than zero or derives the layer dependency type as zero in a case where the maximum dependency type value is zero, and the dependency type decoding means further derives a sample dependency flag SamplePredEnableFlag and a motion dependency flag MotionPredEnableFlag according to the layer dependency type and sets the sample dependency flag SamplePredEnableFlag and the motion dependency flag MotionPredEnableFlag to one in a case where the layer dependency type is zero, the sample dependency flag SamplePredEnableFlag being a flag indicating whether a dependent layer is a sample dependent layer and the motion dependency flag MotionPredEnableFlag being a flag indicating whether a dependent layer is a motion dependent layer.

In order to resolve the above problem, according to still another aspect of the present invention, there is provided a moving image decoding device including layer dependency information decoding means for decoding actual dependent layer information that is information indicating a picture of a reference layer referenced by a target picture, reference picture set deriving means for generating at least an inter-layer reference picture set on the basis of the actual dependent layer information, and reference picture list generating means for generating a reference picture list, in which the reference picture list generating means adds an inter-layer reference picture in a predetermined order in a case of generating an L0 reference list and adds the inter-layer reference picture in an order different from the predetermined order in a case of generating an L1 reference list.

Advantageous Effects of Invention

According to the present invention, redundancy can be reduced in transmission of a flag and a parameter related to inter-layer prediction, thereby decreasing the coding amount for transmission in scalable coding/decoding targeting a plurality of layers.

Brief Description of Drawings

[Fig. 1] Fig. 1 is a schematic diagram illustrating a configuration of an image transmission system according to the present invention.
[Fig. 2] Fig. 2 is a diagram illustrating the hierarchical structure of data of a coded stream according to the present invention.
[Fig. 3] Fig. 3 is a conceptual diagram illustrating an example of a reference picture list.
[Fig. 4] Fig. 4 is a conceptual diagram illustrating examples of a reference picture.
[Fig. 5] Fig. 5 is a schematic diagram illustrating a configuration of an image decoding device according to one embodiment of the present invention.
[Fig. 6] Fig. 6 is a schematic diagram illustrating a configuration of an image data decoder according to the present embodiment.
[Fig. 7] Fig. 7 is a schematic diagram illustrating a configuration of an image coding device according to the embodiment of the present invention.
[Fig. 8] Fig. 8 is a schematic diagram illustrating a configuration of an image data coder according to the present embodiment.
[Fig. 9] Fig. 9 is an example of a syntax table of a video parameter set extension according to the present invention.
[Fig. 10] Fig. 10 is an example of a syntax table of a slice segment header according to the present invention.
[Fig. 11] Fig. 11 is a diagram describing a dependent layer of the present invention.
[Fig. 12] Fig. 12 is a diagram describing an actual dependent layer of the present invention.
[Fig. 13] Fig. 13 is a diagram describing an actual sample dependent layer of the present invention.
[Fig. 14] Fig. 14 illustrates an example of the data structure of the slice segment header decoded by a slice segment header decoder 402 of the embodiment of the present invention.
[Fig. 15] Fig. 15 is a diagram illustrating a process performed by an actual dependent layer decoder 403 of the embodiment of the present invention.
[Fig. 16] Fig. 16 is an example of a derivation procedure for an inter-layer reference picture set and the total number of reference pictures of the present invention.
[Fig. 17] Fig. 17 is an example of a derivation procedure for the reference picture list of the embodiment of the present invention.
[Fig. 18] Fig. 18 illustrates an example of the data structure of the slice segment header decoded by a slice segment header decoder 402A2 of the embodiment of the present invention.

[Fig. 19] Fig. 19 is a schematic diagram illustrating a configuration of an image decoding device 31A3 according to a first embodiment of the present invention.

[Fig. 20] Fig. 20 is an example of a derivation procedure for the number of actual reference layer pictures and a reference layer identifier according to the first embodiment of the present invention.

[Fig. 21] Fig. 21 is a diagram illustrating a process performed by an actual dependent layer decoder 403A2 of the embodiment of the present invention.

[Fig. 22] Fig. 22 illustrates an example of the data structure of the slice segment header decoded by a slice segment header decoder 402A3 of the embodiment of the present invention.

[Fig. 23] Fig. 23 is a schematic diagram illustrating a configuration of an image decoding device 31A4 according to the first embodiment of the present invention.

[Fig. 24] Fig. 24 illustrates an example of the data structure of a parameter set decoded by a parameter set decoder 401A4 according to the first embodiment of the present invention.

[Fig. 25] Fig. 25 illustrates an example of the data structure of the slice segment header decoded by a slice segment header decoder 402A4 of the embodiment of the present invention.

[Fig. 26] Fig. 26 is a schematic diagram illustrating a configuration B1 of an image decoding device according to a second embodiment of the present invention.

[Fig. 27] Fig. 27 is a schematic diagram illustrating a configuration of an image decoding device B2 according to the second embodiment of the present invention.

[Fig. 28] Fig. 28 illustrates an example of the data structure of the parameter set decoded by a parameter set decoder 401B1 according to the second embodiment of the present invention.

[Fig. 29] Fig. 29 illustrates an example of the data structure of the slice segment header decoded by a slice segment header decoder 402B1 according to the second embodiment of the present invention.

[Fig. 30] Fig. 30 illustrates an example of the data structure of the slice segment header decoded by a slice segment header decoder 402B2 according to the second embodiment of the present invention.

[Fig. 31] Fig. 31 is a schematic diagram illustrating a configuration of an image decoding device C1 according to a third embodiment of the present invention.

[Fig. 32] Fig. 32 illustrates an example of the data structure of the parameter set decoded by a parameter set decoder 401C1 according to the third embodiment of the present invention.

[Fig. 33] Fig. 33 is a diagram describing a relationship between a layer dependency type, a sample dependency flag, and a motion dependency flag according to the third embodiment of the present invention.

[Fig. 34] Fig. 34 is a schematic diagram illustrating a configuration of an image decoding device 31D1 according to a fourth embodiment of the present invention.

[Fig. 35] Fig. 35 is a schematic diagram illustrating a configuration of an image decoding device 31D2 according to another example of the fourth embodiment of the present invention.

[Fig. 36] Fig. 36 is a diagram describing a derivation process for an L0 reference picture list performed by a reference picture set deriving unit 404D1 according to the fourth embodiment of the present invention.

[Fig. 37] Fig. 37 is a diagram describing a derivation process for an L1 reference picture list performed by the reference picture set deriving unit 404D1 according to the fourth embodiment of the present invention.

[Fig. 38] Fig. 38 is a diagram describing a derivation process for the L1 reference picture list performed by a reference picture set deriving unit 404D1" according to the fourth embodiment of the present invention.

[Fig. 39] Fig. 39 illustrates an example of the data structure of the parameter set decoded by a parameter set decoder 401D2 according to the fourth embodiment of the present invention.

[Fig. 40] Fig. 40 is a diagram describing a derivation process for the L0 reference picture list performed by a reference picture set deriving unit 404D2 according to the fourth embodiment of the present invention.

[Fig. 41] Fig. 41 is a diagram describing a derivation process for the L1 reference picture list performed by the reference picture set deriving unit 404D2 according to the fourth embodiment of the present invention.

Description of Embodiments

(First Embodiment)

Hereinafter, embodiments of the present invention will be described with reference to the drawings.

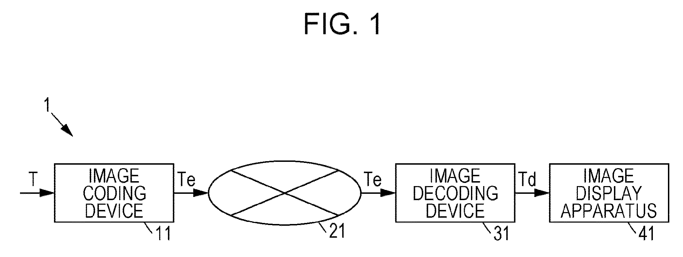

Fig. 1 is a schematic diagram illustrating a configuration of an image transmission system 1 according to the present embodiment.

The image transmission system 1 is a system that displays an image decoded from a transmitted code as well as transmitting a code into which a plurality of layer images is coded. The image transmission system 1 is configured to include an image coding device 11, a network 21, an image decoding device 31, and an image display apparatus 41.

Signals T that indicate a plurality of layer images (referred to as texture images as well) are input into the image coding device 11. A layer image is an image that is visually recognized or captured from a certain viewpoint at a certain resolution. Each of the plurality of layer images is called a viewpoint image in the case where the plurality of layer images is used to perform view scalable coding of coding a three-dimensional image. A viewpoint corresponds to the position of a capturing device or to the point of observation. For example, a plurality of viewpoint images is images respectively captured by capturing devices that are directed toward a subject from the left and right sides thereof. The image coding device 11 codes each of these signals to generate a coded stream Te (coded data). Details of the coded stream Te will be described later. A viewpoint image is a two-dimensional image (planar image) that is observed from a certain viewpoint. The viewpoint image is indicated by, for example, a luminance value or a color signal value per pixel arranged in a two-dimensional plane. Hereinafter, one viewpoint image or a signal indicating the viewpoint image will be called a picture. In the case where a plurality of layer images is used to perform spatial scalable coding, the plurality of layer images is configured of a low-resolution base layer image and a high-resolution enhancement layer image. In the case where a plurality of layer images is used to perform SNR scalable coding, the plurality of layer images is configured of a low-quality base layer image and a high-quality enhancement layer image. The view scalable coding, the spatial scalable coding, and the SNR scalable coding may also be performed in an arbitrary combination. The present embodiment deals with coding and decoding of an image that includes at least the base layer image and an image other than the base layer image (enhancement layer image) as the plurality of layer images. An image on the referenced side between two layers of a plurality of layers that are in a reference relationship (dependency relationship) in an image or in a coded parameter is called a first layer image, and an image on the referencing side is called a second layer image. For example, in the case where there exists an enhancement image (other than the base layer) that is coded by referencing the base layer, the base layer image is regarded as the first layer image and the enhancement image as the second layer image. Examples of the enhancement layer image include a viewpoint image other than a base view, a depth image, and a high-resolution image.

The network 21 transmits the coded stream Te generated by the image coding device 11 to the image decoding device 31. The network 21 is either the Internet, a wide area network (WAN), a local area network (LAN), or a combination thereof. The network 21 is not necessarily limited to a bidirectional communication network and may be a unidirectional or bidirectional communication network that transmits a broadcast wave such as a terrestrial digital broadcast or a satellite broadcast. In addition, the network 21 may be replaced by a recording medium such as a digital versatile disc (DVD) or a Blu-ray (registered trademark) disc (BD) on which the coded stream Te is recorded.

The image decoding device 31 decodes each coded stream Te transmitted by the network 21 and generates each of a plurality of decoded layer images Td (decoded viewpoint images Td).

The image display apparatus 41 displays all or a part of the plurality of decoded layer images Td generated by the image decoding device 31. For example, in the view scalable coding, all of the plurality of decoded layer images Td are displayed as a three-dimensional image (stereoscopic image) or a free viewpoint image, or a part thereof is displayed as a two-dimensional image. The image display apparatus 41 includes a display device such as a liquid crystal display or an organic electroluminescent (EL) display. In the spatial scalable coding and the SNR scalable coding, the high-quality enhancement layer image is displayed in the case where the image decoding device 31 and the image display apparatus 41 have a high processing capability, and the base layer image that does not require such a high processing capability and display capability as the enhancement layer is displayed in the case where the image decoding device 31 and the image display apparatus 41 have a low processing capability.

<Structure of Coded Stream Te>

Prior to detailed descriptions of the image coding device 11 and the image decoding device 31 according to the present embodiment, the data structure of the coded stream Te that is generated by the image coding device 11 and decoded by the image decoding device 31 will be described.

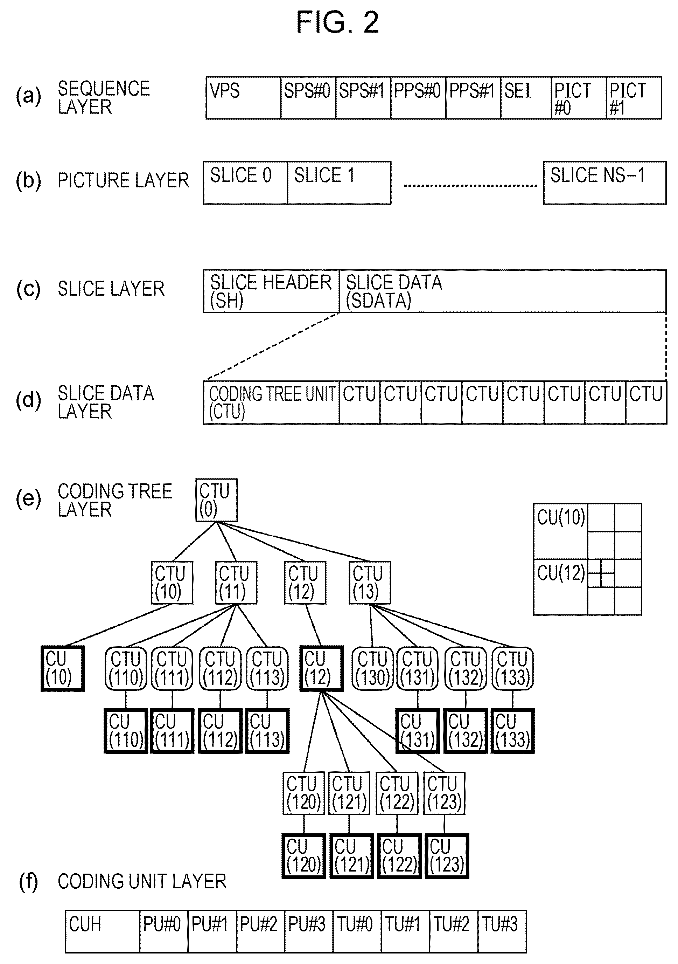

Fig. 2 is a diagram illustrating the hierarchical structure of data in the coded stream Te. The coded stream Te, for example, includes a sequence and a plurality of pictures that constitutes the sequence. Figs. 2(a) to 2(f) are diagrams respectively illustrating a sequence layer that predefines a sequence SEQ, a picture layer that defines a picture PICT, a slice layer that defines a slice S, a slice data layer that defines slice data, a coding tree layer that defines a coding tree unit included in the slice data, and a coding unit layer that defines a coding unit (CU) included in the coding tree. The coded data of each of these layers constitutes a data structure called a network abstraction layer (NAL) unit according to the type of data. The type of data constituting a target NAL unit is indicated by an NAL unit type (nal_unit_type) that is included in the header part of the NAL unit. In addition, a layer identifier (nuh_layer_id) is included in the NAL unit header. A layer identifier is information that is used to distinguish a plurality of layer images (for example, images of a plurality of viewpoints) which is the target of the scalable coding.

(Sequence Layer)

The sequence layer defines a set of data that is referenced by the image decoding device 31 to decode the processing target sequence SEQ (hereinafter, referred to as a target sequence as well). The sequence SEQ, as illustrated in Fig. 2(a), includes a video parameter set VPS, a sequence parameter set SPS, a picture parameter set PPS, the picture PICT, and supplemental enhancement information SEI. The value that is illustrated after the symbol # indicates the layer ID. While Fig. 2 illustrates the example in which there exists coded data of #0 and #1, that is, of a layer 0 and a layer 1, the type of layer and the number of layers are not limited thereto.

The video parameter set VPS, for a moving image configured of a plurality of layers, defines a set of coding parameters that are common to a plurality of moving images and a set of coding parameters that are related to the plurality of layers included in the moving image and related to each layer.

The sequence parameter set SPS defines a set of coding parameters that is referenced by the image decoding device 31 to decode the target sequence. For example, the width and height of a picture included in the target sequence are defined.

The picture parameter set PPS defines a set of coding parameters that is referenced by the image decoding device 31 to decode each picture included in the target sequence. For example, the reference value of a quantization range used in decoding of a picture and a flag that indicates application of weighted prediction are included. The PPS may exist in plural quantities within one layer. In this case, one of the plurality of PPSs to be applied is selected from each picture included in the target sequence.

(Picture Layer)

The picture layer defines a set of data that is referenced by the image decoding device 31 to decode the processing target picture PICT (hereinafter, referred to as a target picture as well). The picture PICT, as illustrated in Fig. 2(b), includes slices S0 to SNS-1 (NS is the total number of slices included in the picture PICT).

Hereinafter, the suffixes 0 to NS-1 of the slices S0 to SNS-1 may not be written in the case where the distinction between each of the slices S0 to SNS-1 is not necessary. The same applies to other suffixed data, described later, that is included in the coded stream Te.

(Slice Layer)

The slice layer defines a set of data that is referenced by the image decoding device 31 to decode the processing target slice S (referred to as a target slice as well). The slice S, as illustrated in Fig. 2(c), includes a slice header SH and slice data SDATA.

The slice header SH includes a coding parameter group that is referenced by the image decoding device 31 to determine the decoding method for the target slice. An example of the coding parameters included in the slice header SH is slice type specifying information that specifies a slice type.

Slice types that are specifiable by the slice type specifying information are exemplified by (1) an I slice for which only intra-prediction is used in coding, (2) a P slice for which either uni-directional prediction or intra-prediction is used in coding, and (3) a B slice for which one of uni-directional prediction, bi-directional prediction, and intra-prediction is used in coding.

The slice header SH includes collocation information colocated_from_10_flag and collocated_ref_idx that are used to specify temporal motion information, described later, when the slice type is the P slice or the B slice.

The slice header SH may include a PPS identifier (pic_parameter_set_id) that indicates reference to the picture parameter set PPS included in the sequence layer.

(Slice Data Layer)

The slice data layer defines a set of data that is referenced by the image decoding device 31 to decode the processing target slice data SDATA. The slice data SDATA, as illustrated in Fig. 2(d), includes a coding tree unit (CTU). The coding tree unit CTU is an image area of a fixed size (for example, $64 \times 64$ pixels) that constitutes the slice. An image block that corresponds to the coding tree unit CTU is referred to as a coding tree block (CTB).

The slice layer may be regarded in units of slice segment layers into which the slice is further divided, in which case the slice header SH is called a slice segment header and, similarly, the slice data SDATA is called slice segment data. While the slice header and the slice data are written at a part of the description below for simplification purposes, each thereof can be substituted by the slice segment header and the slice segment data. In addition, the slice segment header and the slice segment data can be respectively substituted by the slice header and the slice data.

(Coding Tree Layer)

The coding tree layer, as illustrated in Fig. 2(e), defines a set of data that is referenced by the image decoding device 31 to decode a processing target coding tree unit. The coding tree unit is divided by recursive quadtree subdivision. A tree structure that is obtained by the recursive quadtree subdivision is referred to as a coding tree. The coding tree unit CTU includes a split flag (split_flag). The coding tree unit CTU is further divided into four CTUs in the case where split_flag is one. The coding tree unit CTU is divided into four coding units (CUs) in the case where split_flag is zero. The coding unit CU is a terminal node of the coding tree layer and is not divided anymore in this layer. The coding unit CU is the base unit of a coding/decoding process.

The size of the coding unit CU is one of $64 \times 64$ pixels, $32 \times 32$ pixels, $16 \times 16$ pixels, and $8 \times 8$ pixels in the case where the size of the coding tree unit CTU is $64 \times 64$ pixels. An image block that corresponds to the coding unit CU is referred to as a coding block (CB).

(Coding Unit Layer)

The coding unit layer, as illustrated in Fig. 2(f) defines a set of data that is referenced by the image decoding device 31 to decode a processing target coding unit. Specifically, the coding unit is configured to include a CU header CUH, a prediction tree that is configured of one or more prediction units (PUs), and a transform tree that is configured of one or more transform units (TUs).

The CU header CUH defines, for example, whether the coding unit is a unit for which intra-prediction is used or a unit for which inter-prediction is used.

The coding unit CU is divided into one or a plurality of prediction units PUs in the prediction tree where the position and size of each prediction unit are defined. Broadly speaking, there are two types of division in the prediction tree: intra-prediction and inter-prediction. The intra-prediction is the prediction performed in one picture, and the inter-prediction refers to a prediction process that is performed between different pictures (for example, between display times or between layer images).

In the case of the intra-prediction, there are division methods of $2N \times 2N$ (the same size as the coding unit) and $N \times N$.

In the case of the inter-prediction, there are division methods of $2N \times 2N$ (the same size as the coding unit), $2N \times N$, $2N \times nU$, $2N \times nD$, $N \times 2N$, $nL \times 2N$, $nR \times 2N$, $N \times N$, and the like that are defined by a partitioning mode (part_mode) included in the CU header CUH. The division method $2N \times nU$ indicates that the $2N \times 2N$ coding unit is divided into two areas of $2N \times 0.5N$ and $2N \times 1.5N$ from the top thereof. The division method $2N \times nD$ indicates that the $2N \times 2N$ coding unit is divided into two areas of $2N \times 1.5N$ and $2N \times 0.5N$ from the top thereof. The division method $nL \times 2N$ indicates that the $2N \times 2N$ coding unit is divided into two areas of $0.5N \times 2N$ and $1.5N \times 2N$ from the left thereof. The division method $nR \times 2N$ indicates that the $2N \times 2N$ coding unit is divided into two areas of $1.5N \times 2N$ and $0.5N \times 2N$ from the left thereof. The number of divisions is either one, two, or four. Thus, the number of PUs included in CU is one to four. These PUs will be represented as PU0, PU1, PU2, and PU3 in order.

The coding unit CU is divided into one or a plurality of transform units TUs in the transform tree where the position and size of each transform unit are defined. Types of division by the transform tree include allocating an area, of the same size as the coding unit, as the transform unit and the recursive quadtree subdivision as in the above division of the coding tree block.

Image blocks that correspond to the prediction unit PU and the transform unit TU will be respectively referred to as a prediction block (PB) and a transform block (TB).

(Prediction Parameter)

A predicted image of the prediction unit is derived by prediction parameters that are associated with the prediction unit. Types of prediction parameter include prediction parameters for intra-prediction and prediction parameters for inter-prediction. Hereinafter, prediction parameters for inter-prediction (inter-prediction parameters) will be described. The inter-prediction parameters are configured of prediction list utilization flags predFlagL0 and predFlagL1, reference picture indexes refIdxL0 and refIdxL1, and vectors mvL0 and mvL1. The prediction list utilization flags predFlagL0 and predFlagL1 are flags that respectively indicate whether reference picture lists, each called an L0 list RefPicList0 and an L1 list RefPicList1, are used. The corresponding reference picture list is used in the case where the value of each flag is one. In the case where the expression "flag that indicates whether XX is true" is written in the present specification, the value of the flag being one indicates that XX is true, and the value thereof being zero indicates that XX is false. In a logical complement, a logical product, or the like, one is regarded as true and zero as false (the same applies hereinafter). However, other values can also be used as the values of true and false in actual devices and methods. A prediction method in the case where two reference picture lists are used, that is, in the case of predFlagL0 = 1 and predFlagL1 = 1 is referred to as bi-prediction. A prediction method in the case where one reference picture list is used, that is, in the case or either (predFlagL0, predFlagL1) = (1, 0) or (predFlagL0, predFlagL1) = (0, 1) is referred to as uni-prediction. Information about the prediction list utilization flag can be represented by an inter-prediction flag inter_pred_idc described later.

Syntax elements for deriving the inter-prediction parameters included in the coded data include, for example, the partitioning mode (part_mode), a merge flag merge_flag, a merge index merge_idx, the inter-prediction flag inter_pred_idc, a reference picture index refIdxLX, a prediction vector index mvp_LX_idx, and a difference vector mvdLX.

(Reference Picture List)

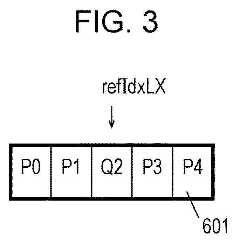

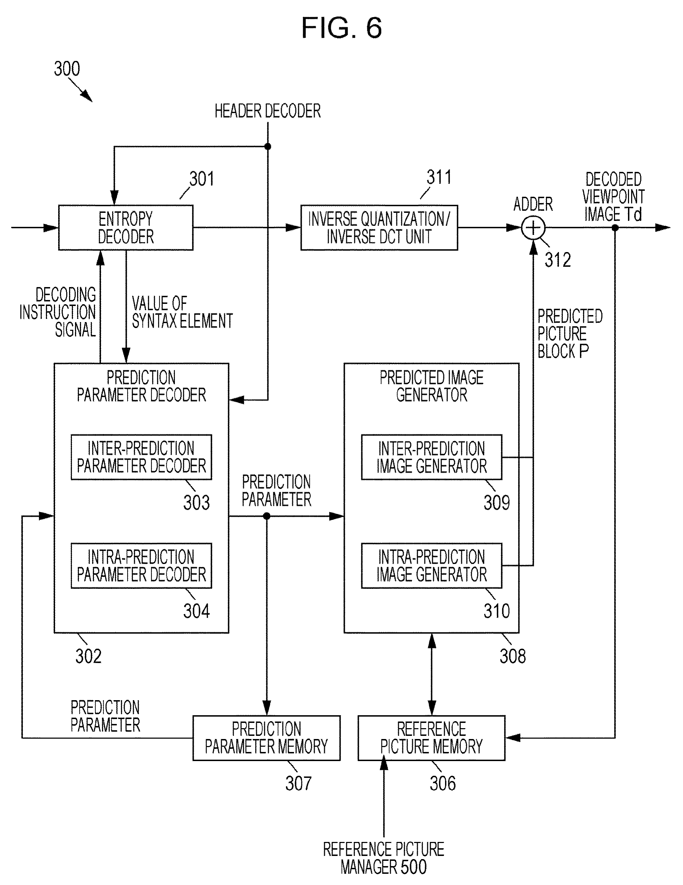

Next, an example of a reference picture list Ref will be described. A reference picture list is an information set that is configured of reference pictures stored on a reference picture memory 306 (Fig. 6) described later. Fig. 3 is a conceptual diagram illustrating an example of the reference picture list. In a reference picture list 601, each of the five rectangles that are linearly arranged from left to right indicates a reference picture. The reference signs P0, P1, Q2, P3, and P4 that are illustrated in order from the left end to the right end are reference signs that indicate each reference picture. The letter P in P1 and the like indicates a layer P, and the letter Q in Q2 indicates a layer Q that is different from the layer P. The suffixes of P and Q indicate a picture order count (POC). A reference picture list is an information set that can be updated in units of slice layers. The reference picture to be referenced among the reference pictures is indicated by the reference picture index refIdxLX that is included in the separate coding unit layer.

(Example of Reference Picture)

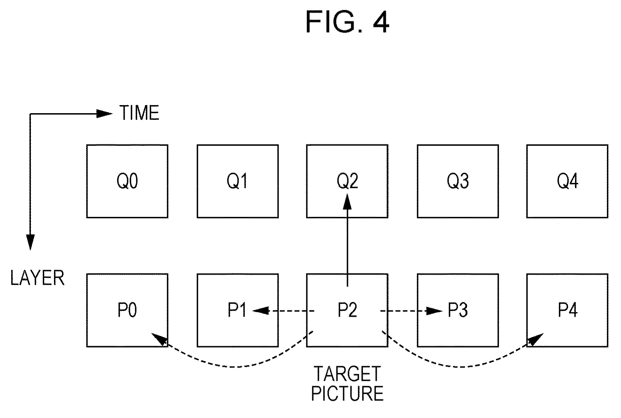

Next, examples of the reference picture used in deriving a vector will be described. Fig. 4 is a conceptual diagram illustrating examples of the reference picture. In Fig. 4, the horizontal axis indicates a display time, and the vertical axis indicates a layer (for example, a moving image of a different viewpoint). Each of the plurality of oblongs illustrated indicates a picture. Of the pictures illustrated, a picture P2 in the lower row is the decoding target picture (target picture). A reference picture Q2 that is indicated by an upward arrow from the target picture is a picture of a different viewpoint at the same display time as the target picture. A reference picture Q0 is used in displacement prediction that is performed with the target picture as a reference. Reference pictures P0 and P1 that are indicated by leftward arrows from the target picture are past pictures from the same viewpoint as the target picture. Reference pictures P3 and P4 that are indicated by rightward arrows from the target picture are future pictures from the same viewpoint as the target picture. The reference pictures P0, P1, P3, and P4 are used in motion prediction that is performed with the target picture as a reference.

(Inter-Prediction Flag and Prediction List Utilization Flag)

The relationship between the inter-prediction flag and the prediction list utilization flags predFlagL0 and predFlagL1 is that both are exchangeable as described below. Thus, either the prediction list utilization flag or the inter-prediction flag may be used as the inter-prediction parameters. In addition, hereinafter, a determination that uses the prediction list utilization flag may be substituted by the inter-prediction flag. Conversely, a determination that uses the inter-prediction flag may be substituted by the prediction list utilization flag.

```
inter-prediction flag = (predFlagF1 << 1) + predFlagL0
predFlagL0 = inter-prediction flag & 1
predFlagL1 = inter-prediction flag >> 1
where >> is a right shift, and << is a left shift.
```

The inter-prediction parameter inter_pred_idc is data that indicates the type and number of reference pictures and has a value of Pred_L0, Pred_L1, or Pred_Bi. The values Pred_L0 and Pred_L1 respectively indicate that the reference pictures stored in the reference picture list RefPicList0 and in the reference picture list RefPicList1 are used and also indicate that one reference picture is used (uni-prediction). Prediction that uses the reference picture list RefPicList0 and prediction that uses the reference picture list RefPicList1 will be respectively called L0 prediction and L1 prediction. The value Pred_Bi indicates that two reference pictures are used (bi-prediction) and also indicates that two reference pictures used are specified in the reference picture list RefPicList0 and in the reference picture list RefPicList1. The prediction vector index mvp_LX_idx is an index that indicates a prediction vector, and the reference picture index refIdxLX is an index that indicates a reference picture stored in the reference picture list. The reference sign LX is a manner of representation that is used in the case where the L0 prediction and the L1 prediction are not distinguished. Substituting LX with L0 or L1 distinguishes parameters for a reference picture specified in the reference picture list RefPicList0 and parameters for a reference picture specified in the reference picture list RefPicList1. For example, refIdxL0 is a reference picture index that is used in the L0 prediction, refIdxL1 is a reference picture index that is used in the L1 prediction, and refIdx (or refIdxLX) is a representation that is used in the case where refIdxL0 and refIdxL1 are not distinguished.

(Motion Vector and Displacement Vector)

There are a motion vector and a displacement vector (parallax vector) in the vector mvLX. A motion vector is a vector that indicates a positional shift between the position of a block in a picture of a layer at a display time and the position of the corresponding block in a picture of the same layer at a different display time (for example, an adjacent discrete time). A displacement vector is a vector that indicates a positional shift between the position of a block in a picture of a layer at a display time and the position of the corresponding block in a picture of a different layer at the same display time. The picture of a different layer may be a picture of a different viewpoint, a picture of a different resolution, or the like. Particularly, a displacement vector that corresponds to a picture of a different viewpoint is called a parallax vector. The motion vector and the displacement vector will be simply called the vector mvLX in the description below unless otherwise distinguished. A prediction vector and a difference vector related to the vector mvLX will be respectively called a prediction vector mvpLX and the difference vector mvdLX. A determination of whether the vector mvLX and the difference vector mvdLX are a motion vector or a displacement vector is performed by using the reference picture index refIdxLX that is associated with the vectors.

(VPS Extension)

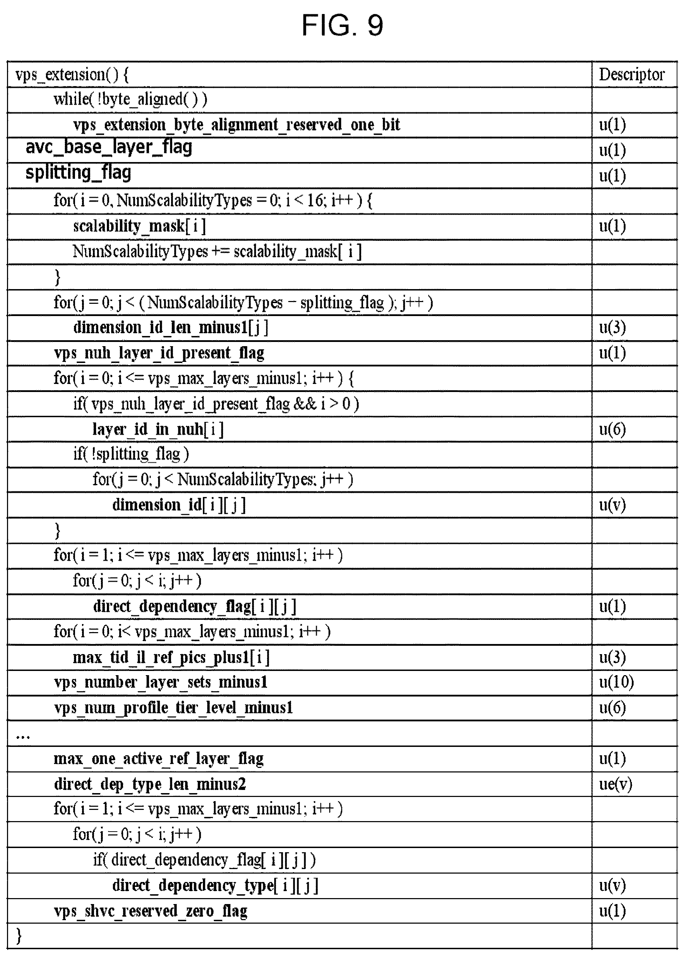

Next, parameters that indicate a reference relationship between layers in the inter-layer prediction will be described. The reference relationship between layers in the inter-layer prediction is specified by a VPS extension (vps_extension) that is a data set extended from VPS. An example of the data structure of the VPS extension is illustrated in Fig. 9. In the data structure, a layer dependency flag direct_dependency_flag[i][j] and a layer dependency type direct_dependency_type[i][j] indicate the reference relationship between layers. Specifically, a target layer i references another layer j in the case where the layer dependency flag direct_dependency_flag[i][j] is one, and the target layer i does not reference the layer j in the case where the layer dependency flag is zero. In addition, in the case where the layer dependency flag is one, the layer dependency type direct_dependency_type[i][j] indicates the layer dependency type of the reference layer j with respect to the target layer i. The layer dependency type can specify either sample prediction only, motion prediction only, or both thereof. The relationship between the value of direct_dependency_type[i][j] and the value of the layer dependency type is illustrated below.
direct_dependency_type[i][j] =0 0 ... sample prediction and motion prediction
direct_dependency_type[i][j] =1 ... motion prediction only
direct_dependency_type[i][j] =2 ... sample prediction only
From the above reference signs, parameters related to the inter-layer prediction are derived in a parameter set decoder described later.

(RPS Information)

The syntax value related to the reference picture set (RPS) (hereinafter, RPS information) includes the following.

1. SPS short-term RPS information: short-term reference picture set information that is included in SPS
2. SPS long-term RP information: long-term reference picture information that is included in SPS
3. SH short-term RPS information: short-term reference picture set information that is included in the slice header
4. SH long-term RP information: long-term reference picture information that is included in the slice header
5. ILRP information: inter-layer reference picture information

(1. SPS Short-Term RPS Information)

The SPS short-term RPS information includes a plurality of pieces of short-term RPS information that may be used by each picture referencing SPS. A short-term RPS is a set of pictures that may be a reference picture (short-term reference picture) specified by a position relative to the target picture (for example, a POC difference with the target picture).

The short-term RPS information includes the number of short-term reference pictures (num_negative_pics) that are earlier than the target picture in display order and the number of short-term reference pictures (num_positive_pics) that are later than the target picture in display order. Hereinafter, a short-term reference picture that is earlier than the target picture in display order will be called a forward short-term reference picture, and a short-term reference picture that is later than the target picture in display order will be called a backward short-term reference picture.

The short-term RPS information also includes, for each forward short-term reference picture, the absolute value of a POC difference with the target picture (delta_poc_s0_minus1[i]) and the presence of the possibility of being used as a reference picture of the target picture (used_by_curr_pic_s0_flag[i]). In addition, for each backward short-term reference picture, the absolute value of a POC difference with the target picture (delta_poc_s1_minus1[i]) and the presence of the possibility of being used as a reference picture of the target picture (used_by_curr_pic_s1_flag[i]) are included in the short-term RPS information.

(2. SPS Long-Term RP Information)

The SPS long-term RP information includes a plurality of pieces of long-term reference picture information that may be used by each picture referencing SPS. A long-term reference picture is a picture that is specified by an absolute position (for example, POC) in the sequence.

The SPS long-term RP information includes information that indicates the presence of a long-term reference picture transmitted by SPS (long_term_ref_pics_present_flag), the number of long-term reference pictures included in SPS (num_long_term_ref_pics_sps), and information about each long-term reference picture. The long-term reference picture information includes the POC of a reference picture (lt_ref_pic_poc_lsb_sps[i]) and the presence of the possibility of being used as a reference picture of the target picture (used_by_curr_pic_lt_sps_flag[i]).

The POC of a reference picture may be the POC value that is associated with a reference picture, or the least significant bit (LSB) of POC, that is, the remainder of dividing POC by a predetermined power of two may be used.

(3. SH Short-Term RPS Information)

The SH short-term RPS information includes a single piece of short-term RPS information that may be used by a picture referencing the slice header.

(4. SH Long-Term RP Information)

The SH long-term RP information includes long-term reference picture information that may be used by a picture referencing the slice header.

(5. ILRP Information)

The ILRP information is information about an inter-layer reference picture that may be referenced in the inter-layer prediction. The ILRP information includes, for example, an inter-layer prediction validity flag (inter_layer_pred_enabled_flag), the number of inter-layer reference pictures (NumActiveRefLayerPics), and a layer identifier that indicates a layer to which each inter-layer reference picture belongs (inter_layer_pred_layer_idc[i]).

An RPS derivation process is divided into a plurality of RPS subset derivation processes. A subset of RPS is defined as follows.

The RPS is divided into the following two subsets according to the type of referenceable picture.

- current picture reference picture set ListCurr: a list of pictures that can be referenced by the target picture
- following picture reference picture set ListFoll: a list of pictures that are not referenced by the target picture but can be referenced by a picture following the target picture in decoding order

The number of pictures included in the current picture reference picture set will be called the number of pictures referenceable by the current picture NumCurrList.

The current picture reference picture set is configured of four partial lists.

- long-term reference picture set RefPicSetLtCurr: pictures referenceable by the current picture that are specified by either the SPS long-term RP information or the SH long-term RP information
- short-term forward reference picture set ListStCurrBefore: pictures referenceable by the current picture that are specified by either the SPS short-term RPS information or the SH short-term RPS information and are earlier than the target picture in display order

- short-term backward reference picture set ListStCurrAfter: pictures referenceable by the current picture that are specified by either the SPS short-term RPS information or the SH short-term RPS information and are earlier than the target picture in display order
- inter-layer reference picture set RefPicSetInterLayer: pictures referenceable by the current picture that are specified by the ILRP information

The following picture reference picture set is configured of two partial lists.

- following picture long-term reference picture set ListLtFoll: pictures referenceable by the following picture that are specified by either the SPS long-term RP information or the SH long-term RP information
- following picture short-term reference picture set ListStFoll: pictures referenceable by the current picture that are specified by either the SPS short-term RPS information or the SH short-term RPS information

(Configuration of Image Decoding Device)

An image decoding device according to the first embodiment accomplishes the effect of reducing the coding amount of actual dependent layer information that is information indicating pictures, of a layer different from a target layer, referenced by a target picture of the target layer. Hereinafter, as the image decoding device according to the first embodiment, the image decoding device 31, an image decoding device 31A2, an image decoding device 31A3, and an image decoding device 31A4 will be described in order.

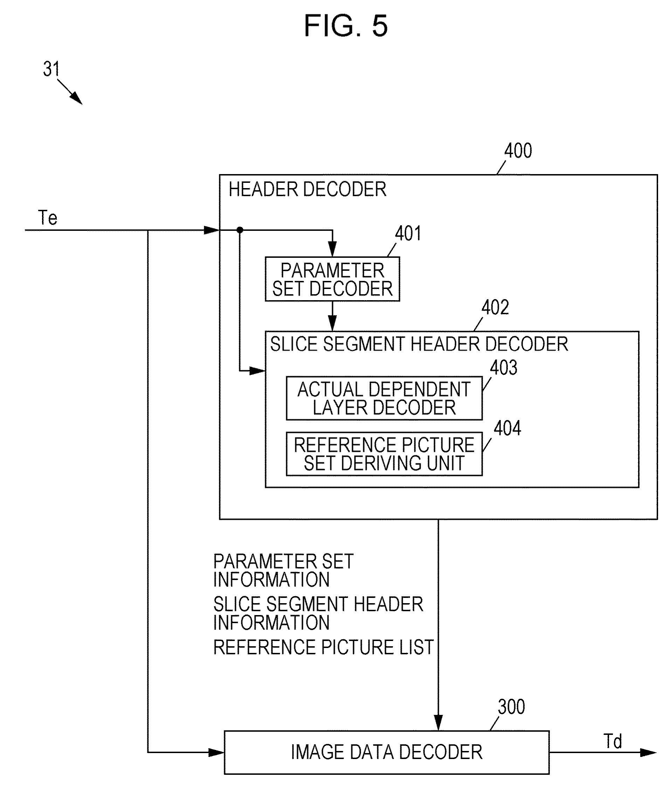

Next, a configuration of the image decoding device 31 according to one embodiment of the present invention will be described. Fig. 5 is a schematic diagram illustrating a configuration of the image decoding device 31 according to the present embodiment. The image decoding device 31 is configured to include an image data decoder 300 and a header decoder 400.

The image data decoder 300 decodes image data from the input coded stream Te on the basis of slice layer coding parameters that are input from the header decoder 400 described later. The decoded image data is output to the outside of the image decoding device as a decoded layer image Td (decoded viewpoint image Td). Details of the image data decoder 300 will be described later.

The header decoder 400 is configured to include a parameter set decoder 401 and a slice segment header decoder 402. The parameter set decoder 401 decodes coded data of a layer higher than the slice layer, such as the video parameter set VPS, the sequence parameter set SPS, and the picture parameter set PPS included in the coded stream Te, according to a predetermined syntax rule and determines parameters that are necessary for decoding each layer.

The parameter set decoder 401 is configured to include a layer dependency information decoder 4011.

The layer dependency information decoder 4011 decodes dependent layer information that is information indicating a layer, different from the target layer, which has the possibility of being referenced by the target layer.

Specifically, the layer dependency flag direct_dependent_flag[i][j] that indicates whether the target layer i is dependent on the reference layer j is decoded, and a dependent layer list RefLayers[][] and the number of dependent layers NumDirectRefLayers[] are derived. The dependent layer list RefLayers[][] is represented by a layer ID list. The dependent layer list RefLayers[nuh_layer_id][] is a list of layers, different from the comparison layer, that are referenced by the target layer specified by nuh_layer_id. The dependent layer list RefLayers[][] is a set (list) of dependent layer identifiers RefLayers[i][j]. Hereinafter, RefLayers may be simply called dependent layers. The dependent layer list RefLayers is decoded by decoding each dependent layer identifier RefLayers[i][j].

The layer dependency information decoder 4011 performs derivation according to the following expression in the case where the layer dependency flag direct_dependency_flag[i][j] of the reference layer j with respect to the target layer i is one.

```
if(direct_dependency_flag[i][j])
        RefLayerId[i][NumDirectRefLayers[i]++] = j
```

A table layer_id_in_nuh[] that transforms the index i indicating a layer to a layer ID may also be used as follows.

```
RefLayerId[layer_id_in_nuh[i]][NumDirectRefLayers[layer_id_i
n_nuh[i]]++] = layer_id_in_nuh[j]
```

The number of dependent layers NumDirectRefLayers[] is incremented in the case where direct_dependency_flag[i][j] is one.

The dependent layer list RefLayers[][] and the number of dependent layers NumDirectRefLayers[] are derived by performing the above process on the reference layer j of all target layers i.

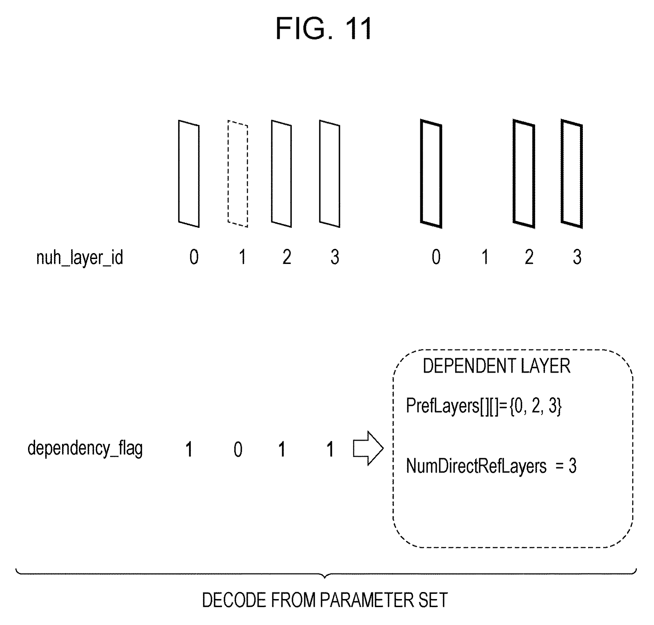

Fig. 11 illustrates an example of a dependent layer. As illustrated in Fig. 11, a list of reference layers of which the layer dependency flag is one, that is, a list PrefLayers[][] = {0, 2, 3} of Layer IDs of a layer 0, a layer 2, and a layer 3 is a dependent layer list.

The layer dependency information decoder 4011 decodes the layer dependency type direct_dependency_type[i][j] for each dependent layer RefLayers[i][j]. A layer dependency type is information that indicates the type of inter-layer prediction for each dependent layer RefLayerId derived from the layer dependency flag and is capable of indicating at least the sample prediction that is used in prediction of a pixel and the motion prediction that is used in prediction of the motion vector. These derived parameters are output to the slice segment header decoder 402.

(Slice Segment Header Decoder)

The slice segment header decoder 402 decodes the slice segment header included in the input coded stream Te on the basis of parameters of a higher layer that are input from the parameter set decoder 401 and derives slice layer coding parameters that are necessary for decoding moving image data of a target slice segment. The slice segment header decoder 402 is configured to include an actual dependent layer decoder 403 and a reference picture set deriving unit 404.

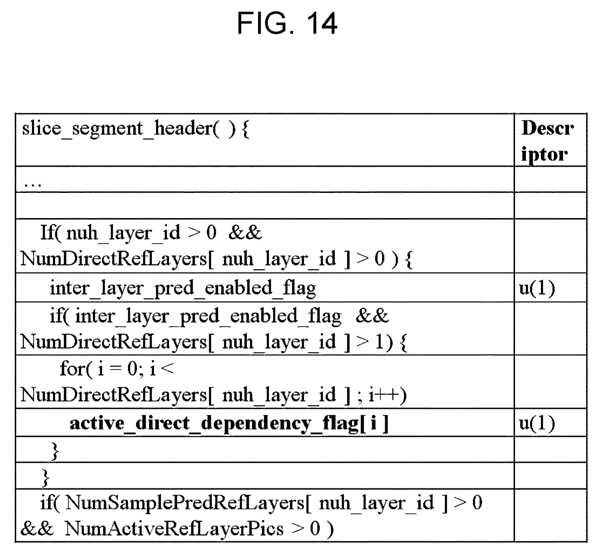

An example of the data structure of the slice segment header decoded by the slice segment header decoder 402 is illustrated in Fig. 14.

The actual dependent layer decoder 403 decodes information about an actual dependent layer (actual dependent layer information) that is actually used in a picture corresponding to a decoding target slice segment header from the dependent layers belonging to the dependent layer list RefLayers. The actual dependent layer is represented by a layer ID list as the dependent layer RefLayers. An actual dependent layer RefPicLayerId is a set (list) of actual dependent layer identifiers RefPicLayerId[i]. Hereinafter, RefPicLayerId may be simply called an actual dependent layer.

The actual dependent layer decoder 403 decodes the inter-layer prediction validity flag inter_layer_pred_enabled_flag that indicates whether inter-layer prediction is performed in the target picture.

The actual dependent layer decoder 403, in the case where inter-layer prediction is valid, that is, in the case of inter_layer_pred_enabled_flag = 1, decodes an actual layer dependency flag active_direct_dependency_flag (inter-layer reference picture flag) that indicates whether pictures of each layer which belongs to the dependent layer list RefLayerId[nuh_layer_id][], which belongs to the layer nuh_layer_id to which the target picture belongs, are referenced by the target picture and decodes an actual dependent layer list RefPicLayerId[] (inter-layer reference picture list). In the case where inter-layer prediction is invalid, that is, in the case of inter_layer_pred_enabled_flag = 0, the actual layer dependency flag active_direct_dependency_flag is not decoded, and the number of actual dependent layers NumActiveRefLayerPics is set to zero.

Specifically, the actual dependent layer decoder 403 decodes the actual layer dependency flag active_direct_dependency_flag[i] from the coded data of Fig. 14

```
for each index i (i = [0 ... NumDirectRefLayers[nuh_layer_id] -
1]) of the number of actual layers
```

NumDirectRefLayers[nuh_layer_id] of the layer nuh_layer_id to which the target picture belongs.

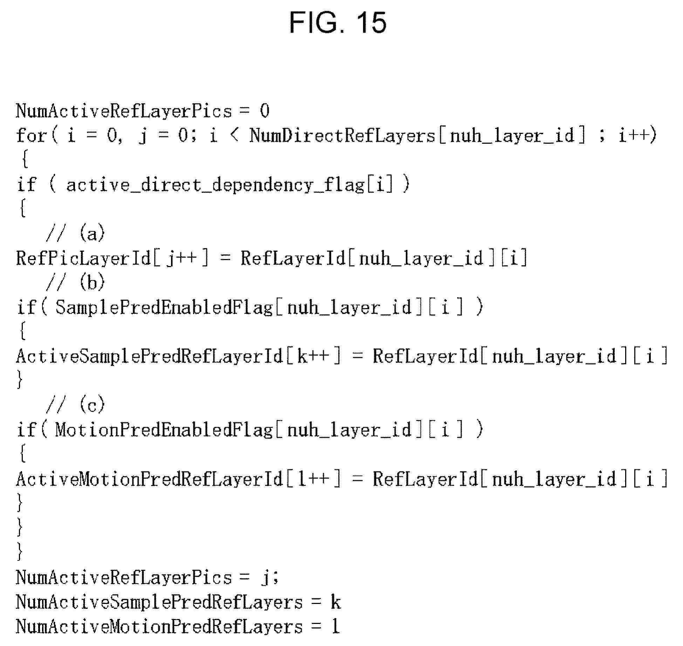

Next, the actual dependent layer decoder 403, as illustrated in Fig. 15, in the case where the decoded actual layer dependency flag active_direct_dependency_flag[i] is one, adds the corresponding dependent layer RefLayerId[nuh_layer_id][i] to the actual dependent layer list RefPicLayerId[] as in the following expression.

```
RefPicLayerId[i] = RefLayerId[nuh_layer_id][i]
```

Furthermore, the actual dependent layer decoder 403 increments the number of actual dependent layers NumActiveRefLayerPics as in the following expression.

NumActiveRefLayerPics++

The actual dependent layer list RefPicLayerId[] and the number of actual dependent layers NumActiveRefLayerPics are decoded by performing the above process on all dependent layers of the layer nuh_layer_id to which the target picture belongs.

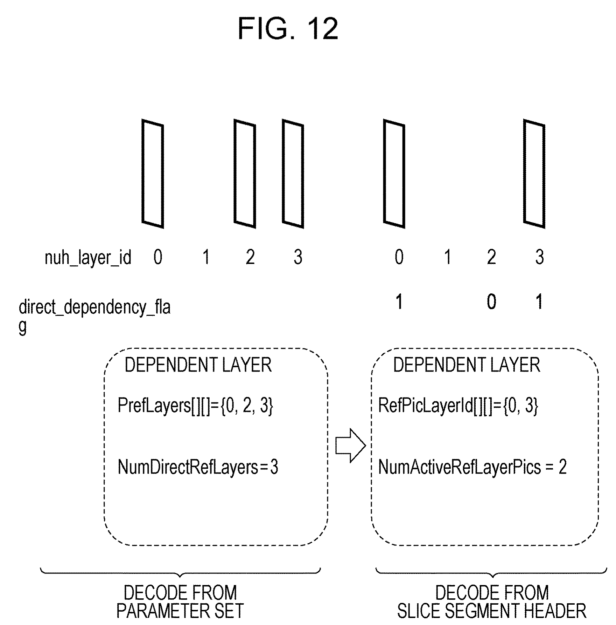

Fig. 12 illustrates an example of an actual dependent layer. As illustrated in Fig. 12, a layer of the dependent layers PrefLayers[][] = {0, 2, 3} for which one is set in the actual dependent layer information (in the present embodiment, the actual dependent layer flag active_direct_dependency_flag) becomes the actual dependent layer RefPicLayerId[]. Fig. 12 illustrates an example in which the actual dependent layer flags of the indexes zero and two that correspond to the layers 0 and 3 are set to one (active_direct_dependency_flag[0] = 1 and active_direct_dependency_flag[2] = 1) and the actual dependent layer flag of the index one that corresponds to the layer 2 (active_direct_dependency_flag[2] = 1). The layer 2, since being not selected by the actual dependent layer information, is not stored in the actual dependent layer. The layer 1 is originally not stored in the dependent layer in the stage where the layer dependency flag is decoded. Thus, the actual dependent layer flag is not decoded for the layer 1.

The actual dependent layer decoder 403 derives an actual sample dependent layer list ActiveSamplePredRefLayerId[] and an actual motion dependent layer list ActiveMotionPredRefLayerId[] that are inter-layer reference pictures referenced in the sample prediction and in the motion prediction.

The actual dependent layer decoder 403 references a sample dependency flag SamplePredEnabledFlag[nuh_layer_id][i] of the reference layer i with respect to the target layer nuh_layer_id. In the case where the dependent layer RefLayerId[nuh_layer_id][i] indicates sample dependency, that is, in the case where SamplePredEnabledFlag[nuh_layer_id][i] is one, the actual dependent layer decoder 403 adds the layer (here, the layer ID and RefLayerId[nuh_layer_id][i]) of the sample dependency to the actual sample predicted layer and increments a count k of the number of actual sample dependent layers NumActiveSamplePredRefLayers by one as in the following expression.

$$\texttt{ActiveSamplePredRefLayerId[k++] =}$$
$$\texttt{RefLayerId[nuh\_layer\_id][i]}$$

The number of actual sample dependent layers NumActiveSamplePredRefLayers is obtained from the count k at the time when processing of all actual dependent layers i ends.

The actual sample dependent layer ActiveSamplePredRefLayerId[] that includes only the reference layers of which the layer dependency type indicates sample dependency is obtained by the above process.

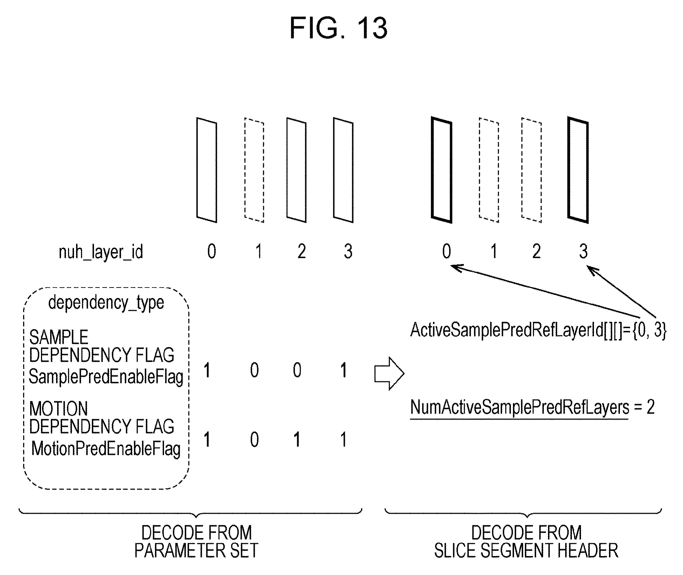

Fig. 13 is a diagram describing the actual sample dependent layer of the present invention. Only the dependent layers (actual dependent layers) of which SamplePredEnableFlag is one are derived as the actual sample dependent layer.

The actual dependent layer decoder 403, in the case where the dependent layer i of the target layer nuh_layer_id indicates only motion dependency, that is, in the case where SamplePredEnabledFlag[nuh layer id][i] is zero and MotionPredEnabledFlag[nuh_layer_id][i] is one, adds the layer (here, the layer ID and RefLayerId[nuh_layer_id][i]) of the motion dependency to the actual motion predicted layer according to the following expression.

$$\texttt{ActiveMotionPredRefLayerId[l++] =}$$
$$\texttt{RefLayerId[nuh\_layer\_id][i]}$$

A count 1 of the number of actual motion dependent layers NumActiveMotionPredRefLayers is incremented by one.

The number of actual motion dependent layers NumActiveMotionPredRefLayers is obtained from the count 1 at the time when processing of all actual dependent layers i ends.

The actual motion dependent layer ActiveMotionPredRefLayerId[] that includes only the dependent layers of which the layer dependency type indicates only motion dependency is obtained by the above process.

The actual dependent layer decoder 403 further decodes an inter-layer sample prediction restriction flag inter_layer_sample_pred_only_flag that indicates whether to restrict the inter-frame prediction and to use only the inter-layer prediction in the case where there is a sample dependent layer related to the target picture, that is, in the case where the number of actual sample dependent layers NumActiveSamplePredRefLayers is greater than zero. The inter-frame prediction performed within one image layer is not used in decoding of the target picture in the case where the inter-layer sample prediction restriction flag is one. The inter-frame prediction performed within one image layer is used if the flag is zero.

The reference picture set deriving unit 404 derives a reference picture set RPS used in a decoding process performed on the target picture on the basis of the derived actual dependent layer information.

Details of an RPS derivation process performed by the reference picture set deriving unit 404 will be described.

The short-term forward reference picture set ListStCurrBefore, the short-term backward reference picture set ListStCurrAfter, the long-term reference picture set RefPicSetLtCurr, the inter-layer reference picture set RefPicSetInterLayer, the following picture short-term reference picture set RefPicSetFoll, and the following picture long-term reference picture set ListLtFoll constituting RPS are generated in the following procedure. In addition, the number of pictures referenceable by the current picture NumPocTotalCurr is derived. Each of the above reference picture sets is configured to be empty before initiation of the following processes.

(S101) A single short-term reference picture set that is used in decoding of the target picture is specified on the basis of the SPS short-term RPS information and the SH short-term RPS information. Specifically, a short-term RPS that is explicitly transmitted by the slice segment header included in the SH short-term RPS information is selected in the case where the value of short_term_ref_pic_set_sps included in the SH short-term RPS information is zero. Otherwise (in the case where the value of short_term_ref_pic_set_sps is one), the short-term RPS that is indicated by short_term_ref_pic_set_idx included in the SH short-term RPS information is selected from a plurality of short-term RPSs included in the SPS short-term RPS information.

(S102) The POC of each reference picture included in the selected short-term RPS is derived. The POC of a reference picture is derived by subtracting the value of "delta_poc_s0_minus1[i] + 1" from the POC of the target picture in the case where the reference picture is a forward short-term reference picture. Meanwhile, in the case where the reference picture is a backward short-term reference picture, the POC of the reference picture is derived by adding the value of "delta_poc_s1_minus1[i] + 1" to the POC of the target picture.

(S103) The forward reference pictures included in the short-term RPS are checked in transmission order, and in the case where the associated value of used_by_curr_pic_s0_flag[i] is one, the corresponding forward reference picture is added to the short-term forward reference picture set RefPicSetCurrBefore. Otherwise (in the case where the value of used_by_curr_pic_s0_flag[i] is zero), the corresponding forward reference picture is added to the following picture short-term reference picture set RefPicSetFoll.

(S104) The backward reference pictures included in the short-term RPS are checked in transmission order, and in the case where the associated value of used_by_curr_pic_s1_flag[i] is one, the corresponding backward reference picture is added to the short-term backward reference picture set RefPicSetCurrAfter. Otherwise (in the case where the value of used_by_curr_pic_s1_flag[i] is zero), the corresponding forward reference picture is added to the following picture short-term reference picture set RefPicSetFoll.

(S105) Long-term reference pictures that are used in decoding of the target picture are specified on the basis of the SPS long-term RP information and the SH long-term RP information. Specifically, num_long_term_sps numbers of reference pictures are selected from the reference pictures included in the SPS long-term RP information and are added to a long-term RPS in order. The selected reference pictures are reference pictures indicated by lt_idx_sps[i]. Next, num_long_term_pics numbers of reference pictures included in the SH long-term RP information are added to the long-term RPS in order.

(S106) The POC of each reference picture included in the long-term RPS is derived. The POC of a long-term reference picture is directly derived from the value of either poc_lst_lt[i] or lt_ref_pic_poc_lsb_sps[i] that is decoded in association with the long-term reference picture.

(S107) The reference pictures included in the long-term RPS are checked in order, and in the case where the associated value of used_by_curr_pic_lt_flag[i] or used_by_curr_pic_lt_sps_flag[i] is one, the corresponding long-term reference picture is added to the long-term reference picture set RefPicSetLtCurr. Otherwise (in the case where the value of used_by_curr_pic_lt_flag[i] or used_by_curr_pic_lt_sps_flag[i] is zero), the corresponding long-term reference picture is added to the following picture long-term reference picture set ListLtFoll.

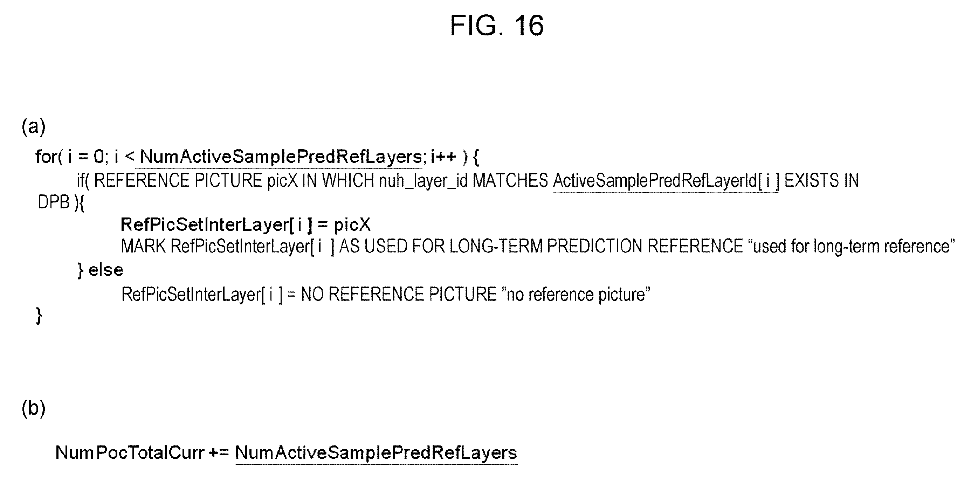

(S108) A reference picture (inter-layer reference picture) is added to the inter-layer reference picture set RefPicSetInterLayer according to the actual dependent layer information (ILRP information) decoded by the actual dependent layer decoder 403. Specifically, as illustrated in Fig. 16(a), when there is a picture picX of the same time as the target picture in a decoded picture buffer and the layer nuh_layer_id of picX is the same as ActiveSamplePredRefPicLayerId[i], picX is set in the inter-layer reference picture set RefPicSetInterLayer[i], and a mark that indicates long-term prediction reference of picX (used for long-term reference) is given to the inter-layer reference picture set RefPicSetInterLayer[i]. In the case where the above condition is not established, a mark that indicates no reference picture is given to RefPicSetInterLayer[i]. The reference picture that is given the mark of a long-term reference picture in the above process is added to the inter-layer reference picture set RefPicSetInterLayer as an inter-layer reference picture.

(S109) The value of the variable NumPocTotalCurr is set to the sum of the number of reference pictures that can be referenced by the current picture. That is, the value of the variable NumPocTotalCurr is set to the sum of the number of each element of the four lists of the short-term forward reference picture set RefPicSetCurrBefore, the short-term backward reference picture set RefPicSetCurrAfter, the long-term reference picture set RefPicSetLtCurr, and the inter-layer reference picture set RefPicSetInterLayer. Addition of the number of elements of the inter-layer reference picture set RefPicSetInterLayer is performed by adding the number of sample dependent layers (number of actual sample dependent layers NumActiveSamplePredRefLayers) as illustrated in Fig. 16(b).

The reference picture set deriving unit 404 builds a reference picture list (RPL). Hereinafter, details of a reference picture list building process will be described. A reference picture list deriving unit generates the reference picture set RPS and the reference picture list RPL on the basis of RPL correction information.

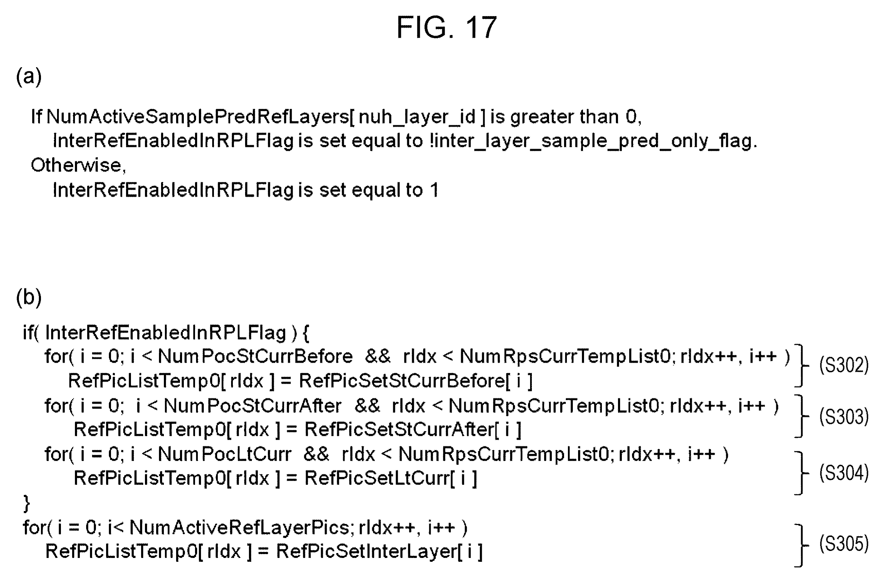

A reference picture list is configured of two lists of an L0 reference list and an L1 reference list. First, a building procedure for the LX reference list (X is either zero or one) will be described. As illustrated in Fig. 17(b), the L0 reference list is built in the procedure illustrated in the following S301 to S307.

(S301) A tentative L0 reference list RefPicListTemp0 is generated and is initialized to an empty list.
(S302) The reference pictures that are included in the short-term forward reference picture set RefPicSetStCurrBefore are added to the tentative LX reference list RefPiListTempX in order in the case where an inter-prediction RPL validity flag InterRefEnabledInRPLFlag is one.
(S303) The reference pictures that are included in the short-term backward reference picture set RefPicSetStCurrAfter are added to the tentative LX reference list in order in the case where the inter-prediction RPL validity flag InterRefEnabledInRPLFlag is one.
(S304) The reference pictures that are included in the long-term reference picture set RefPicSetLtCurr are added to the tentative LX reference list in order in the case where the inter-prediction RPL validity flag InterRefEnabledInRPLFlag is one.
(S305) The reference pictures that are included in the inter-picture layer reference picture set RefPicSetInterLayer are added to the tentative LX reference list in order.
(S306) The tentative LX reference list is corrected in the case where lists_modification_present_flag that is decoded from the coded data is one.
(S307) The tentative LX reference list is configured as the LX reference list.

Next, the L1 reference list is built by the same process. However, in building the L1 reference list, the order of processes of S303 and S302 is reversed. That is, the short-term forward reference picture set RefPicSetStCurrAfter is stored earlier than the short-term forward reference picture set RefPicSetStCurrBefore.

(Configuration of Image Data Decoder)

Next, a configuration of the image data decoder 300 will be described.
Fig. 6 is a schematic diagram illustrating a configuration of the image data decoder 300 according to the present embodiment. The image data decoder 300 is configured to include an entropy decoder 301, a prediction parameter decoder 302, a reference picture memory (reference image storage or frame memory) 306, a prediction parameter memory (prediction parameter storage or frame memory) 307, a predicted image generator 308, an inverse quantization / inverse DCT unit 311, an adder 312, and an inter-layer motion mapper 313.
The prediction parameter decoder 302 is configured to include an inter-prediction parameter decoder 303 and an intra-prediction parameter decoder 304. The predicted image generator 308 is configured to include an inter-prediction image generator 309 and an intra-prediction image generator 310.
The entropy decoder 301 entropy-decodes input coded data to separate and decode each code (syntax element). The entropy decoder uses information decoded by the header decoder 400 to determine the presence of a part of codes. The information used at this time is, for example, slice_type that indicates the coding type of the target slice. The codes separated are prediction information used for generating a predicted image, residual information used for generating a difference image, and the like.
The entropy decoder 301 outputs a part of the separated codes to the prediction parameter decoder 302. The part of the separated codes are, for example, a prediction mode predMode, the partitioning mode part_mode, the merge flag merge_flag, the merge index merge_idx, the inter-prediction flag inter_pred_idc, the reference picture index refIdxLX, the prediction vector index mvp_LX_idx, the difference vector mvdLX, and the like. Control of which code is to be decoded is performed on the basis of an instruction from the prediction parameter decoder 302. The entropy decoder 301 outputs a quantized coefficient to the inverse quantization / inverse DCT unit 311. The quantized coefficient is a coefficient that is obtained by performing discrete cosine transform (DCT) and quantizing a residual signal in a coding process.
The prediction parameter decoder 302 decodes the inter-prediction parameters or the intra-prediction parameters on the basis of the slice layer coding parameters input from the header decoder 400 and the codes input from the entropy decoder 301. Then, the decoded prediction parameters are output to the predicted image generator 308 and are stored on the prediction parameter memory 307.

The inter-prediction parameter decoder 303 references the prediction parameters stored on the prediction parameter memory 307 and outputs the inter-prediction parameters. The inter-prediction parameters are, for example, the prediction list utilization flag predFlagLX, the reference picture index refIdxLX, and the motion vector mvLX.

The intra-prediction parameter decoder 304 references the prediction parameters stored on the prediction parameter memory 307 and decodes the intra-prediction parameters on the basis of the codes input from the entropy decoder 301. The intra-prediction parameters are parameters, for example, an intra-prediction mode IntraPredMode, that are used in the process of predicting a picture block within one picture. The intra-prediction parameter decoder 304 outputs the decoded intra-prediction parameters to the predicted image generator 308 and stores the intra-prediction parameters on the prediction parameter memory 307.

The reference picture memory 306 stores a block of a reference picture (reference picture block) generated by the adder 312, described later, at a predetermined position per picture and block of a decoding target.

The prediction parameter memory 307 stores the prediction parameters at a predetermined position per picture and block of a decoding target. Specifically, the prediction parameter memory 307 stores the inter-prediction parameters decoded by the inter-prediction parameter decoder 303, the intra-prediction parameters decoded by the intra-prediction parameter decoder 304, and the prediction mode predMode separated by the entropy decoder 301. The inter-prediction parameters stored are, for example, the prediction list utilization flag predFlagLX (inter-prediction flag inter_pred_idc), the reference picture index refIdxLX, and the vector mvLX.

The prediction mode predMode that is input from the entropy decoder 301 and the prediction parameters that are input from the prediction parameter decoder 302 are input into the predicted image generator 308. The predicted image generator 308 reads a reference picture from the reference picture memory 306. The predicted image generator 308 uses the input prediction parameters and the read reference picture to generate a predicted picture block P (predicted image) according to the prediction mode indicated by the prediction mode predMode.

The inter-prediction image generator 309, in the case where the prediction mode predMode indicates an inter-prediction mode, uses the inter-prediction parameters input from the inter-prediction parameter decoder 303 and the read reference picture to generate the predicted picture block P by inter-prediction. The predicted picture block P corresponds to PU. A PU, as described above, corresponds to a part of a picture, configured of a plurality of pixels, that is the unit of performing a prediction process, that is, corresponds to a decoding target block on which a prediction process is performed once.

The inter-prediction image generator 309 uses a reference picture list (RPL, RefPicListL0, or RefPicListL1), derived by decoding the slice segment header and input from the reference picture set deriving unit 404, and the reference picture specified by the inter-prediction parameters to generate a predicted image.

That is, a reference picture block, of the reference picture indicated by the reference picture index refIdxLX (RefPicListLX[refIdxLX]) in the reference picture list (RefPicListL0, or RefPicListL1) of which the prediction list utilization flag predFlagLX is one, that is present at the position indicated by the vector mvLX with the decoding target block as a reference is read from the reference picture memory 306. The inter-prediction image generator 309 performs prediction on the read reference picture block to generate the predicted picture block P. The inter-prediction image generator 309 outputs the generated predicted picture block P to the adder 312.

The intra-prediction image generator 310, in the case where the prediction mode predMode indicates an intra-prediction mode, uses the intra-prediction parameters input from the intra-prediction parameter decoder 304 and the read reference picture to perform intra-prediction. Specifically, the intra-prediction image generator 310 reads a reference picture block of the previously decoded blocks of the decoding target picture that is present within a predetermined range from the decoding target block from the reference picture memory 306. The predetermined range is, for example, one of left, upper left, upper, and upper right adjacent blocks in the case where the decoding target block sequentially moves in the so-called raster scan order and is different according to the intra-prediction mode. The raster scan order is the order of movement sequentially from the left end to the right end of each top-to-bottom row of each picture.

The intra-prediction image generator 310 performs prediction on the read reference picture block in the prediction mode indicated by the intra-prediction mode IntraPredMode to generate a predicted picture block. The intra-prediction image generator 310 outputs the generated predicted picture block P to the adder 312.

The inverse quantization / inverse DCT unit 311 inverse-quantizes the quantized coefficient input from the entropy decoder 301 to obtain a DCT coefficient. The inverse quantization / inverse DCT unit 311 performs inverse discrete cosine transform (inverse DCT) on the obtained DCT coefficient and calculates a decoded residual signal. The inverse quantization / inverse DCT unit 311 outputs the calculated decoded residual signal to the adder 312.

The adder 312 adds the predicted picture block P input from the intra-prediction image generator 309 and the intra-prediction image generator 310 to the signal value of the decoded residual signal input from the inverse quantization / inverse DCT unit 311 per pixel to generate a reference picture block. The adder 312 stores the generated reference picture block on the reference picture memory 306 and integrates the generated reference picture block per picture to output the decoded layer image Td to the outside of the adder 312.

(Overview of Image Decoding Device 31)

The image decoding device 31 described thus far is characterized by including layer dependency information decoding means (layer dependency information decoder 4011) for decoding dependent layer information that is information indicating a layer, different from a target layer, having the possibility of being referenced by the target layer; actual dependent layer information decoding means (actual dependent layer decoder 403) for decoding information that indicates pictures, of a layer different from the target layer, referenced by a target picture of the target layer; and reference picture set deriving means (reference picture set deriving unit 404) for generating at least the inter-layer reference picture set RefPicSetInterLayer on the basis of the actual dependent layer information, in which the layer dependency information decoding means decodes the actual layer dependency flag active_direct_dependency_flag that indicates whether a picture of each layer belonging to the dependent layer list is referenced by the target picture.

According to a moving image decoding device configured as above, the effect of simplified processing is accomplished in comparison with the case of decoding the actual dependent layer index because there is no need to calculate the number of bits necessary for the actual dependent layer index. In addition, the effect of reducing a coding amount is accomplished in comparison with the case of decoding the actual dependent layer index.

(Image Decoding Device 31A2)

The image decoding device 31A2 that is a modification example of the image decoding device 31 of the first embodiment is configured to include the image data decoder 300 and a header decoder 400A2. The image data decoder 300 is the same as that of the first embodiment, thus not being described further. Similarly, means that is given the same reference sign as previously described means has the same configuration in the present embodiment, thus not being described further.

The header decoder 400A2 is configured to include a parameter set decoder 401A2 and a slice segment header decoder 402A2. The parameter set decoder 401A2 is configured to include a layer dependency information decoder 4011A2. The slice segment header decoder 402A2 is configured to include an actual dependent layer decoder 403A2 and the reference picture set deriving unit 404.

The actual dependent layer decoder 403A2 decodes the actual layer dependency flag active_direct_dependency_flag that indicates whether a picture of each layer belonging to the dependent layer list RefLayerId[nuh_layer_id][], which belongs to the layer nuh_layer_id to which the target picture belongs, is referenced by the target picture and decodes the actual dependent layer list RefPicLayerId[].

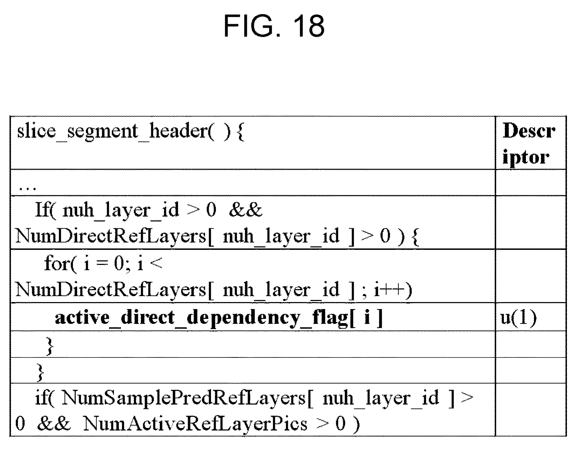

Specifically, the actual dependent layer decoder 403A2 decodes the actual layer dependency flag active_direct_dependency_flag[i] for each index i of the number of dependent layers NumDirectRefLayers[nuh_layer_id] of the layer nuh_layer_id to which the target picture belongs from the coded data of Fig. 18.

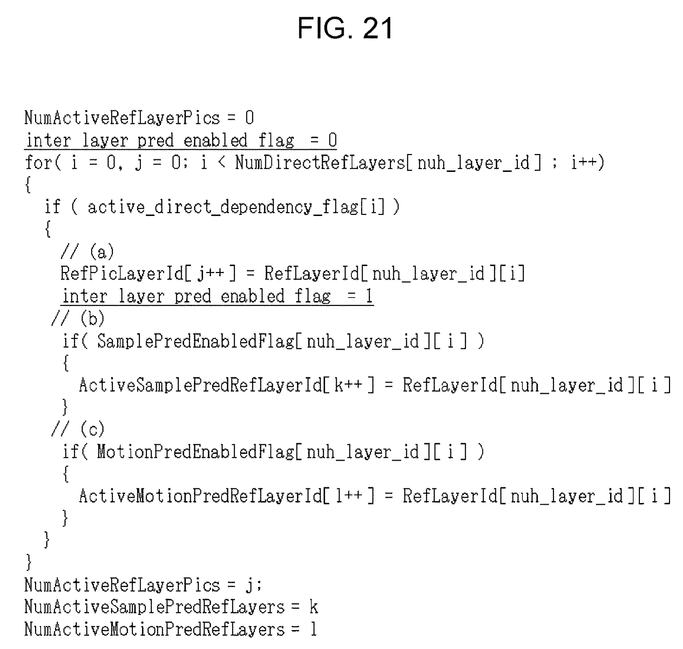

Next, the actual dependent layer decoder 403A2, as illustrated in Fig. 21, in the case where the decoded actual layer dependency flag active_direct_dependency_flag[i] is one, adds the corresponding dependent layer RefLayerId[nuh_layer_id][i] to the actual dependent layer list RefPicLayerId[] as in the following expression and increments the number of actual dependent layers NumActiveRefLayerPics as in the following expression.

```
RefPicLayerId[i] = RefLayerId[nuh_layer_id][i]
NumActiveRefLayerPics++
```

Furthermore, the actual dependent layer decoder 403A2 sets the inter-layer prediction validity flag inter_layer_pred_enabled_flag to one in the case where the actual layer dependency flag active_direct_dependency_flag[i] is one.

The actual dependent layer list RefPicLayerId[] and the number of actual dependent layers NumActiveRefLayerPics are decoded by performing the above process on all dependent layers of the layer nuh_layer_id to which the target picture belongs.

The actual dependent layer decoder 403A2 derives the actual sample dependent layer list ActiveSamplePredRefLayerId[] and the actual motion dependent layer list ActiveMotionPredRefLayerId[] that are inter-layer reference pictures referenced in the sample prediction and in the motion prediction. A derivation process of the actual dependent layer decoder 403A2 is the same as that of the actual dependent layer decoder 403, thus not being described further.

The image decoding device 31A2 described thus far is different from the image decoding device 31, characterized in that derivation is performed without coding the inter-layer prediction validity flag inter_layer_pred_enabled_flag by using the actual layer dependency flag active_direct_dependency_flag that indicates whether a picture of each layer belonging to the dependent layer list is referenced by the target picture.

The image decoding device 31A2 described thus far is characterized by further including inter-layer prediction validity flag deriving means (actual dependent layer decoder 403A2) for deriving the inter-layer prediction validity flag that indicates whether the target picture references a picture of a layer different from a layer to which the target picture target belongs, in which the actual inter-layer prediction flag deriving means (actual dependent layer decoder 403A2) sets the inter-layer prediction validity flag to one in the case where at least one of the actual layer dependency flags active_direct_dependency_flag[] is one and otherwise to zero.

According to a moving image decoding device configured as above, the effect of reducing a coding amount is accomplished in comparison with the case where the inter-layer prediction validity flag inter_layer_pred_enabled_flag is explicitly decoded.

(Image Decoding Device 31A3)

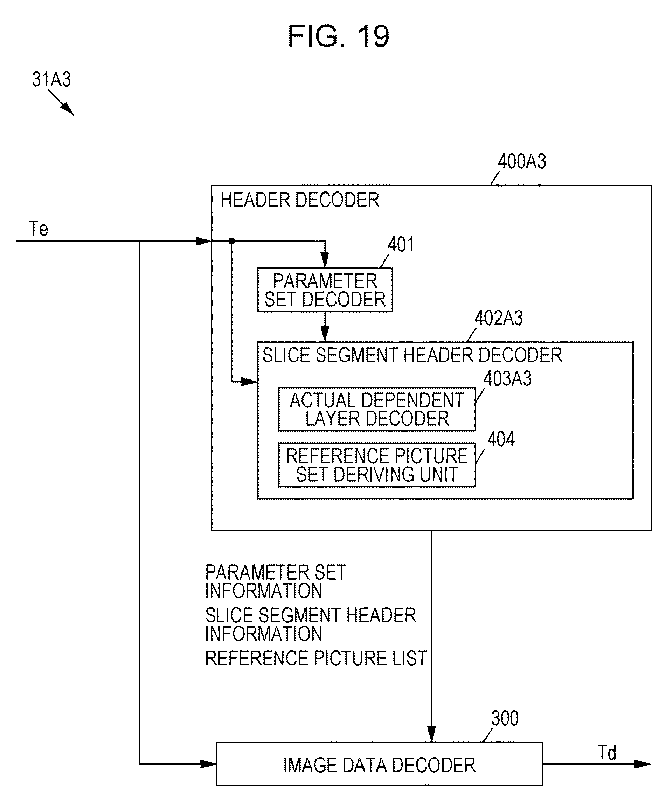

Fig. 19 is a schematic diagram illustrating a configuration of the image decoding device 31A3 according to the present embodiment.

The image decoding device 31A3 that is one configuration of the first embodiment is configured to include the image data decoder 300 and a header decoder 400A3. The image data decoder 300 is the same as that of the first embodiment, thus not being described further. Similarly, means that is given the same reference sign as previously described means has the same configuration in the present embodiment, thus not being described further.

The header decoder 400A3 is configured to include the parameter set decoder 401 and a slice segment header decoder 402A3. The parameter set decoder 401A3 is configured to include the layer dependency information decoder 4011. The slice segment header decoder 402A3 is configured to include an actual dependent layer decoder 403A3 and the reference picture set deriving unit 404.

The actual dependent layer decoder 403A3 decodes syntax related to the actual dependent layer of the target slice segment as follows in the case of a non-base layer (a layer of the layer identifier nuh_layer_id > 0) of which the number of dependent layers NumDirectRefLayers[nuh_layer_id] is greater than zero.

The actual dependent layer decoder 403A3 decodes the inter-layer prediction validity flag inter_layer_pred_enabled_flag that indicates whether inter-layer prediction is performed. Furthermore, the syntax num_inter_layer_ref_pics_minus1 that is related to the number of actual dependent layers is decoded, and the number of actual dependent layers NumActiveRefLayerPics is decoded according to the following expression in the case where inter-layer prediction is valid, that is, inter_layer_pred_enabled_flag = 1, and the number of dependent layers NumDirectRefLayers[nuh_layer_id] is greater than one and the maximum number of actual dependent layers max_active_ref_layers are greater than one.

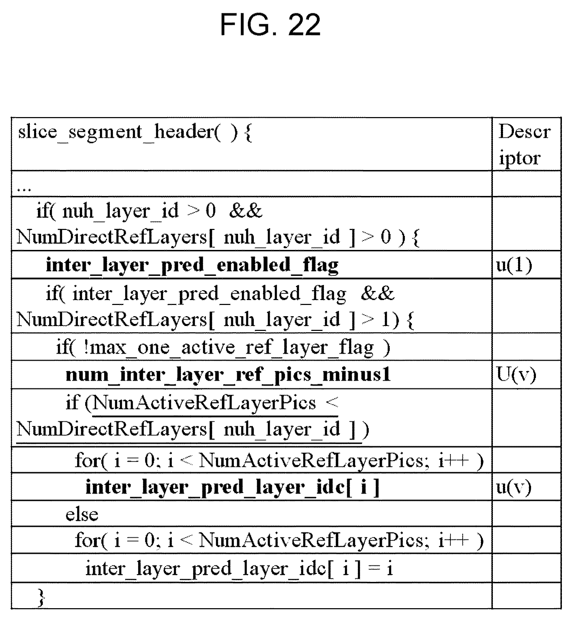

NumActiveRefLayerPics = num_inter_layer_ref_pics_minus1 + 1 The actual dependent layer decoder 403A3, as illustrated in Fig. 22, decodes an inter-layer dependency identifier inter_layer_pred_layer_idc[i] that indicates a dependent layer of the inter-layer prediction from the coded data in the case where the number of actual dependent layers NumActiveRefLayerPics that indicates the number of pictures, of a layer different from the target layer, referenced by the target picture is different from the number of dependent layers NumDirectRefLayers[nuh_layer_id] (in the case where NumActiveRefLayerPics is less than NumDirectRefLayers[nuh_layer_id]).

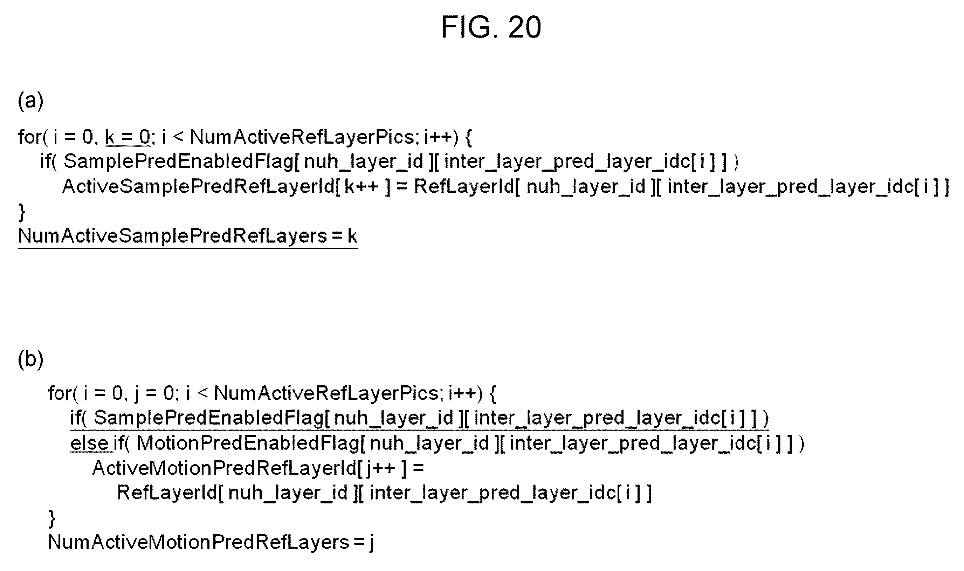

The actual dependent layer decoder 403A3 derives, as the actual dependent layer information related to the inter-layer prediction in the target slice segment, a reference picture layer identifier RefPicLayerId[] that is layer identifiable information for each actual dependent layer picture, the number of actual sample dependent layers NumActiveSamplePredRefLayers and the number of actual motion dependent layers NumActiveMotionPredRefLayers that indicate the number of layers of an actual reference layer picture which are actually referenced in the sample prediction and in the motion prediction, and an actual sample dependent layer identifier ActiveSamplePredRefLayerId[] and an actual motion dependent layer identifier ActiveMotionPredRefLayerId[] that are dependent layer identifiable information corresponding to the number of actual dependent layers in each of the sample prediction and the motion prediction. A derivation procedure for each of these parameters is illustrated in Fig. 20(a).

The actual dependent layer decoder 403A3, as illustrated in Fig. 20(a), performs the following process on each actual dependent layer i that has a value of zero to the number of actual dependent layers NumActiveRefLayersPics - 1. First, the dependent layer identifier inter_layer_pred_layer_idc[i] is specified from the actual dependent layer i.

The actual dependent layer decoder 403A3 references the sample dependency flag SamplePredEnabledFlag[][] that corresponds to each actual dependent layer i and is derived by the parameter set decoder 401. In the case where the reference layer inter_layer_pred_layer_idc[i] with respect to the target layer nuh_layer_id indicates sample dependency, that is, in the case where SamplePredEnabledFlag[nuh_layer_id][inter_layer_pred_layer_idc[i ]] is one, the actual dependent layer decoder 403A3 adds the layer of the sample dependency to the actual sample predicted layer and increments the count k of the number of actual sample dependent layers NumActiveSamplePredRefLayers by one according to the following expression.

```
ActiveSamplePredRefLayerId[k++] =
RefLayerId[nuh_layer_id][inter_layer_pred_layer_idc[i]]
```

The number of actual sample dependent layers NumActiveSamplePredRefLayers is obtained as the count k at the time when processing of all actual dependent layers i ends.

The actual sample dependent layer ActiveSamplePredRefLayerId[] that includes only the dependent layers of which the layer dependency type indicates sample dependency is obtained by the above process.

The ActiveSamplePredRefLayerId[] is called actual dependent layer information related to the sample prediction.

The actual dependent layer decoder 403A3, as illustrated in Fig. 20(b), performs the following process on each actual dependent layer i that has a value of zero to the number of actual dependent layers NumActiveRefLayersPics. First, the dependent layer identifier inter_layer_pred_layer_idc[i] is specified from the actual dependent layer i. The sample dependency flag SamplePredEnabledFlag[][] that is derived by the parameter set decoder 401 is referenced. In the case where the reference layer inter_layer_pred_layer_idc[i] with respect to the target layer nuh_layer_id indicates only motion dependency, that is, in the case where SamplePredEnabledFlag[nuh_layer_id][inter_layer_pred_layer_idc[i ]] is zero and MotionPredEnabledFlag[nuh_layer_id][inter_layer_pred_layer_idc[i ]] is one, the layer of the motion dependency is added to the actual motion predicted layer, and a count j of the number of actual motion dependent layers NumActiveMotionPredRefLayers is incremented by one according to the following expression.

```
ActiveMotionPredRefLayerId[k++] =
RefLayerId[nuh_layer_id][inter_layer_pred_layer_idc[i]]
```

The number of actual motion dependent layers NumActiveMotionPredRefLayers is obtained as the count j at the time when processing of all actual dependent layers i ends.

The actual motion dependent layer ActiveMotionPredRefLayerId[] that includes only the dependent layers of which the layer dependency type indicates only motion dependency is obtained by the above process.

The image decoding device 31A3 configured as above is a moving image decoding device that is characterized by including layer dependency information decoding means (parameter set decoder 401A3) for decoding dependent layer information that is information indicating a layer, different from a target layer, having the possibility of being referenced by the target layer; actual dependent layer information decoding means (actual dependent layer decoder 403A3) for decoding information that indicates pictures, of a layer different from the target layer, referenced by a target picture of the target layer; and reference picture set deriving means (reference picture set deriving unit 404) for generating at least the inter-layer reference picture set on the basis of the actual dependent layer dependency information, in which the actual dependent layer information decoding means decodes the number of actual dependent layers NumActiveRefLayerPics that indicates the number of pictures, of a layer different from the target layer, referenced by the target picture and derives the actual dependent layer list RefLayerPics by decoding the actual dependent layer index inter_layer_pred_layer_idc[i] that indicates an element of the dependent layer list from the coded data in the case where the number of actual dependent layers NumActiveRefLayerPics is different from the number of dependent layers NumDirectRefLayers[nuh_layer_id] or derives the actual dependent layer list RefLayerPics from the dependent layer list RefLayerId in the case where the number of actual dependent layers is the same as the number of dependent layers.

According to a moving image decoding device configured as above, the effect of reducing a coding amount is accomplished because there is no need to decode the actual dependent layer index in the case where the number of actual dependent layers is the same as the number of dependent layers.

(Image Decoding Device 31A4)

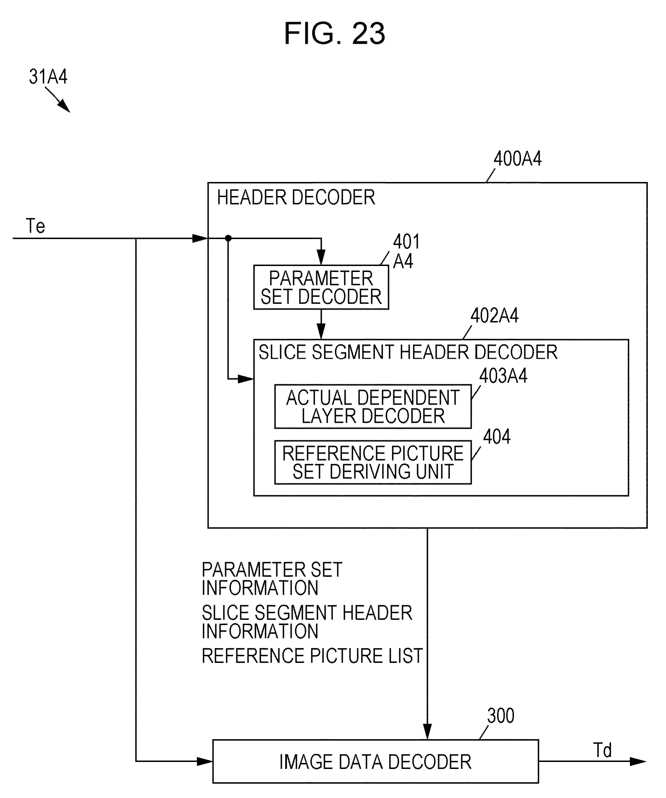

Fig. 23 is a schematic diagram illustrating a configuration of the image decoding device 31A4 according to the present embodiment. The image decoding device 31A4 that is one configuration of the first embodiment is configured to include the image data decoder 300 and a header decoder 400A4. The image data decoder 300 is the same as that of the first embodiment, thus not being described further. Similarly, means that is given the same reference sign as previously described means has the same configuration in the present embodiment, thus not being described further.

The header decoder 400A4 is configured to include a parameter set decoder 401A4 and a slice segment header decoder 402A4.

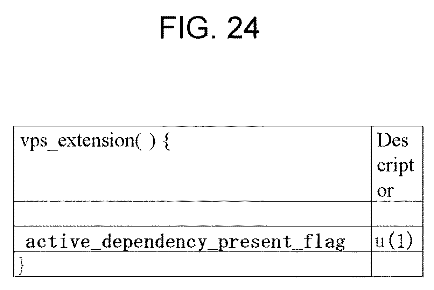

The parameter set decoder 401A4 includes the layer dependency information decoder 4011 and an actual dependency flag existence flag decoder 4012. Fig. 24 illustrates an example of the data structure of a parameter set decoded by the parameter set decoder 401A4. The actual dependency flag existence flag decoder 4012 decodes an actual dependency flag existence flag active_dependency_present_flag illustrated in Fig. 24. The actual dependency flag existence flag active_dependency_present_flag may be decoded from SPS or PPS in addition to VPS.

The slice segment header decoder 402A4 is configured to include an actual dependent layer decoder 403A4 and the reference picture set deriving unit 404.

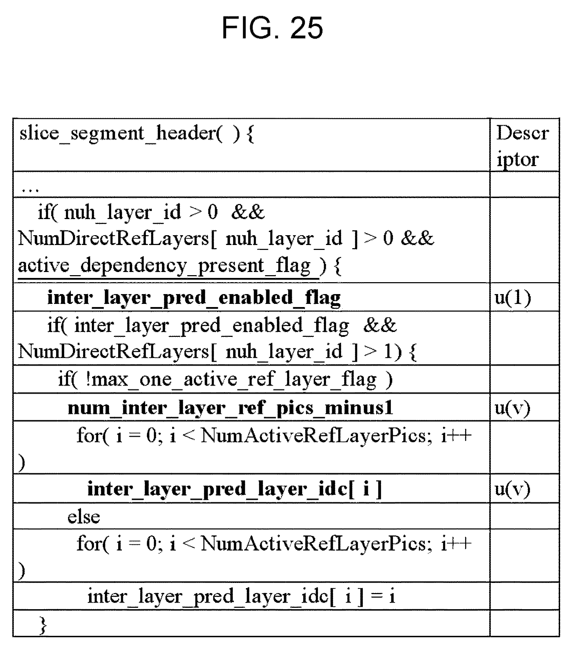

Fig. 25 illustrates an example of the data structure of the slice segment header decoded by the slice segment header decoder 402A4 of one embodiment of the present invention.

The actual dependent layer decoder 403A4 decodes the actual dependent layer information from the coded data in the case where the actual dependency flag existence flag active_dependency_present_flag is one.

A decoding process of the actual dependent layer decoder 403A4 is the same as that of the actual dependent layer decoder 403A3, thus not being described further.

The actual dependent layer decoder 403A4 derives the actual dependent layer information as follows in the case where the actual dependency flag existence flag active_dependency_present_flag is zero.

The actual dependent layer decoder 403A4, first, sets the inter-layer prediction validity flag inter_layer_pred_enable_flag to one in the case where the number of dependent layers NumDirectRefLayers[nuh_layer_id] is one and otherwise to zero. Next, the actual dependent layer decoder 403A4 sets the number of actual dependent layers NumActiveRefLayerPics to the number of dependent layers NumDirectRefLayers[nuh_layer_id] in the case where the inter-layer prediction validity flag inter_layer_pred_enable_flag is one.

```
NumActiveRefLayerPics = NumDirectRefLayers[nuh_layer_id]
```

Furthermore, the actual dependent layer decoder 403A4 derives the actual dependent layer RefPicLayerId[] as the dependent layer RefLayerId[nuh_layer_id][i] as in the following expression.

```
for(i = 0; i < NumActiveRefLayerPics; i++)
        RefPicLayerId[i] = RefLayerId[nuh_layer_id][i]
```

Instead of using this expression, the actual dependent layer decoder 403A4 may derive the dependent layer identifier inter_layer_pred_layer_idc[i] and perform the same process as the actual dependent layer decoder 403A3 to derive the actual dependent layer RefPicLayerId[] from the dependent layer identifier inter_layer_pred_layer_idc[i].

```
for(i = 0; i < NumActiveRefLayerPics; i++)
        inter_layer_pred_layer_idc[i] = i
```

The actual dependent layer decoder 403A4 further derives, as the actual dependent layer information related to the inter-layer prediction in the target slice segment, the reference picture layer identifier RefPicLayerId[], the number of actual sample dependent layers NumActiveSamplePredRefLayers, the number of actual motion dependent layers NumActiveMotionPredRefLayers, the actual sample dependent layer identifier ActiveSamplePredRefLayerId[], and the actual motion dependent layer identifier ActiveMotionPredRefLayerId[]. A derivation method for these parameters is the same as that of the actual dependent layer decoder 403A3, thus not being described further in detail.

The image decoding device 31A4 configured as above is a moving image decoding device that is characterized by including layer dependency information decoding means (parameter set decoder 401A4) for decoding dependent layer information that is information indicating a layer, different from a target layer, having the possibility of being referenced by the target layer; actual dependency flag existence flag decoding means for indicating whether to decode actual dependent layer information in the slice segment header; actual dependent layer information decoding means (actual dependent layer decoder 403A4) for decoding information that indicates pictures, of a layer different from the target layer, referenced by a target picture of the target layer; and reference picture set deriving means (reference picture set deriving unit 404) for generating at least the inter-layer reference picture set on the basis of actual layer dependency information, in which the actual dependent layer information decoding means decodes the actual dependent layer list RefLayerPics from the coded data in the case where the actual dependency flag existence flag decoded by the actual dependency flag existence flag decoding means is one or derives the actual dependent layer list RefLayerPics from the dependent layer list RefLayerId in the case where the actual dependency flag existence flag is other than one.

According to a moving image decoding device configured as above, the effect of reducing a coding amount is accomplished because there is no need to decode the actual dependent layer index in the case where the actual dependency flag existence flag is zero.

(Second Embodiment)

Next, a second embodiment of the image decoding device related to the present invention will be described. An image decoding device according to the second embodiment can restrict the maximum number of actual layers, thereby accomplishing the effect of reducing complexity. In addition, according to a moving image decoding device configured as such, the effect of reducing a coding amount is accomplished because the actual layer dependency flag is not decoded a number of times greater than or equal to the maximum number of actual layers.

Hereinafter, an image decoding device 31B1 and an image decoding device 31B2 will be described in order as the image decoding device according to the second embodiment.

(Image Decoding Device 31B1)

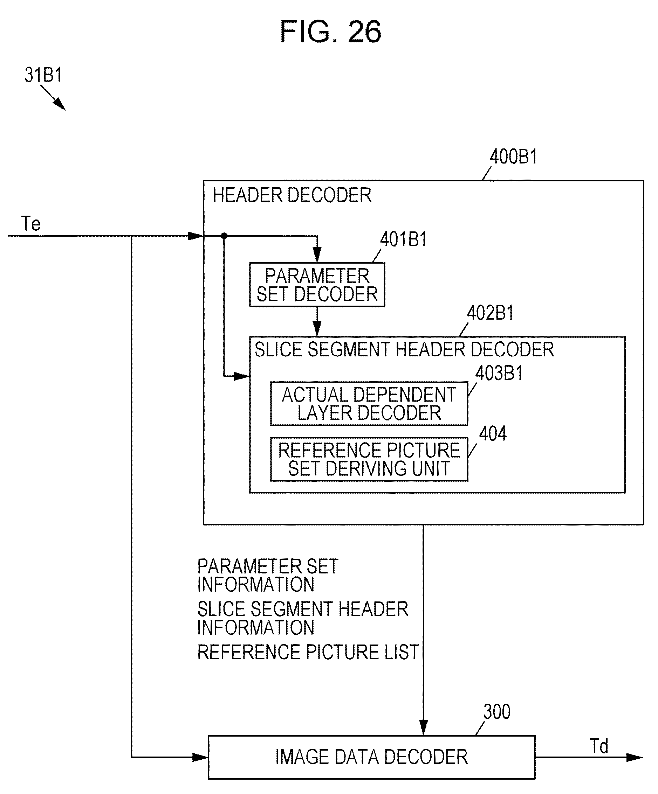

Fig. 26 is a schematic diagram illustrating a configuration of the image decoding device 31B1 according to the present embodiment. The image decoding device 31B1 that is one configuration of the second embodiment of the present invention is configured to include the image data decoder 300 and a header decoder 400B1.

The image data decoder 300 is the same as that of the first embodiment, thus not being described further. Similarly, means that is given the same reference sign as previously described means has the same configuration in the present embodiment, thus not being described further.

The header decoder 400B1 is configured to include a parameter set decoder 401B1 and a slice segment header decoder 402B1. The parameter set decoder 401B1 is configured to include the layer dependency information decoder 4011 and an maximum actual layer number decoder 4013.

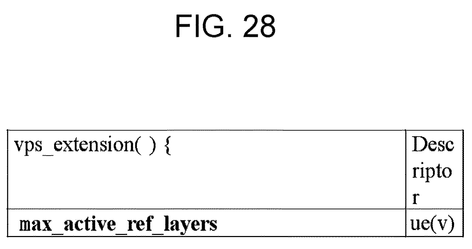

Fig. 28 illustrates an example of the data structure of a parameter set decoded by the parameter set decoder 401B1.

The maximum actual layer number decoder 4013 decodes the maximum number of actual dependent layers max_active_ref_layers that is the maximum number of pictures of a layer different from the target layer from the coded data of the parameter set as illustrated in Fig. 28.

The slice segment header decoder 402B1 is configured to include an actual dependent layer decoder 403B1.

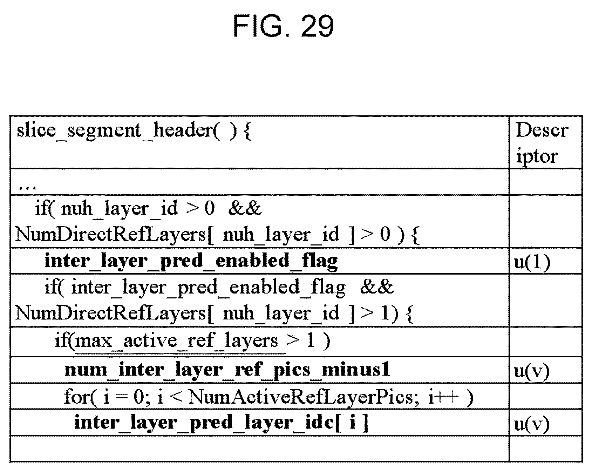

Fig. 29 illustrates an example of the data structure of the slice segment header decoded by the slice segment header decoder 402B1.

The actual dependent layer decoder 403B1 decodes syntax related to the actual dependent layer of the target slice segment as follows in the case of a non-base layer (a layer of the layer identifier nuh_layer_id > 0) of which the number of dependent layers NumDirectRefLayers[nuh_layer_id] is greater than zero.

The actual dependent layer decoder 403B1 decodes the inter-layer prediction validity flag inter_layer_pred_enabled_flag that indicates whether inter-layer prediction is performed. Furthermore, the syntax num_inter_layer_ref_pics_minus1 that is related to the number of actual dependent layers is decoded, and the number of actual dependent layers NumActiveRefLayerPics is decoded according to the following expression in the case where inter-layer prediction is valid, that is, inter_layer_pred_enabled_flag = 1, and the number of dependent layers NumDirectRefLayers[nuh_layer_id] is greater than one and the maximum number of actual dependent layers max_active_ref_layers are greater than one.

$$\mathtt{NumActiveRefLayerPics = num\_inter\_layer\_ref\_pics\_minus1 + 1}$$

The actual dependent layer decoder 403B1 decodes the inter-layer dependency identifier inter_layer_pred_layer_idc[i] that indicates a dependent layer of the inter-layer prediction in the case where the number of actual dependent layers NumActiveRefLayerPics is greater than or equal to one. However, in the case where the target layer is the base layer (nuh_layer_id == 0), where there exists no reference layer (NumDirectRefLayers[nuh_layer_id] == 0), or where inter-layer prediction is not valid (inter_layer_pred_enabled_flag == 0), inter_layer_pred_layer_idc[i] is not decoded because the number of actual dependent layer pictures is zero.

The actual dependent layer decoder 403B1 further derives, as the actual dependent layer information related to the inter-layer prediction in the target slice segment, the reference picture layer identifier RefPicLayerId[], the number of actual sample dependent layers NumActiveSamplePredRefLayers, the number of actual motion dependent layers NumActiveMotionPredRefLayers, the actual sample dependent layer identifier ActiveSamplePredRefLayerId[], and the actual motion dependent layer identifier ActiveMotionPredRefLayerId[]. A derivation method for these parameters is the same as that of the actual dependent layer decoder 403A3, thus not being described further in detail.

The image decoding device 31B1 described thus far is characterized by including layer dependency information decoding means (layer dependency information decoder 4011) for decoding dependent layer information that is information indicating a layer, different from a target layer, having the possibility of being referenced by the target layer; maximum actual layer number decoding means (maximum actual layer number decoder 4013) for decoding the maximum number of actual dependent layers max_active_ref_layers that is the maximum number of pictures, of a layer different from the target layer, referenced by a target picture of the target layer; actual dependent layer information decoding means (actual dependent layer decoder 403B1) for decoding information that indicates a picture of a layer, different from the target layer, referenced by a target picture of the target layer; and reference picture set deriving means (reference picture set deriving unit 404) for generating at least the inter-layer reference picture set on the basis of actual dependent layer information, in which the actual dependent layer information decoding means decodes the syntax num_inter_layer_ref_pics_minus1 related to the number of actual dependent layers in the case where the maximum number of actual layers max_active_ref_layers is greater than one or decodes the dependent layer identifier inter_layer_pred_layer_idc[] in the case where the number of actual dependent layers is greater than or equal to one.

According to the moving image decoding device 31B1 configured as above, the number of actual dependent layers can be restricted even in the case where the maximum number of actual layers is other than one. Since the number of reference pictures between layers that are layers, other than the layer to which the target picture belongs, actually used by the target layer is restricted, the effect of reducing complexity is accomplished. In addition, according to a moving image decoding device configured as such, the effect of reducing a coding amount is accomplished because the actual layer dependency flag is not decoded a number of times greater than or equal to the maximum number of actual layers.

(Image Decoding Device 31B2)

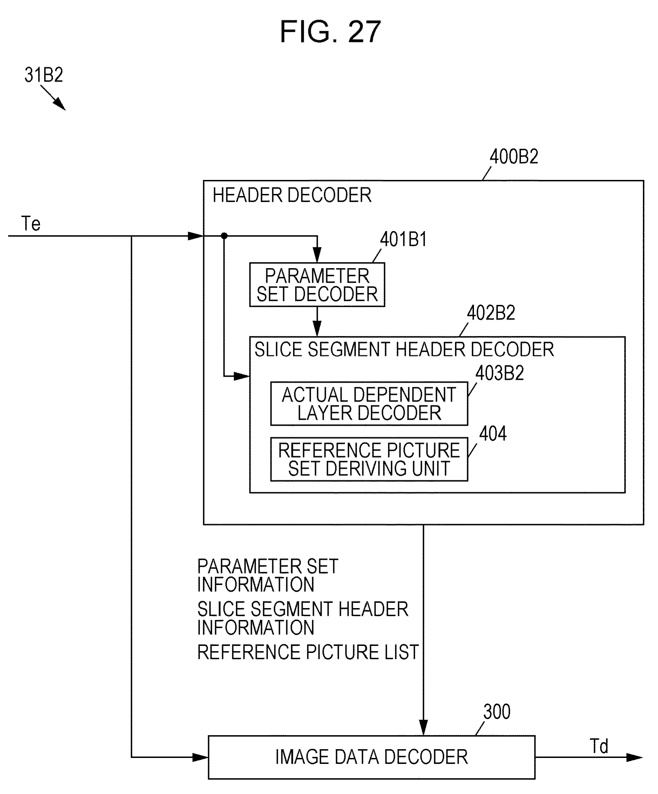

Fig. 27 is a schematic diagram illustrating a configuration of the image decoding device 31B2 according to the present embodiment. The image decoding device 31B2 that is one configuration of the second embodiment of the present invention is configured to include the image data decoder 300 and a header decoder 400B2. The image data decoder 300 is the same as that of the first embodiment, thus not being described further. Similarly, means that is given the same reference sign as previously described means has the same configuration in the present embodiment, thus not being described further.

The header decoder 400B2 is configured to include the parameter set decoder 401B1 and a slice segment header decoder 402B2. The parameter set decoder 401B1 is configured to include the layer dependency information decoder 4011 and the maximum actual layer number decoder 4013.

The maximum actual layer number decoder 4013, as in the description of the image decoding device 31B1, decodes the maximum number of actual dependent layers max_active_ref_layers that is the maximum number of pictures of a layer different from the target layer from the coded data of the parameter set as illustrated in Fig. 28.

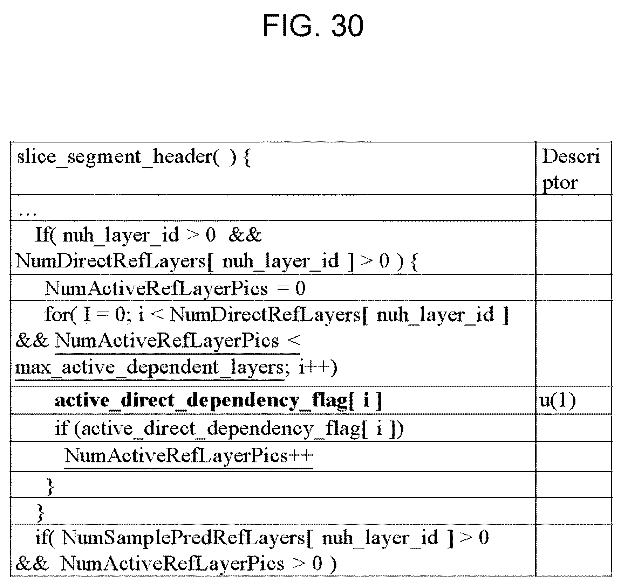

Fig. 30 illustrates an example of the data structure of the slice segment header decoded by the slice segment header decoder 402B2 according to the second embodiment of the present invention.

The slice segment header decoder 402B2 is configured to include an actual dependent layer decoder 403B2 and the reference picture set deriving unit 404. The actual dependent layer decoder 403B2 decodes the actual layer dependency flag active_direct_dependency_flag that indicates whether a picture of each layer belonging to the dependent layer list RefLayerId[nuh_layer_id][], which belongs to the layer nuh_layer_id to which the target picture belongs, is referenced by the target picture and decodes the actual dependent layer list RefPicLayerId[].

Specifically, the actual dependent layer decoder 403B2 decodes the actual layer dependency flag active_direct_dependency_flag[i] from the coded data of Fig. 30 for each index i of the number of dependent layers NumDirectRefLayers[nuh_layer_id] of the layer nuh_layer_id to which the target picture belongs until the number of actual dependent layers NumActiveRefLayerPics reaches the maximum number of actual dependent layers max_active_ref_layers.

Next, the actual dependent layer decoder 403B2, as illustrated in Fig. 21, in the case where the decoded actual layer dependency flag active_direct_dependency_flag[i] is one, adds the corresponding dependent layer refLayerId[nuh_layer_id][i] to the actual dependent layer list RefPicLayerId[I as in the following expression and increments the number of actual dependent layers NumActiveRefLayerPics as in the following expression in the same manner as the actual dependent layer decoder 403 and the actual dependent layer decoder 403.

$$\texttt{RefPicLayerId[i] = RefLayerId[nuh\_layer\_id][i]}$$

The actual dependent layer decoder 403B2 derives the actual sample dependent layer list ActiveSamplePredRefLayerId[] and the actual motion dependent layer list ActiveMotionPredRefLayerId[] that are inter-layer reference pictures referenced in the sample prediction and in the motion prediction. A derivation process of the actual dependent layer decoder 403B2 is the same as that of the actual dependent layer decoder 403, thus not being described further.

The image decoding device 31B2 described thus far is characterized by including layer dependency information decoding means (layer dependency information decoder 4011) for decoding dependent layer information that is information indicating a layer, different from a target layer, having the possibility of being referenced by the target layer; maximum actual layer number decoding means (maximum actual layer number decoder 4013) for decoding the maximum number of actual dependent layers max_active_ref_layers that is the maximum number of pictures, of a layer different from the target layer, referenced by a target picture of the target layer; actual dependent layer information decoding means (actual dependent layer decoder 403B2) for decoding information that indicates a picture of a layer, different from the target layer, referenced by a target picture of the target layer; and reference picture set deriving means (reference picture set deriving unit 404) for generating at least the inter-layer reference picture set on the basis of actual dependent layer information, in which the layer dependency information decoding means decodes the actual layer dependency flag active_direct_dependency_flag that indicates whether a picture of each layer belonging to the dependent layer list is referenced by the target picture and increments the number of actual dependent layers NumActiveRefLayerPics in the case where the actual layer dependency flag is one, and furthermore, the layer dependency information decoding means decodes the actual layer dependency flag only in the case where the number of actual dependent layers NumActiveRefLayerPics is less than the maximum number of actual layers max_active_ref_layers.

According to the moving image decoding device 31B2 configured as above, the effect of reducing complexity is accomplished because the maximum number of actual layers can be restricted. In addition, according to the moving image decoding device configured as such, the effect of reducing a coding amount is accomplished because the actual layer dependency flag is not decoded a number of times greater than or equal to the maximum number of actual layers.

(Third Embodiment)

Next, a third embodiment of the image decoding device related to the present invention will be described. An image decoding device according to the third embodiment can omit the code of the layer dependency type direct_dependency_type[][] by setting the maximum dependency type value direct_dep_type_len to zero in the case where the layer dependency type includes only the sample dependency and the motion dependency, thereby accomplishing the effect of reducing a coding amount.

Hereinafter, an image decoding device 31C1 will be described as the image decoding device according to the third embodiment.

(Image Decoding Device 31C1)

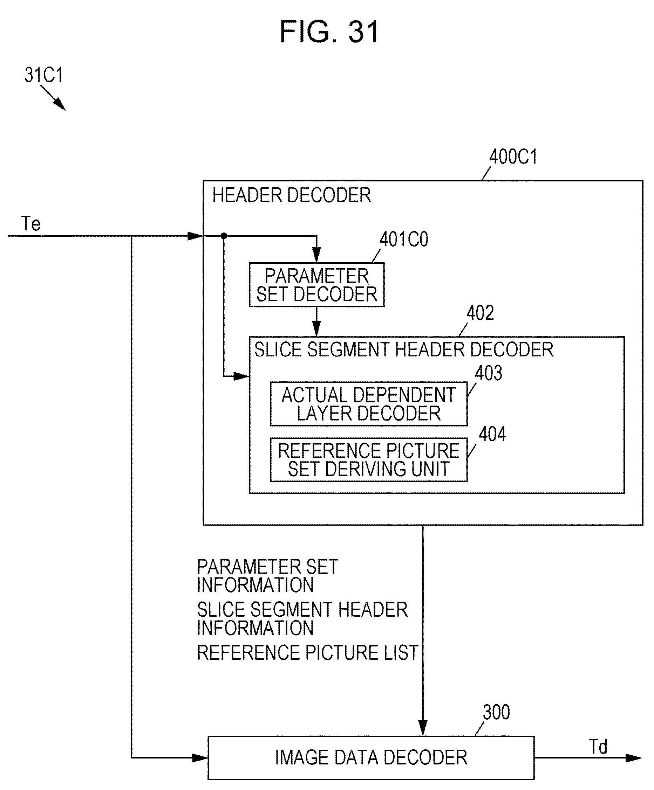

Fig. 31 is a schematic diagram illustrating a configuration of the image decoding device 31C1 according to the present embodiment. The image decoding device 31C1 according to the third embodiment of the present invention is configured to include the image data decoder 300 and a header decoder 400C1. The image data decoder 300 is the same as that of the first embodiment, thus not being described further. Similarly, means that is given the same reference sign as previously described means has the same configuration in the present embodiment, thus not being described further.

The header decoder 400C1 is configured to include a parameter set decoder 401C1 and the slice segment header decoder 402. The parameter set decoder 401C1 is configured to include a layer dependency information decoder 4011C1. The layer dependency information decoder 4011C1 decodes the dependent layer information that is information indicating a layer, different from the target layer, having the possibility of being referenced by the target layer in the same manner as the layer dependency information decoder 4011. Specifically, the layer dependency flag direct_dependent_flag[i][j] that indicates whether the target layer i is dependent on the reference layer j is decoded.

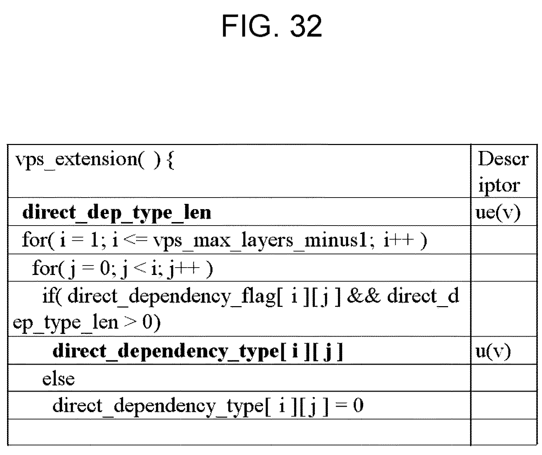

Fig. 32 illustrates an example of the data structure of a parameter set decoded by the parameter set decoder 401C1.

The layer dependency information decoder 4011C1 decodes the maximum layer dependency type value direct_dep_type_len from the coded data of the parameter set as illustrated in Fig. 32. The maximum layer dependency type value direct_dep_type_len is a value greater than or equal to zero.

The layer dependency information decoder 4011C1 decodes the dependency type from the coded data in the case where the maximum dependency type value direct_dep_type_len is other than zero. Specifically, the layer dependency type direct_dependency_type[i][j] is decoded from the coded data in the case where the layer dependency flag direct_dependency_flag[i][j] that is in the case where j is a dependent layer of the comparison layer i is one.

The layer dependency information decoder 4011C1 derives the layer dependency type as zero in the case where the maximum dependency type value direct_dep_type_len is other than zero. That is, the layer dependency type direct_dependency_type[i][j] is set to zero in the case where the layer dependency flag direct_dependency_flag[i][j] that is in the case where j is a dependent layer of the comparison layer i is one.

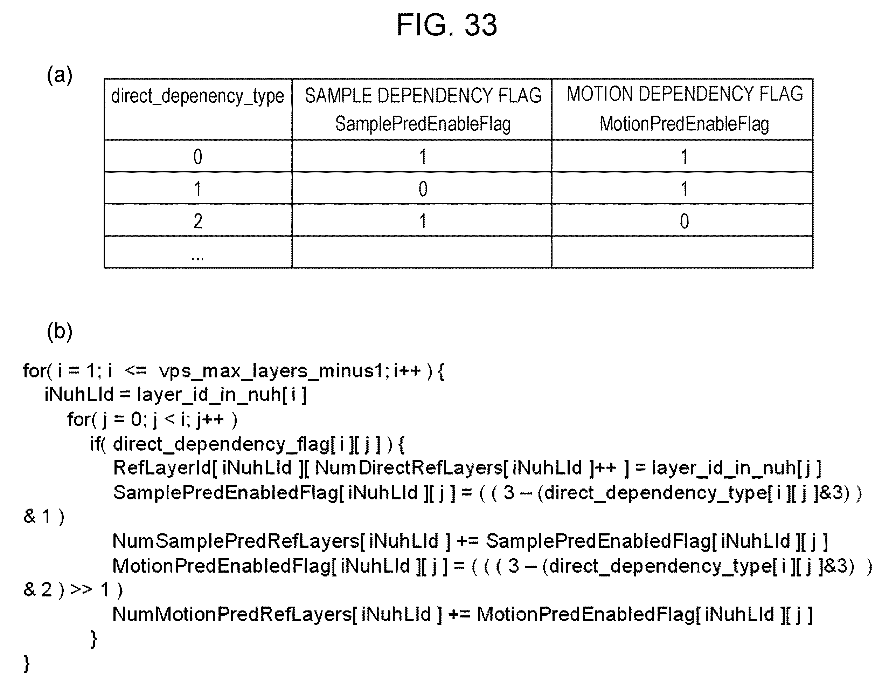

Fig. 33(b) illustrates a derivation process of the layer dependency information decoder 4011C1 for the sample dependency flag SamplePredEnableFlag and a motion dependency flag SamplePredEnableFlag.

As illustrated in Fig. 33(b), the layer dependency information decoder 4011C1 derives SamplePredEnableFlag[iNuhLid][j] and MotionPredEnableFlag[iNuhLid][j] for each target layer i and dependent layer j according to the following expression.

```
SamplePredEnabledFlag[iNuhLId][j] = ((3 -
(direct_dependency_type[i][j] & 3)) & 1)

MotionPredEnabledFlag[iNuhLId][j] = (((3 -
(direct_dependency_type[i][j] & 3)) & 2) >> 1)
```

In this expression, the symbol & represents a bit product (logical product), and the symbol >> represents a right bit shift.

Accordingly, SamplePredEnabledFlag and MotionPredEnabledFlag are derived according to the above relationship between the value of direct_dependency_type[i][j] and the value of the layer dependency type.

According to the layer dependency information decoder 4011C1 including the above process, the sample dependency flag SamplePredEnableFlag and the motion dependency flag SamplePredEnableFlag are derived in the case where direct_dependency_type[i][j] is zero in such a manner that dependency on the sample prediction is present, that is, the corresponding SamplePredEnabledFlag[iNuhLId][j] is one, and that dependency on the motion prediction is present, that is, the corresponding MotionPredEnabledFlag[iNuhLId][j] is one. Accordingly, the most frequently used case that has dependency on the sample prediction and on the motion prediction is assigned zero that is represented by the shortest bit length.

A general use case is the case that has dependency on the sample prediction and on the motion prediction. In such a use case, the code of the layer dependency type direct_dependency_type[][] can be omitted by setting the maximum dependency type value direct_dep_type_len to zero.

The image decoding device 31C1 described thus far is characterized by including maximum dependency type value decoding means (layer dependency information decoder 4011C1) for decoding the maximum layer dependency type value direct_dep_type_len, dependency type decoding means (layer dependency information decoder 4011C1) for decoding the layer dependency type that has a value less than or equal to the maximum dependency type value, and reference picture set deriving means (reference picture set deriving unit 404) for generating the inter-layer reference picture set on the basis of the layer dependency type, in which the maximum dependency type value decoding means decodes the maximum dependency type value direct_dep_type_len having a value greater than or equal to zero, the dependency type decoding means decodes and sets the layer dependency type direct_dependency_type from the coded data in the case where the maximum dependency type value direct_dep_type_len is other than zero or derives the layer dependency type direct_dependency_type as zero in the case where the maximum dependency type value direct_dep_type_len is zero, and furthermore, the dependency type decoding means derives the sample dependency flag SamplePredEnableFlag, which is a flag indicating whether a dependent layer is a sample dependent layer, and the motion dependency flag MotionPredEnableFlag, which is a flag indicating whether a dependent layer is a motion dependent layer, according to the layer dependency type direct_dependency_type and sets the sample dependency flag SamplePredEnableFlag and the motion dependency flag MotionPredEnableFlag to one in the case where the layer dependency type direct_dependency_type is zero.

According to the moving image decoding device 31C1 configured as above, decoding of the layer dependency type direct_dependency_type can be omitted in the case where the layer dependency type is sample-dependent and motion-dependent by decoding the maximum layer dependency type value direct_dep_type_len as zero. Therefore, the effect of reducing a coding amount is accomplished.

(Fourth Embodiment)

Next, a fourth embodiment of the image decoding device related to the present invention will be described. An image decoding device according to the fourth embodiment is characterized by changing the order of insertion of the inter-layer reference picture in the case of generating the L0 reference list and in the case of generating the L1 reference list, thereby accomplishing the effect of reducing the coding amount of the reference picture index.

Hereinafter, an image decoding device 31D1 and an image decoding device 31D2 will be described in order as the image decoding device according to the fourth embodiment.

(Image Decoding Device 31D1)

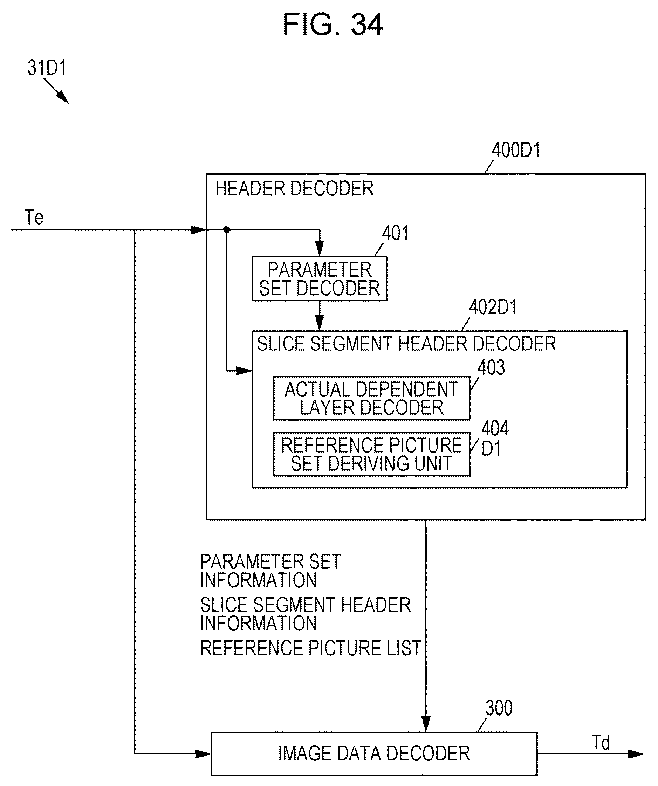

Fig. 34 is a schematic diagram illustrating a configuration of the image decoding device 31D1 according to the present embodiment. The image decoding device 31D1 that is one configuration of the fourth embodiment of the present invention is configured to include the image data decoder 300 and a header decoder 400D1.

The image data decoder 300 is the same as that of the first embodiment, thus not being described further. Similarly, means that is given the same reference sign as previously described means has the same configuration in the present embodiment, thus not being described further.

The header decoder 400D1 is configured to include the parameter set decoder 401 and a slice segment header decoder 402D1.

The slice segment header decoder 402D1 is configured to include the actual dependent layer decoder 403 and a reference picture set deriving unit 404D1.

The reference picture set deriving unit 404D1 derives the reference picture set RPS used in a decoding process performed on the target picture on the basis of the derived actual dependent layer information. Details are previously described in the description of the reference picture set deriving unit 404, thus not being described further.

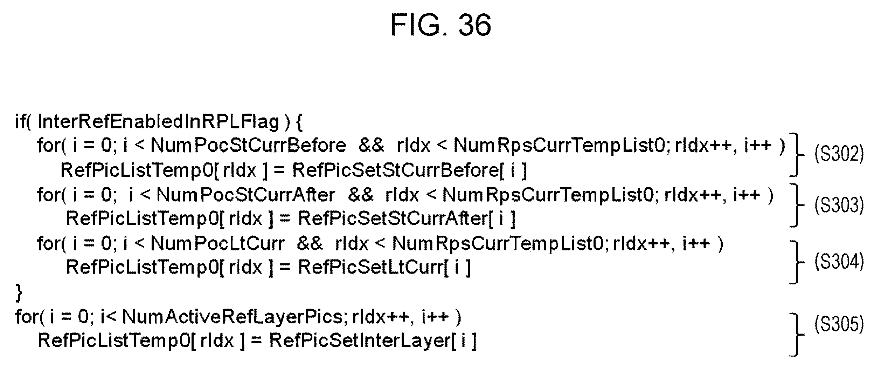

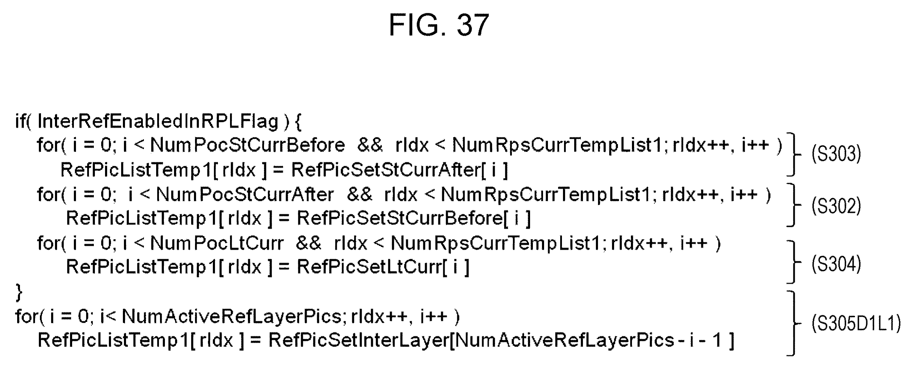

Fig. 36 is a diagram describing a derivation process of the reference picture set deriving unit 404D1 for the L0 reference picture list. Fig. 37 is a diagram describing a derivation process of the reference picture set deriving unit 404D1 for the L1 reference picture list.

The reference picture set deriving unit 404D1 builds the reference picture list (RPL). Hereinafter, details of a reference picture list building process will be described. A reference picture list deriving unit generates the reference picture set RPS and the reference picture list RPL on the basis of RPL correction information.

The reference picture list is configured of two lists of the L0 reference list and the L1 reference list. First, a building procedure for the LX reference list (X is either zero or one) will be described. As illustrated in Fig. 36, the L0 reference list is built in the procedure illustrated in the following S301 to S304, S305D1, and S306 to S307. The steps S301 to S304 and S307 are previously described.

(S305D1) The reference pictures that are included in the inter-picture layer reference picture set RefPicSetInterLayer are added to the tentative L0 reference list in order. That is, the reference pictures are added to the tentative L0 reference list in ascending order of the index i as in the following expression, that is, in the order of RefPicSetInterLayer[0], RefPicSetInterLayer[1], ....

```
for(i = 0; i < NumActiveRefLayerPics; rIdx++, i++)
        RefPicListTemp0[rIdx] = RefPicSetInterLayer[i]
```

Next, the L1 reference list is built by the same process. As illustrated in Fig. 37, the order of processes of S303 and S302 is reversed in building the L1 reference list. That is, the short-term forward reference picture set RefPicSetStCurrAfter is stored earlier than the short-term forward reference picture set RefPicSetStCurrBefore.

Furthermore, as illustrated in Fig. 37, the reference picture set deriving unit 404D1 uses the following S305D1L1 in deriving the L1 reference list instead of using S305D1 that is used in deriving the L0 reference list.

(S305D1L1) The reference pictures that are included in the inter-picture layer reference picture set RefPicSetInterLayer are added to the tentative L1 reference list in the order reversed to the order of addition to the tentative L0 reference list. That is, the reference pictures are added to the tentative L1 reference list in descending order of the index i as in the following expression, that is, in the order of RefPicSetInterLayer[NumActiveRefLayerPics - 1], RefPicSetInterLayer[NumActiveRefLayerPics - 2], ..., and RefPicSetInterLayer[0].

```
for(i = 0; i < NumActiveRefLayerPics; rIdx++, i++)
        RefPicListTemp1[rIdx] =
RefPicSetInterLayer[NumActiveRefLayerPics - i - 1]
```

The reference picture list generating means configured as above is characterized by adding the inter-layer reference pictures in a predetermined order in the case of generating the L0 reference list and by adding the inter-layer reference pictures in an order (reverse order) different from the predetermined order in the case of generating the L1 reference list.

While the order of adding the elements of the inter-picture layer reference picture set RefPicSetInterLayer described above is configured to be different for the tentative L0 reference list and the tentative L1 reference list in the fourth configuration of the present invention, this method may be different from the above description.

(Modification Example of Reference Picture Set Deriving Unit 404D1)

For example, the addition of the elements of the inter-picture layer reference picture set RefPicSetInterLayer to the tentative L0 reference list may be performed in descending order, and the addition of the elements of the inter-picture layer reference picture set RefPicSetInterLayer to the tentative L1 reference list may be performed in ascending order. That is, a process corresponding to S305D1 may be performed for the tentative L1 reference list, and a process corresponding to S305D1L1 may be performed for the tentative L0 reference list.

(Another Modification Example of Reference Picture Set Deriving Unit 404D1)

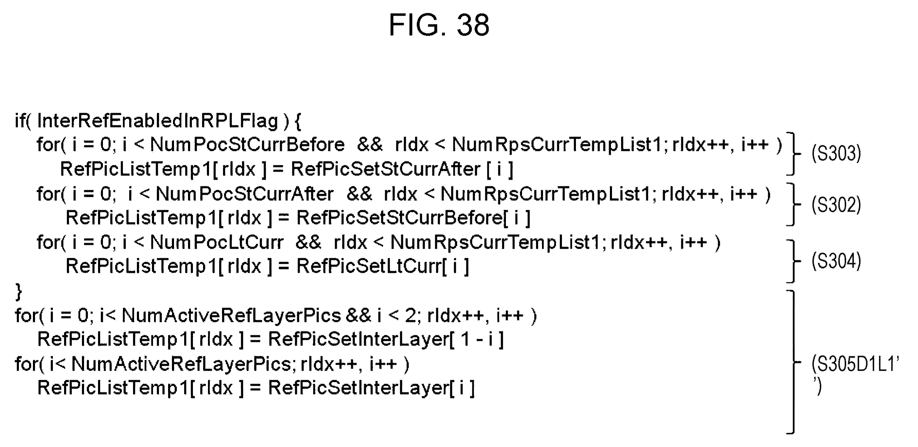

Fig. 38 is a diagram describing a derivation process of a reference picture set deriving unit 404D1" for the L1 reference picture list. As illustrated in Fig. 38, the first element and the second element of the tentative L0 reference list are swapped in the addition of the elements of the inter-picture layer reference picture set RefPicSetInterLayer to the tentative L1 reference list.

At this time, the addition of the elements of the inter-picture layer reference picture set RefPicSetInterLayer to the tentative L0 reference list may be performed either in ascending order or in descending order as in the following procedure.

```
for(i = 0; i < NumActiveRefLayerPics; rIdx++, i++)
      RefPicListTemp0[rIdx] = RefPicSetInterLayer[i]
```

The image decoding device 31D1 described thus far is characterized by including layer dependency information decoding means (actual dependent layer decoder 403) for decoding actual dependent layer information that is information indicating a picture of a layer, different from the target layer, referenced by the target picture; reference picture set deriving means (reference picture set deriving unit 404D1) for generating at least the inter-layer reference picture set on the basis of the actual dependent layer information; and reference picture list generating means (reference picture set deriving unit 404D1) for generating the reference picture list, in which the reference picture list generating means adds the inter-layer reference pictures in a predetermined order in the case of generating the L0 reference list and adds the inter-layer reference pictures in an order different from the predetermined order in the case of generating the L1 reference list.

According to the moving image decoding device 31D1 configured as above, an inter-layer reference picture is stored at different positions in the L0 reference picture and in the L1 reference picture in the case where the number of inter-layer reference pictures is greater than or equal to two. In this case, one inter-layer reference picture is referenced in the L0 reference picture by a reference picture index that is smaller than that in the L1 reference picture, and conversely, another inter-layer reference picture is referenced in the L1 reference picture by a reference picture index that is smaller than that in the L0 reference picture. Since a small reference picture index is referenced with a small coding amount, the effect of reducing the coding amount of the reference picture index is accomplished according to the above description.

(Image Decoding Device 31D2)

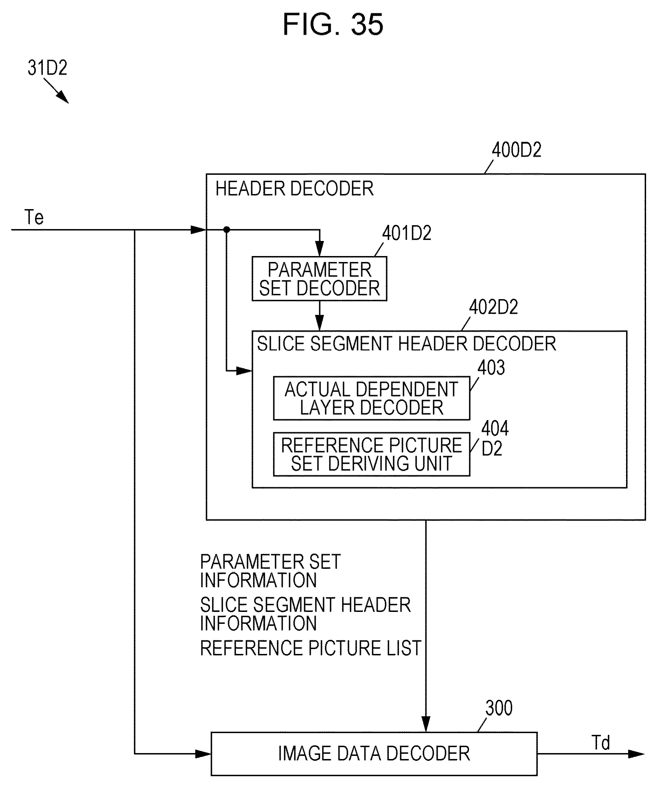

Fig. 35 is a schematic diagram illustrating a configuration of the image decoding device 31D2 according to the present embodiment.

The image decoding device 31D2 that is one configuration of the fourth embodiment of the present invention is configured to include the image data decoder 300 and a header decoder 400D2.

The image data decoder 300 is the same as that of the first embodiment, thus not being described further. Similarly, means that is given the same reference sign as previously described means has the same configuration in the present embodiment, thus not being described further.

The header decoder 400D2 is configured to include a parameter set decoder 401D2 and a slice segment header decoder 402D2. The parameter set decoder 401D2 is configured to include the layer dependency information decoder 4011 and an inter-layer reference list addition order flag decoder 4014.

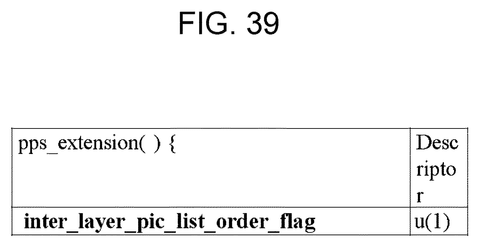

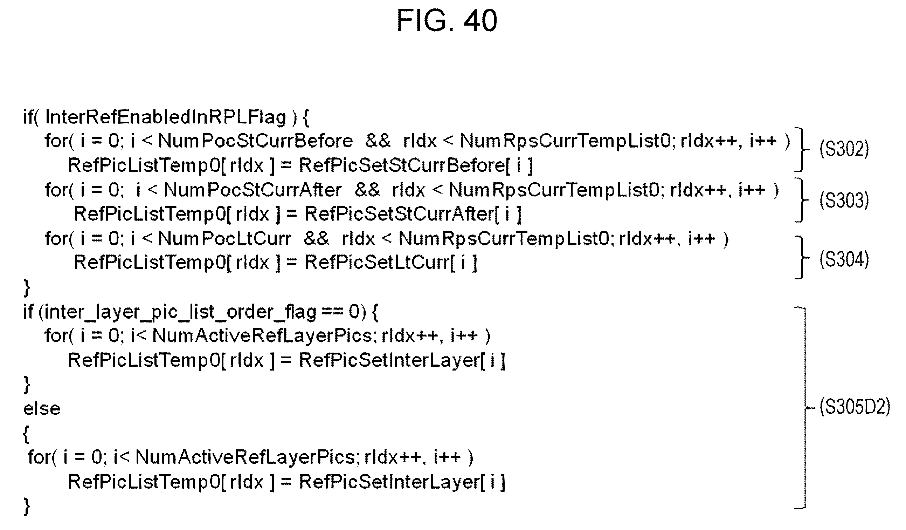

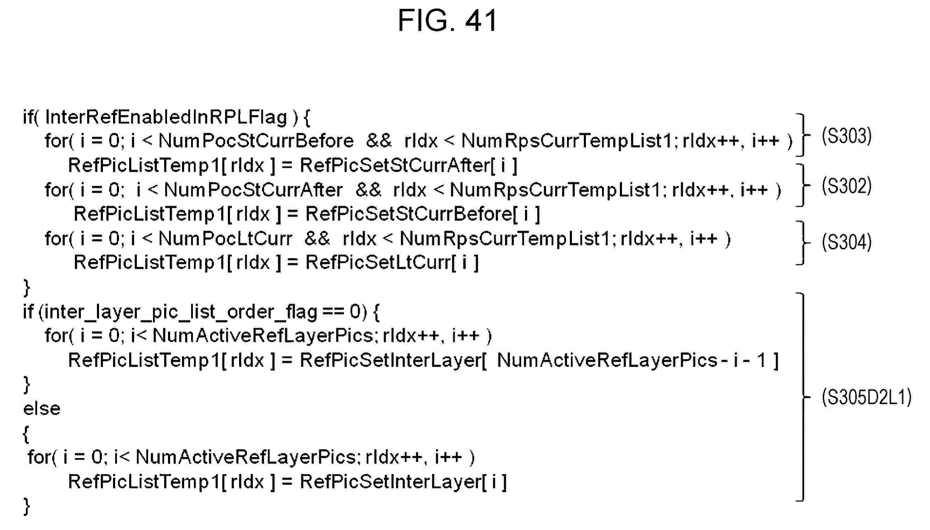

Fig. 39 illustrates an example of the data structure of a parameter set decoded by the parameter set decoder 401D2. Fig. 40 is a diagram describing a derivation process of the reference picture set deriving unit 404D2 for the L0 reference picture list. Fig. 41 is a diagram describing a derivation process of the reference picture set deriving unit 404D2 for the L1 reference picture list.

The inter-layer reference list addition order flag decoder 4014 decodes an inter-layer reference list addition order flag inter_layer_pic_list_order_flag from the parameter set (for example, VPS, SPS, or PPS) as illustrated in Fig. 39.

The slice segment header decoder 402D2 is configured to include the actual dependent layer decoder 403 and a reference picture set deriving unit 404D2.

The reference picture set deriving unit 404D2 derives the reference picture set RPS used in a decoding process performed on the target picture on the basis of the derived actual dependent layer information. Details are previously described in the description of the reference picture set deriving unit 404, thus not being described further.

The reference picture set deriving unit 404D2 builds the reference picture list (RPL). Hereinafter, details of a reference picture list building process will be described. A reference picture list deriving unit generates the reference picture set RPS and the reference picture list RPL on the basis of RPL correction information.

A reference picture list building process included in the reference picture set deriving unit 404D2 is characterized by switching the order of addition of the reference pictures included in the inter-picture layer reference picture set RefPicSetInterLayer between the L0 reference list and the L1 reference list according to the value of the inter-layer reference list addition order flag inter_layer_pic_list_order_flag.

The reference picture list is configured of two lists of the L0 reference list and the L1 reference list. First, a building procedure for the LX reference list (X is either zero or one) will be described. As illustrated in Fig. 40, the L0 reference list is built in the procedure illustrated in the following S301 to S304, S305D2, and S306 to S307. The steps S301 to S304 and S307 are previously described.

(S305D2) The reference pictures that are included in the inter-picture layer reference picture set RefPicSetInterLayer are added to the tentative L0 reference list. At this time, the reference pictures are added in ascending order in the case where the inter-layer reference list addition order flag inter_layer_pic_list_order_flag is zero or in descending order in the case where the inter-layer reference list addition order flag inter_layer_pic_list_order_flag is one.

Next, the L1 reference list is built by the same process. As illustrated in Fig. 41, the order of processes of S303 and S302 is reversed in building the L1 reference list. That is, the short-term forward reference picture set RefPicSetStCurrAfter is stored earlier than the short-term forward reference picture set RefPicSetStCurrBefore.

Furthermore, as illustrated in Fig. 41, the reference picture set deriving unit 404D2 uses the following S305D2L1 in deriving the L1 reference list instead of using S305D2 that is used in deriving the L0 reference list.

(S305D2L1) The reference pictures that are included in the inter-picture layer reference picture set RefPicSetInterLayer are added to the tentative L1 reference list in the order reversed to the order of addition to the tentative L0 reference list. That is, the reference pictures are added in descending order in the case where the inter-layer reference list addition order flag inter_layer_pic_list_order_flag is zero or in ascending order in the case where the inter-layer reference list addition order flag inter_layer_pic_list_order_flag is one.

The order of adding the elements of the inter-picture layer reference picture set RefPicSetInterLayer to the tentative L0 reference list and to the tentative L1 reference list may be configured in a different method from the above description.

(Modification Example of Reference Picture Set Deriving Unit 404D2)

For example, the reference picture list may be described in the following method as a modification example of the reference picture set deriving unit 404D2. The modification example of the reference picture set deriving unit 404D2 uses the following S305D2' and S305D2L1' instead of using S305D2 and S305D2L1.

(S305D2') The reference pictures that are included in the inter-picture layer reference picture set RefPicSetInterLayer are added to the tentative L0 reference list. The reference pictures are added in descending order in the case where the inter-layer reference list addition order flag inter_layer_pic_list_order_flag is zero or in ascending order in the case where the inter-layer reference list addition order flag inter_layer_pic_list_order_flag is one.

(S305D2L1') The reference pictures that are included in the inter-picture layer reference picture set RefPicSetInterLayer are added to the tentative L1 reference list in the order reversed to the order of addition to the tentative L0 reference list. That is, the reference pictures are added in ascending order in the case where the inter-layer reference list addition order flag inter_layer_pic_list_order_flag is zero or in descending order in the case where the inter-layer reference list addition order flag inter_layer_pic_list_order_flag is one.

(Another Modification Example of Reference Picture Set Deriving Unit 404D2)

In another modification example of the reference picture set deriving unit 404D2, the first element and the second element of the tentative L0 reference list are swapped in the addition of the elements of the inter-picture layer reference picture set RefPicSetInterLayer to the tentative L1 reference list as in the following procedure.

The addition of the elements of the inter-picture layer reference picture set RefPicSetInterLayer to the tentative L0 reference list uses the previously described method, for example, S305D2 and S305D2', in which the addition method is changed by the inter-layer reference list addition order flag inter_layer_pic_list_order_flag.

The image decoding device 31D2 described thus far is the moving image decoding device according to Claim D1, characterized by further including, in addition to the configuration of the image decoding device 31D1 described thus far, inter-layer reference list addition order flag decoding means (reference picture set deriving unit 404D2) for decoding a flag that indicates the order of addition of the inter-layer reference picture list, in which the reference picture list generating means, in the case where the inter-layer reference list addition order flag has a certain value, adds the inter-layer reference pictures in ascending order in the case of generating the L0 reference list and adds the inter-layer reference pictures in descending order in the case of generating the L1 reference list and conversely, in the case where the inter-layer reference list addition order flag does not have the value, adds the inter-layer reference pictures in descending order in the case of generating the L0 reference list and adds the inter-layer reference pictures in ascending order in the case of generating the L1 reference list.

According to the moving image decoding device 31D2 configured as above, the effect of arranging a high-priority inter-layer reference picture in the L0 reference picture as well as changing the priority of the inter-layer reference pictures between the L0 reference picture and the L1 reference picture is accomplished.

According to the moving image decoding device 31D2 configured as above, an inter-layer reference picture is stored at different positions in the L0 reference picture and in the L1 reference picture in the case where the number of inter-layer reference pictures is greater than or equal to two. In this case, one inter-layer reference picture is referenced in the L0 reference picture by a reference picture index that is smaller than that in the L1 reference picture, and conversely, another inter-layer reference picture is referenced in the L1 reference picture by a reference picture index that is smaller than that in the L0 reference picture. Since a small reference picture index is referenced with a small coding amount, the effect of reducing the coding amount of the reference picture index is accomplished according to the above description.

(Configuration of Image Coding Device)

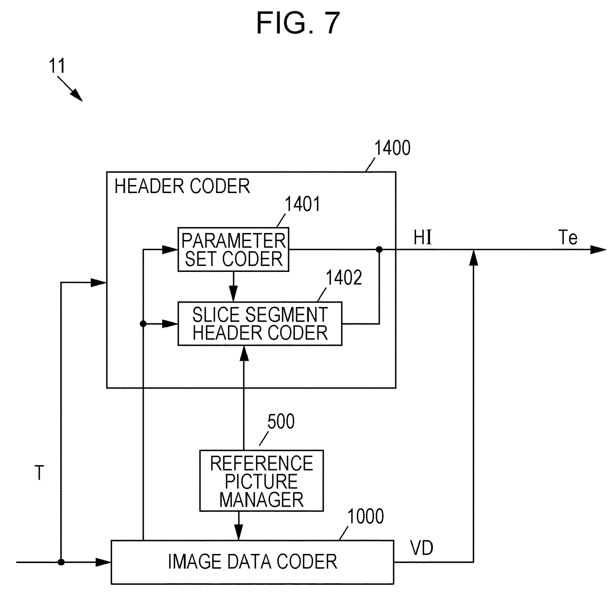

Next, a configuration of the image coding device 11 according to one embodiment of the present invention will be described. Fig. 7 is a schematic diagram illustrating a configuration of the image coding device 11 according to the present embodiment. The image coding device 11 is configured to include an image data coder 1000 and a header coder 1400.

The image data coder 1000 codes a plurality of layer images T that is input from the outside of the image coding device to generate coded image data VD. In addition, parameters such as a coding mode that is determined during a coding process are output to the header coder 1400.

The header coder 1400 is configured to include a parameter set coder 1401 and a slice segment header coder 1402. The parameter set coder 1401 generates a parameter set of a layer higher than the slice layer on the basis of the plurality of layer images T and the parameters input from the image data coder 1000. Parameters of a higher layer are, for example, the video parameter set VPS, the sequence parameter set SPS, and the picture parameter set PPS. Similarly, the slice segment header coder 1402 generates parameters of the slice layer. The parameters of the slice layer are, for example, either the slice segment header or the slice segment header and a slice segment header extension. The header coder 1400 outputs header information HI that includes these generated parameter sets and the like. Details of the header coder 1400 will be described later.

The image coding device 11 generates the coded stream Te in which the header information HI and the coded image data VD generated are linked according to a predetermined rule and outputs the coded stream Te to the outside of the image coding device 11.

(Configuration of Image Coder)

Next, a configuration of the image data coder 1000 will be described.

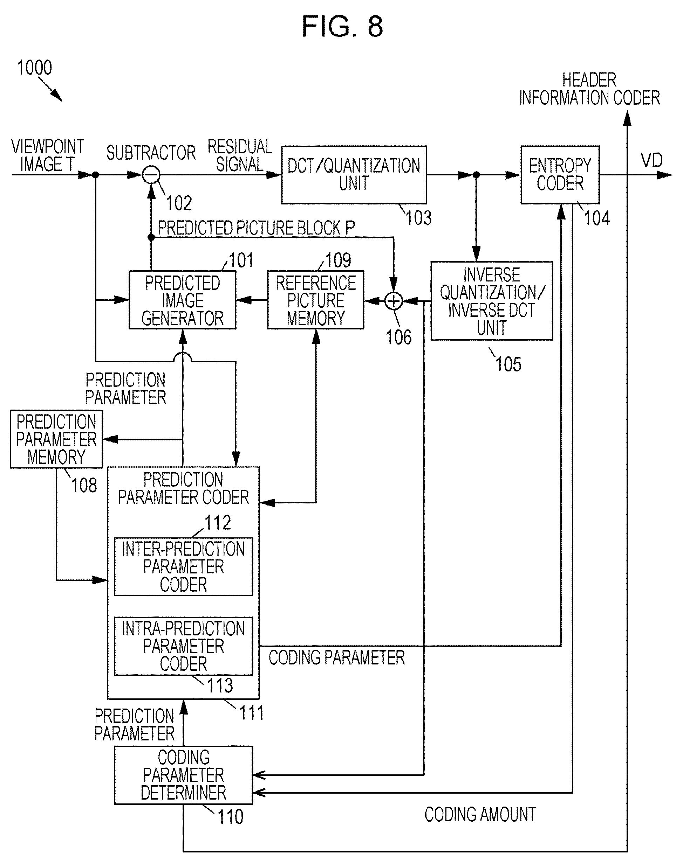

Fig. 8 is a schematic diagram illustrating a configuration of the image data coder 1000 according to the present embodiment. The image data coder 1000 is configured to include a predicted image generator 101, a subtracter 102, a DCT/quantization unit 103, an entropy coder 104, an inverse quantization / inverse DCT unit 105, an adder 106, a prediction parameter memory (prediction parameter storage or frame memory) 108, a reference picture memory (reference image storage or frame memory) 109, a coding parameter determiner 110, a prediction parameter coder 111, and an inter-layer motion mapper 1125. The prediction parameter coder 111 is configured to include an inter-prediction parameter coder 112 and an intra-prediction parameter coder 113.

The predicted image generator 101 generates the predicted picture block P per block, which is a region divided from a picture, of each picture per viewpoint of the layer image T that is input from the outside of the image coding device 11. The predicted image generator 101 reads a reference picture block from the reference picture memory 109 on the basis of the prediction parameters that are input from the prediction parameter coder 111. The prediction parameters that are input from the prediction parameter coder 111 are, for example, the motion vector or the displacement vector. The predicted image generator 101 reads a reference picture block of a block that is present at a predicted position indicated by the motion vector or the displacement vector starting from a coding target block. The predicted image generator 101 uses one of a plurality of prediction schemes for the read reference picture block to generate the predicted picture block P. The predicted image generator 101 outputs the generated predicted picture block P to the subtracter 102. The predicted image generator 101 operates in the same manner as the predicted image generator 308 described previously. Thus, details of generation of the predicted picture block P will not be described.

The subtracter 102 subtracts the signal value of the predicted picture block P, input from the predicted image generator 101, from the signal value of the corresponding block of the layer image T, input from the outside, per pixel to generate a residual signal. The subtracter 102 outputs the generated residual signal to the DCT/quantization unit 103.

The DCT/quantization unit 103 performs DCT on the residual signal that is input from the subtracter 102 to calculate the DCT coefficient. The DCT/quantization unit 103 obtains the quantized coefficient by quantizing the calculated DCT coefficient. The DCT/quantization unit 103 outputs the obtaind quantized coefficient to the entropy coder 104 and the inverse quantization / inverse DCT unit 105.

The quantized coefficient and coding parameters are input into the entropy coder 104 respectively from the DCT/quantization unit 103 and from the prediction parameter coder 111. The input coding parameters are codes such as the reference picture index refIdxLX, the vector index mvp_LX_idx, the difference vector mvdLX, the prediction mode predMode, and the merge index merge_idx.

The entropy coder 104 entropy-codes the input quantized coefficient and the coding parameters to generate and output the coded image data VD.

The inverse quantization / inverse DCT unit 105 inverse-quantizes the quantized coefficient that is input from the DCT/quantization unit 103 to obtain the DCT coefficient. The inverse quantization / inverse DCT unit 105 performs inverse DCT on the obtained DCT coefficient to calculate a decoded residual signal. The inverse quantization / inverse DCT unit 105 outputs the calculated decoded residual signal to the adder 106.

The adder 106 adds the signal value of the predicted picture block P, input from the predicted image generator 101, to the signal value of the decoded residual signal, input from the inverse quantization / inverse DCT unit 105, per pixel to generate a reference picture block. The adder 106 stores the generated reference picture block on the reference picture memory 109.

The prediction parameter memory 108 stores the prediction parameters generated by the prediction parameter coder 111 at a predetermined position per picture and block of a coding target.

The reference picture memory 109 stores the reference picture block generated by the adder 106 at a predetermined position per picture and block of the coding target.

The coding parameter determiner 110 selects one set from a plurality of coding parameter sets. Coding parameters are the above prediction parameters including coding target parameters that are generated in relation to the prediction parameters. Of the parameters determined, parameters that are common to the layers higher than or equal to the slice layer are output to the header coder 1400. Parameters that are common to the layers higher than or equal to the slice layer will be described later.

The coding parameter determiner 110 calculates a cost value that indicates the magnitude of the amount of information and a coding error for each of the plurality of coding parameter sets. The cost value is, for example, the sum of a coding amount and the value of a squared error multiplied by a coefficient $\lambda$. The coding amount is the amount of information of the coded stream Te that is obtained by entropy-coding a quantization error and the coding parameters. The squared error is the total sum of the square of the residual value of the residual signal calculated in the subtracter 102 between pixels. The coefficient $\lambda$ is a preset real number greater than zero. The coding parameter determiner 110 selects a coding parameter set that minimizes the cost value calculated. Accordingly, the entropy coder 104 outputs the selected coding parameter set to the outside of the entropy coder 104 as the coded stream Te and does not output the coding parameter sets that are not selected.

The coding parameter set that is selected is dependent on the prediction scheme to be selected. Prediction schemes that are selection targets are intra-prediction, motion prediction, and merge prediction in the case where the coding target picture is a base view picture. Motion prediction is prediction of types of inter-prediction described above that is performed between display times. Merge prediction is prediction that uses the same reference picture block and the same prediction parameters as a previously coded block that resides within a predetermined range from the coding target block. Prediction schemes that are selection targets are intra-prediction, motion prediction, merge prediction, and displacement prediction in the case where the coding target picture is a non-base view picture. Displacement prediction (parallax prediction) is prediction of types of inter-prediction described above that is performed between different layer images (different viewpoint images).

The coding parameter determiner 110 outputs the prediction mode predMode that corresponds to the selected prediction scheme to the prediction parameter coder 111.

The coding parameter determiner 110 outputs the motion vector mvLX as well in the case where motion prediction is selected as a prediction scheme. The motion vector mvLX indicates a vector from the position of the coding target block to the position of the reference picture block at the time of generating the predicted picture block P. Information that indicates the motion vector mvLX may include information that indicates a reference picture (for example, the reference picture index refIdxLX and the picture order count POC) and may represent the prediction parameters.

The coding parameter determiner 110 outputs the displacement vector dvLX as well in the case where displacement prediction is selected as a prediction scheme. The displacement vector dvLX indicates a vector from the position of the coding target block to the position of the reference picture block at the time of generating the predicted picture block P. Information that indicates the displacement vector dvLX may include information that indicates a reference picture (for example, the reference picture index refIdxLX and a view identifier view_id) and may represent the prediction parameters.

The coding parameter determiner 110 outputs the merge index merge_idx as well in the case where merge prediction is selected as a prediction scheme.

The prediction parameter coder 111 derives prediction parameters that are used at the time of generating a predicted picture on the basis of the parameters input from the coding parameter determiner 110 and codes the derived prediction parameters to generate a coding parameter set. The prediction parameter coder 111 outputs the generated coding parameter set to the entropy coder 104.

The prediction parameter coder 111 stores prediction parameters that correspond to those of the generated coding parameter set selected by the coding parameter determiner 110 on the prediction parameter memory 108.

The prediction parameter coder 111 causes the inter-prediction parameter coder 112 to operate in the case where the prediction mode predMode that is input from the coding parameter determiner 110 indicates the inter-prediction mode. The prediction parameter coder 111 causes the intra-prediction parameter coder 113 to operate in the case where the prediction mode predMode indicates the intra-prediction mode.

The inter-prediction parameter coder 112 derives the inter-prediction parameters on the basis of the prediction parameters that are input from the coding parameter determiner 110. The inter-prediction parameter coder 112 includes, as a configuration deriving the inter-prediction parameters, the same configuration as the configuration of the inter-prediction parameter decoder 303 deriving the inter-prediction parameters.

The intra-prediction parameter coder 113 determines the intra-prediction mode IntraPredMode that is indicated by the prediction mode predMode input from the coding parameter determiner 110 as an intra-prediction parameter set.

Determination of parameters related to the inter-layer prediction performed in the coding parameter determiner 110 and a coding process of the header coder 1400 for the header information based on the determined parameters will be described in detail.

The coding parameter determiner 110 stores information that indicates the reference picture and the prediction mode selected during a coding process for each layer (a plurality of viewpoint images or the like). If, of this information, information that is related to inter-layer dependency, that is, an inter-layer dependency relationship related to sample prediction or temporal motion prediction is determined in relation to all layers, the inter-layer dependency information related to all layers is output to the header coder 1400. The inter-layer dependency information includes information that indicates whether the layer i references the layer j and information that indicates whether each reference is performed by sample prediction or by motion prediction. The header coder 1400 inputs the inter-layer dependency information from the coding parameter determiner 110 to the parameter set coder 1401.

The parameter set coder 1401 codes the layer dependency flag direct_dependency_flag[i][j] and the layer dependency type direct_dependency_type[i][j] on the basis of the input inter-layer dependency information to generate a VPS extension (Fig. 9) that is a data structure including these codes and outputs the coded information to the slice segment header coder 1402.

The coding parameter determiner 110 outputs slice layer coding parameters that include reference picture information and the prediction mode selected during a coding process performed in units of slice segments to the header coder 1400. The header coder 1400 inputs the slice layer coding parameters from the coding parameter determiner 110 to the slice segment header coder 1402.

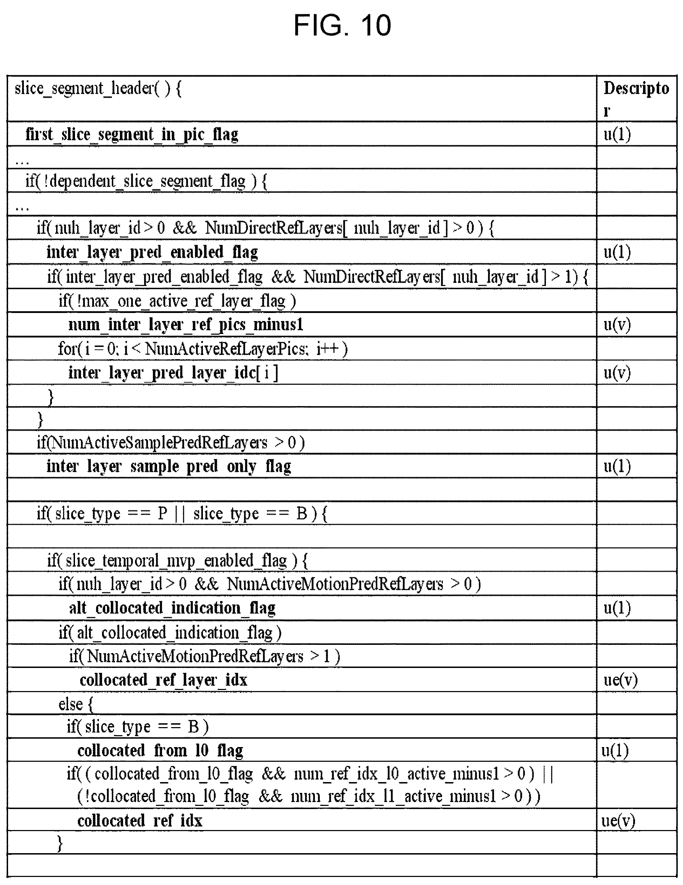

The slice segment header coder 1402 codes the inter-layer prediction validity flag inter_layer_pred_enabled_flag, which indicates whether to perform inter-layer prediction, on the basis of the input slice layer coding parameters and the coding parameters related to inter-layer dependency that are input from the parameter set coder 1401. In the case where inter-layer prediction is valid, the number of inter-layer dependent pictures (num_inter_layer_ref_pics_minus1) and the inter-layer dependency identifier (inter_layer_pred_layer_idc[]) are coded on the basis of the number of dependent layers (NumDirectRefLayers[]) and the number of actual dependent layer pictures (NumActiveRefLayerPics) related to the target layer, and a slice segment header (Fig. 10) that includes these codes is generated. Specifically, num_inter_layer_ref_pics_minus1 is set to the value of "NumActiveRefLayerPics - 1", and inter_layer_pred_layer_idc[i] is set to a layer identifier that indicates the reference layer j of the target layer i. At this time, the layer identifier inter_layer_pred_layer_idc[] is not coded in the case where there is no actual reference layer picture (NumActiveRefLayerPics == 0), and the number of inter-layer dependent pictures num_inter_layer_ref_pics_minus1 is not coded as well in the case where the number of reference layers is one. In coding of these codes, num_inter_layer_ref_pics_minus1 is coded with a bit length that allows NumDirectRefLayers[] to be represented with the minimum number of bits, and inter_layer_pred_layer_idc[] is coded with a bit length that allows NumActiveRefLayerPics to be represented with the minimum number of bits.

The parameter set coder 1401 codes the dependent layer information that is information indicating a layer, different from the target layer, having the possibility of being referenced by the target layer.

The slice segment header coder 1402 codes, as the information that indicates a picture of a layer different from the target layer, the inter-layer prediction validity flag inter_layer_pred_enabled_flag and the actual layer dependency flag active_direct_dependency_flag that indicates whether a picture of each layer belonging to the dependent layer list is referenced by the target picture.

According to a moving image coding device configured as above, the effect of reducing a coding amount is accomplished in comparison with the case of decoding the actual dependent layer index.

(Image Coding Device 11A2)

A configuration of an image coding device 11A2 according to one embodiment of the present invention will be described. The image coding device 11A2 is configured to include the image data coder 1000 and a header coder 1400A2.

The header coder 1400A2 is configured to include a parameter set coder 1401A2 and a slice segment header coder 1402A2.

The parameter set coder 1401A2 codes the dependent layer information that is information indicating a layer, different from the target layer, having the possibility of being referenced by the target layer.

The slice segment header coder 1402A2 codes, as the information that indicates a picture of a layer different from the target layer, the actual layer dependency flag active_direct_dependency_flag that indicates whether a picture of each layer belonging to the dependent layer list is referenced by the target picture and does not code the inter-layer prediction validity flag inter_layer_pred_enabled_flag.

According to the moving image coding device A2 configured as above, the effect of reducing a coding amount is accomplished in comparison with the case of decoding the actual dependent layer index.

(Image Coding Device 11A3)

A configuration of an image coding device 11A3 according to one embodiment of the present invention will be described. The image coding device 11A3 is configured to include the image data coder 1000 and a header coder 1400A3.

The header coder 1400A3 is configured to include a parameter set coder 1401A3 and a slice segment header coder 1402A3.

The parameter set coder 1401A3 codes the layer dependency information that is used to decode the dependent layer information which is information indicating a layer, different, from the target layer, having the possibility of being referenced by the target layer, and the slice segment header coder 1402A3 codes information that indicates pictures, of a layer different from the target layer, referenced by the target picture of the target layer. Here, actual dependent layer information decoding means codes the number of actual dependent layers NumActiveRefLayerPics that indicates the number of pictures, of a layer different from the target layer, referenced by the target picture, codes the actual dependent layer index inter_layer_pred_layer_idc[i] that indicates an element of the dependent layer list from the coded data in the case where the number of actual dependent layers NumActiveRefLayerPics is different from the number of dependent layers NumDirectRefLayers[nuh_layer_id], and does not code the actual dependent layer index inter_layer_pred_layer_idc[i] in the case where the number of actual dependent layers is the same as the number of dependent layers.

According to a moving image decoding device configured as above, the effect of reducing a coding amount is accomplished because there is no need to decode the actual dependent layer index in the case where the number of actual dependent layers is the same as the number of dependent layers.

(Image Coding Device 11A4)

A configuration of an image coding device 11A4 according to one embodiment of the present invention will be described. The image coding device 11A4 is configured to include the image data coder 1000 and a header coder 1400A4.

The header coder 1400A4 is configured to include a parameter set coder 1401A4 and a slice segment header coder 1402A4. The parameter set parameter set coder 1401A4 codes the dependent layer information that is information indicating a layer, different from the target layer, having the possibility of being referenced by the target layer.

The parameter set parameter set coder 1401A4 codes the actual dependency flag existence flag that indicates whether to decode the actual dependent layer information in the slice segment header.

The slice segment header coder 1402A4 codes information that indicates pictures, of a layer different from the target layer, referenced by the target picture of the target layer in the case where the actual dependency flag existence flag is one. In the case where the actual dependency flag existence flag is zero, the actual dependent layer list RefLayerPics is the same as the dependent layer list RefLayerId that is coded by the parameter set parameter set coder 1401A4 and thus is not coded.

According to a moving image coding device configured as above, the actual dependent layer index is not necessary because the actual dependency flag existence flag is coded as zero in the case where the actual dependent layer list RefLayerPics is the same as the dependent layer list RefLayerId. Thus, the effect of reducing a coding amount is accomplished.

(Image Coding Device 11B1)

A configuration of an image coding device 11B1 according to one embodiment of the present invention will be described. The image coding device 11B1 is configured to include the image data coder 1000 and a header coder 1400B1.

The header coder 1400B1 is configured to include a parameter set coder 1401B1 and a slice segment header coder 1402B1. The parameter set coder 1401B1 codes the layer dependency information that is used to decode the dependent layer information which is information indicating a layer, different from the target layer, having the possibility of being referenced by the target layer and codes the maximum number of actual layers that is used to decode the maximum number of actual dependent layers max_active_ref_layers which is the maximum number of pictures, of a layer different from the target layer, referenced by a picture of the target layer.

The slice segment header coder 1402B1 codes information that indicates pictures, of a layer different from the target layer, referenced by the target picture of the target layer. At this time, the slice segment header coder 1402B1 is characterized by coding the syntax num_inter_layer_ref_pics_minus1 related to the number of actual dependent layers in the case where the maximum number of actual layers max_active_ref_layers is greater than one and by coding the dependent layer identifier inter_layer_pred_layer_idc[] in the case where the number of actual dependent layers is greater than or equal to one.

According to the moving image coding device 31B1 configured as above, the number of actual dependent layers can be restricted even in the case where the maximum number of actual layers is other than one. Since the number of reference pictures between layers that are layers, other than the layer to which the target picture belongs, actually used by the target layer is restricted, the effect of reducing complexity is accomplished. In addition, according to the moving image coding device configured as such, the effect of reducing a coding amount is accomplished because the actual layer dependency flag is not coded a number of times greater than or equal to the maximum number of actual layers.

(Image Coding Device 11B2)

A configuration of an image coding device 11B2 according to one embodiment of the present invention will be described. The image coding device 11B2 is configured to include the image data coder 1000 and a header coder 1400B2.

The header coder 1400B2 is configured to include a parameter set coder 1401B2 and a slice segment header coder 1402B2.

The parameter set coder 1401B2 codes the dependent layer information that is information indicating a layer, different from the target layer, having the possibility of being referenced by the target layer and codes the maximum number of actual dependent layers max_active_ref_layers that is the maximum number of pictures, of a layer different from the target layer, referenced by a picture of the target layer.

The slice segment header coder 1402B2 codes information that indicates pictures, of a layer different from the target layer, referenced by the target picture of the target layer. At this time, the actual layer dependency flag active_direct_dependency_flag that indicates whether a picture of each layer belonging to the dependent layer list is referenced by the target picture is coded.

According to the moving image coding device 31B2 configured as above, the effect of reducing complexity is accomplished because the maximum number of actual layers can be restricted. In addition, according to the moving image coding device configured as such, the effect of reducing a coding amount is accomplished because the actual layer dependency flag is not coded a number of times greater than or equal to the maximum number of actual layers.

(Image Coding Device 11C1)

A configuration of an image coding device 11C1 according to one embodiment of the present invention will be described. The image coding device 11B2 is configured to include the image data coder 1000 and a header coder 1400C1.

The header coder 1400C1 is configured to include a parameter set coder 1401C1 and a slice segment header coder 1402C1. The parameter set coder 1401C1 derives and codes the maximum layer dependency type value direct_dep_type_len as a syntax element having a value greater than or equal to zero. The parameter set coder 1401C1 codes the layer dependency type direct_dependency_type in the case where the derived maximum dependency type value direct_dep_type_len is other than zero. In the case where the maximum dependency type value direct_dep_type_len is zero, the layer dependency type direct_dependency_type is zero and thus is not coded. The sample dependency flag SamplePredEnableFlag and the motion dependency flag MotionPredEnableFlag are set to one in the case where the layer dependency type direct_dependency_type is zero.

According to the moving image coding device 31C1 configured as above, the maximum layer dependency type value direct_dep_type_len can be coded as zero, and coding of the layer dependency type direct_dependency_type can be omitted in the case where the layer dependency type indicates sample dependency and motion dependency. Thus, the effect of reducing a coding amount is accomplished.

(Image Coding Device 11D1)

A configuration of an image coding device 11D1 according to one embodiment of the present invention will be described. The image coding device 11D1 is configured to include the image data coder 1000 and the header coder 1400.

A reference picture list generator included in the header coder 1400 is characterized by adding the inter-layer reference pictures in a predetermined order in the case of generating the L0 reference list and by adding the inter-layer reference pictures in an order (reverse order) different from the predetermined order in the case of generating the L1 reference list.

(Image Coding Device 11D2)

A configuration of an image coding device 11D2 according to one embodiment of the present invention will be described. The image coding device 11D2 is configured to include the image data coder 1000 and the header coder 1400.

A reference picture list generator included in the header coder 1400, in the case where the inter-layer reference list addition order flag has a certain value, adds the inter-layer reference pictures in ascending order in the case of generating the L0 reference list and adds the inter-layer reference pictures in descending order in the case of generating the L1 reference list and conversely, in the case where the inter-layer reference list addition order flag does not have the value, adds the inter-layer reference pictures in descending order in the case of generating the L0 reference list and adds the inter-layer reference pictures in ascending order in the case of generating the L1 reference list.

The parameter set coder 1401D2 codes the inter-layer reference list addition order flag that is a flag indicating the order of addition of the inter-layer reference picture list.

According to the moving image coding device 31D2 configured as above, the effect of arranging a high-priority inter-layer reference picture in the L0 reference picture as well as changing the priority of the inter-layer reference pictures between the L0 reference picture and the L1 reference picture is accomplished.

The image coding device according to the present embodiment, by including a configuration as described thus far, does not code extended header information in the case where the values of a plurality of parameter sets related to inter-layer prediction for non-base layers are the same as a predetermined combination at the time of hierarchically coding image data of a plurality of layers. Thus, the coding amount of parameters necessary for hierarchical coding can be decreased, and a coding efficiency can be improved. In addition, regarding the slice layer information, separating the base part and the extension part of the slice segment header results in the effect that influence exerted on an image coding device or software that complies with only a single layer standard is reduced and that supporting a plurality of layers (a plurality of viewpoint images or the like) is facilitated by using an image coding device or software supporting a single layer as a base.

The image coding device 11, the image decoding device 31, and a part thereof described in the above embodiments may be realized by a computer. In this case, the realization thereof may be performed by recording a program for realizing control functions thereof on a computer-readable recording medium, reading the program recorded on the recording medium into a computer system, and executing the program. The term "computer system" referred hereto is a computer system that is incorporated into the image coding device 11 or into the image decoding device 31, including an OS and hardware such as peripherals. In addition, the term "computer-readable recording medium" refers to a portable medium such as a flexible disk, a magneto-optical disc, a CD-ROM, or a DVD-ROM or to a storage device such as a hard disk that is incorporated into the computer system. Furthermore, the term "computer-readable recording medium" may include a medium that dynamically retains the program for a short amount of time, like a communication line in the case of transmitting the program through a network such as the Internet or through a communication line such as a telephone line, and include a medium that retains the program for a specific amount of time, such as a volatile memory inside the computer system that serves as a server or a client in the former case. The program may be a program for realizing a part of the function described above or, furthermore, may be a program that can realize the function described above in combination with a program which is previously recorded in the computer system.

A part or the entirety of the image coding device 11 and the image decoding device 31 described in the above embodiments may be realized as an integrated circuit such as large-scale integration (LSI). Each means of the image coding device 11 and the image decoding device 31 may be configured as a separate processor or may be configured as a processor in which a part or the entirety thereof is integrated. In addition, a circuit integration technique is not limited to LSI and may be realized by a dedicated circuit or a versatile processor. In addition, in the case where a circuit integration technology that replaces LSI emerges after technological progress is made in the semiconductor field, an integrated circuit resulting from the technology may be used as well.

While a plurality of embodiments of this invention is described in detail thus far with reference to the drawings, a specific configuration of the invention is not limited to those described above. Various design modifications and the like can be made to the extent not departing from the gist of the invention.

[Overview]

One embodiment of the present invention is characterized by including layer dependency information decoding means for decoding dependent layer information that is information indicating a layer, different from a target layer, having the possibility of being referenced by the target layer, actual dependent layer information decoding means for decoding information that indicates a picture, of a layer different from the target layer, referenced by a target picture of the target layer, and reference picture set deriving means for generating at least an inter-layer reference picture set on the basis of the actual dependent layer information, in which the layer dependency information decoding means decodes an actual layer dependency flag that indicates whether a picture of each layer belonging to the dependent layer list is referenced by the target picture.

According to a moving image decoding device configured as above, the effect of simplified processing is accomplished in comparison with the case of decoding the actual dependent layer index because there is no need to calculate the number of bits necessary for the actual dependent layer index. In addition, the effect of reducing a coding amount is accomplished in comparison with the case of decoding the actual dependent layer index.

According to one embodiment of the present invention, the moving image decoding device is characterized by further including inter-layer prediction validity flag deriving means for deriving an inter-layer prediction validity flag that indicates whether the target picture references a picture of a layer different from the target layer, in which the inter-layer prediction validity flag deriving means sets the inter-layer prediction validity flag to one in a case where at least one actual layer dependency flag is one or to zero otherwise.

According to the moving image decoding device configured as above, the effect of reducing a coding amount is accomplished in comparison with the case where the inter-layer prediction flag is explicitly decoded.

One embodiment of the present invention is characterized by including layer dependency information decoding means for decoding dependent layer information that is information indicating a layer, different from a target layer, having the possibility of being referenced by the target layer, actual dependent layer information decoding means for decoding information that indicates a picture, of a layer different from the target layer, referenced by a target picture of the target layer, and reference picture set deriving means for generating at least an inter-layer reference picture set on the basis of the actual dependent layer dependency information, in which the actual layer dependency information decoding means decodes the number of actual dependent layers that indicates the number of pictures, of a layer different from the target layer, referenced by the target picture and derives an actual dependent layer list by decoding an actual dependent layer index that indicates an element of a dependent layer list from coded data in the case where the number of actual dependent layers is different from the number of dependent layers or derives the actual dependent layer list from the dependent layer list in the case where the number of actual dependent layers is the same as the number of dependent layers.

According to a moving image decoding device configured as above, the effect of reducing a coding amount is accomplished because there is no need to decode the actual dependent layer index in the case where the number of actual dependent layers is the same as the number of dependent layers.

One embodiment of the present invention is characterized by including layer dependency information decoding means for decoding dependent layer information that is information indicating a layer, different from a target layer, having the possibility of being referenced by the target layer, actual dependency flag existence flag decoding means for indicating whether to decode actual dependent layer information in a slice segment header, actual dependent layer information decoding means for decoding information that indicates a picture, of a layer different from the target layer, referenced by a target picture of the target layer, and reference picture set deriving means for generating at least an inter-layer reference picture set on the basis of the actual dependent layer dependency information, in which the actual dependent layer information decoding means decodes the actual dependent layer list RefLayerPics from coded data in the case where the actual dependency flag existence flag that is decoded by the actual dependency flag existence flag decoding means is one or derives the actual dependent layer list RefLayerPics from the dependent layer list RefLayerId in the case where the actual dependency flag existence flag is other than one.

According to a moving image decoding device configured as above, the effect of reducing a coding amount is accomplished because there is no need to decode the actual dependent layer index in the case where the actual dependency flag existence flag is zero.

One embodiment of the present invention is characterized by including layer dependency information decoding means for decoding dependent layer information that is information indicating a layer, different from a target layer, having the possibility of being referenced by the target layer, maximum actual layer number decoding means for decoding the maximum number of actual dependent layers that is the maximum number of pictures, of a layer different from the target layer, referenced by a picture of the target layer, actual dependent layer information decoding means for decoding information that indicates a picture, of a layer different from the target layer, referenced by a target picture of the target layer, and reference picture set deriving means for generating at least an inter-layer reference picture set on the basis of the actual dependent layer information, in which the actual dependent layer information decoding means decodes the syntax num_inter_layer_ref_pics_minus1 related to the number of actual dependent layers in the case where the maximum number of actual layers max_active_ref_layers is greater than one and decodes the dependent layer identifier inter_layer_pred_layer_idc[] in the case where the number of actual dependent layers is greater than or equal to one.

According to a moving image decoding device configured as above, the effect of reducing complexity is accomplished because the maximum number of actual layers can be restricted. In addition, according to the moving image decoding device configured as such, the effect of reducing a coding amount is accomplished because the actual layer dependency flag is not decoded a number of times greater than or equal to the maximum number of actual layers.

One embodiment of the present invention is characterized by including layer dependency information decoding means for decoding dependent layer information that is information indicating a layer, different from a target layer, having the possibility of being referenced by the target layer, maximum actual layer number decoding means for decoding the maximum number of actual dependent layers that is the maximum number of pictures, of a layer different from the target layer, referenced by a picture of the target layer, actual dependent layer information decoding means for decoding information that indicates a picture, of a layer different from the target layer, referenced by a target picture of the target layer, and reference picture set deriving means for generating at least an inter-layer reference picture set on the basis of the actual dependent layer information, in which the layer dependency information decoding means decodes an actual layer dependency flag that indicates whether a picture of each layer belonging to the dependent layer list is referenced by the target picture and increments the number of actual dependent layers in the case where the actual layer dependency flag is one, and the layer dependency information decoding means further decodes the actual layer dependency flag only in the case where the number of actual dependent layers is less than the maximum number of actual layers.

According to a moving image decoding device configured as above, the effect of reducing complexity is accomplished because the maximum number of actual layers can be restricted. In addition, according to the moving image decoding device configured as such, the effect of reducing a coding amount is accomplished because the actual layer dependency flag is not decoded a number of times greater than or equal to the maximum number of actual layers.

One embodiment of the present invention is characterized by including layer dependency information decoding means for decoding actual dependent layer information that is information indicating a picture, of a layer different from the target layer, referenced by the target picture, in which the actual dependent layer information decoding means decodes the number of actual dependent layers in the case where the maximum number of actual layers is greater than one and derives an actual dependent layer list by decoding an actual dependent layer index that indicates an element of a dependent layer list from coded data in the case where the number of actual dependent layers is different from the number of dependent layers or derives the actual dependent layer list from the dependent layer list in the case where the number of actual dependent layers is the same as the number of dependent layers.

One embodiment of the present invention is characterized by including maximum dependency type value decoding means for decoding a maximum layer dependency type value, dependency type decoding means for decoding a layer dependency type that has a value less than or equal to the maximum dependency type value, and reference picture set deriving means for generating an inter-layer reference picture set on the basis of the layer dependency type, in which the maximum dependency type value decoding means decodes the maximum dependency type value that has a value greater than or equal to zero, the dependency type decoding means decodes the layer dependency type from coded data in a case where the maximum dependency type value is other than zero or derives the layer dependency type as zero in a case where the maximum dependency type value is zero, and the dependency type decoding means further derives a sample dependency flag SamplePredEnableFlag and a motion dependency flag MotionPredEnableFlag according to the layer dependency type and sets the sample dependency flag SamplePredEnableFlag and the motion dependency flag MotionPredEnableFlag to one in a case where the layer dependency type is zero, the sample dependency flag SamplePredEnableFlag being a flag indicating whether a dependent layer is a sample dependent layer and the motion dependency flag MotionPredEnableFlag being a flag indicating whether a dependent layer is a motion dependent layer.

One embodiment of the present invention is characterized by including layer dependency information decoding means for decoding actual dependent layer information that is information indicating a picture, of a layer different from the target layer, referenced by a target picture, reference picture set deriving means for generating at least an inter-layer reference picture set on the basis of the actual dependent layer information, and reference picture list generating means for generating a reference picture list, in which the reference picture list generating means adds the inter-layer reference picture in a predetermined order in the case of generating the L0 reference list and adds the inter-layer reference picture in an order different from the predetermined order in the case of generating the L1 reference list.

According to a moving image decoding device configured as above, an inter-layer reference picture is stored at different positions in the L0 reference picture and in the L1 reference picture in the case where the number of inter-layer reference pictures is greater than or equal to two. In this case, one inter-layer reference picture is referenced in the L0 reference picture by a reference picture index that is smaller than that in the L1 reference picture, and conversely, another inter-layer reference picture is referenced in the L1 reference picture by a reference picture index that is smaller than that in the L0 reference picture. Since a small reference picture index is referenced with a small coding amount, the effect of reducing the coding amount of the reference picture index is accomplished according to the above description.

According to one embodiment of the present invention, the moving image decoding device is characterized by further including means for decoding an inter-layer reference list addition order flag that is used to decode a flag indicating an order of addition of an inter-layer reference picture list, in which the reference picture list generating means, in a case where the inter-layer reference list addition order flag has a certain value, adds the inter-layer reference picture in ascending order in the case of generating the L0 reference list and adds the inter-layer reference picture in descending order in the case of generating the L1 reference list and, conversely, in a case where the inter-layer reference list addition order flag does not have the value, adds the inter-layer reference picture in descending order in the case of generating the L0 reference list and adds the inter-layer reference picture in ascending order in the case of generating the L1 reference list.

According to the moving image decoding device configured as above, the effect of arranging a high-priority inter-layer reference picture in the L0 reference picture as well as changing the priority of the inter-layer reference pictures between the L0 reference picture and the L1 reference picture is accomplished.

Industrial Applicability

The present invention can be preferably applied to an image decoding device that decodes coded data into which image data is coded and to an image coding device that generates coded data into which image data is coded. In addition, the present invention can be preferably applied to the data structure of coded data that is generated by the image coding device and referenced by the image decoding device.

Reference Signs List

| 1 | IMAGE TRANSMISSION SYSTEM |
|---|---|
| 11 | IMAGE CODING DEVICE |
| 300 | IMAGE DATA DECODER |
| 400 | HEADER DECODER |
| 400A2 | HEADER DECODER |
| 400A3 | HEADER DECODER |
| 400B1 | HEADER DECODER |
| 400B2 | HEADER DECODER |
| 400C1 | HEADER DECODER |
| 400D1 | HEADER DECODER |
| 400D2 | HEADER DECODER |
| 401 | PARAMETER SET DECODER |
| 401A3 | PARAMETER SET DECODER |
| 401B1 | PARAMETER SET DECODER |
| 401C1 | PARAMETER SET DECODER |
| 401D2 | PARAMETER SET DECODER |
| 4011 | LAYER DEPENDENCY INFORMATION DECODER |
| 4011C1 | LAYER DEPENDENCY INFORMATION DECODER |
| 4012 | ACTUAL DEPENDENCY FLAG EXISTENCE FLAG DECODER |
| 4013 | MAXIMUM ACTUAL LAYER NUMBER DECODER |
| 4014 | INTER-LAYER REFERENCE LIST ADDITION ORDER FLAG DECODER |
| 402 | SLICE SEGMENT HEADER DECODER |
| 402A2 | SLICE SEGMENT HEADER DECODER |
| 402A3 | SLICE SEGMENT HEADER DECODER |
| 402B1 | SLICE SEGMENT HEADER DECODER |

| | |
|---|---|
| 402B2 | SLICE SEGMENT HEADER DECODER |
| 402D1 | SLICE SEGMENT HEADER DECODER |
| 402D2 | SLICE SEGMENT HEADER DECODER |
| 403 | ACTUAL DEPENDENT LAYER DECODER |
| 403A2 | ACTUAL DEPENDENT LAYER DECODER |
| 403A3 | ACTUAL DEPENDENT LAYER DECODER |
| 403B1 | ACTUAL DEPENDENT LAYER DECODER |
| 403B2 | ACTUAL DEPENDENT LAYER DECODER |
| 404 | REFERENCE PICTURE SET DERIVING UNIT |
| 404D1 | REFERENCE PICTURE SET DERIVING UNIT |
| 404D2 | REFERENCE PICTURE SET DERIVING UNIT |
| 101 | PREDICTED IMAGE GENERATOR |
| 102 | SUBTRACTER |
| 103 | DCT/QUANTIZATION UNIT |
| 104 | ENTROPY CODER |
| 105 | INVERSE QUANTIZATION / INVERSE DCT UNIT |
| 106 | ADDER |
| 108 | PREDICTION PARAMETER MEMORY (FRAME MEMORY) |
| 109 | REFERENCE PICTURE MEMORY (FRAME MEMORY) |
| 110 | CODING PARAMETER DETERMINER |
| 111 | PREDICTION PARAMETER CODER |
| 112 | INTER-PREDICTION PARAMETER CODER |
| 113 | INTRA-PREDICTION PARAMETER CODER |
| 1000 | IMAGE DATA CODER |
| 1400 | HEADER CODER |
| 1401 | PARAMETER SET CODER |
| 1402 | SLICE SEGMENT HEADER CODER |
| 21 | NETWORK |
| 31 | IMAGE DECODING DEVICE |
| 31A2 | IMAGE DECODING DEVICE |
| 31A3 | IMAGE DECODING DEVICE |
| 31B1 | IMAGE DECODING DEVICE |
| 31B2 | IMAGE DECODING DEVICE |
| 31C1 | IMAGE DECODING DEVICE |
| 31D1 | IMAGE DECODING DEVICE |
| 31D2 | IMAGE DECODING DEVICE |
| 301 | ENTROPY DECODER |
| 302 | PREDICTION PARAMETER DECODER |
| 303 | INTER-PREDICTION PARAMETER DECODER |
| 304 | INTRA-PREDICTION PARAMETER DECODER |
| 306 | REFERENCE PICTURE MEMORY (FRAME MEMORY) |
| 307 | PREDICTION PARAMETER MEMORY (FRAME MEMORY) |
| 308 | PREDICTED IMAGE GENERATOR |
| 309 | INTER-PREDICTION IMAGE GENERATOR |
| 310 | INTRA-PREDICTION IMAGE GENERATOR |
| 311 | INVERSE QUANTIZATION / INVERSE DCT UNIT |
| 312 | ADDER |
| 41 | IMAGE DISPLAY APPARATUS |

**Claims**

1. A moving image decoding device comprising:

layer dependency information decoding means for decoding dependent layer information that indicates a dependency relationship between a target layer and a reference layer;
actual dependent layer information decoding means for decoding actual dependent layer information that indicates a picture of the reference layer; and

reference picture set deriving means for generating at least an inter-layer reference picture set on the basis of the actual dependent layer information,

wherein the actual dependent layer information decoding means decodes the number of actual dependent layers that indicates the number of pictures of the reference layer and decodes an actual dependent layer index that indicates an element of a dependent layer list from coded data only in a case where the number of actual dependent layers is different from the number of dependent layers.

**2.** A moving image decoding device comprising:

layer dependency information decoding means for decoding dependent layer information that indicates a dependency relationship between a target layer and a reference layer;

actual dependency flag existence flag decoding means for indicating whether to decode actual dependent layer information in a slice segment header;

actual dependent layer information decoding means for decoding actual dependent layer information that indicates a picture of the reference layer; and

reference picture set deriving means for generating at least an inter-layer reference picture set on the basis of the actual dependent layer information,

wherein the actual dependent layer information decoding means decodes an actual dependent layer list from coded data only in a case where the actual dependency flag existence flag decoded by the actual dependency flag existence flag decoding means has a value that indicates existence.

**3.** A moving image decoding device comprising:

layer dependency information decoding means for decoding dependent layer information that indicates a dependency relationship between a target layer and a reference layer;

actual dependent layer information decoding means for decoding information that indicates a picture of the reference layer; and

reference picture set deriving means for generating at least an inter-layer reference picture set on the basis of the actual dependent layer information,

wherein the layer dependency information decoding means decodes an actual layer dependency flag that indicates whether a picture of each layer belonging to a dependent layer list is referenced by a target picture.

**4.** The moving image decoding device according to Claim 3, further comprising:

inter-layer prediction validity flag deriving means for deriving an inter-layer prediction validity flag that indicates whether the target picture references a picture of the reference layer,

wherein the inter-layer prediction validity flag deriving means sets the inter-layer prediction validity flag to one in a case where at least one actual layer dependency flag is one or to zero otherwise.

**5.** A moving image coding device comprising:

layer dependency information decoding means for coding dependent layer information that indicates a dependency relationship between a target layer and a reference layer; and

actual dependent layer information coding means for coding actual dependent layer information that indicates a picture of the reference layer,

wherein the actual dependent layer information coding means codes an actual layer dependency flag that indicates whether a picture of each layer belonging to a dependent layer list is referenced by a target picture.

**6.** A moving image decoding device comprising:

layer dependency information decoding means for decoding dependent layer information that indicates a dependency relationship between a target layer and a reference layer;

maximum actual layer number decoding means for decoding the maximum number of actual dependent layers that is the maximum number of pictures, of the reference layer, referenced by a picture of the target layer;

actual dependent layer information decoding means for decoding actual dependent layer information that indicates a picture of the reference layer; and

reference picture set deriving means for generating at least an inter-layer reference picture set on the basis of the actual dependent layer information,

wherein the layer dependency information decoding means decodes an actual dependent layer that indicates an element of a dependent layer list having a size less than or equal to the maximum number of actual layers.

7. The moving image decoding device according to Claim 6,
   wherein the layer dependency information decoding means decodes the number of actual dependent layers in a case where the maximum number of actual layers is greater than one and decodes an actual dependent layer index that indicates an element of the dependent layer list in a case where the number of actual dependent layers is greater than or equal to one.

8. The moving image decoding device according to Claim 6,
   wherein the layer dependency information decoding means decodes an actual layer dependency flag that indicates whether a picture of each layer belonging to the dependent layer list is referenced by a target picture and increments the number of actual dependent layers in a case where the actual layer dependency flag is one, and
   the actual dependent layer information decoding means decodes the actual layer dependency flag only in a case where the number of actual dependent layers is less than the maximum number of actual layers.

9. A moving image decoding device comprising:

   maximum dependency type value decoding means for decoding a maximum layer dependency type value;
   dependency type decoding means for decoding a layer dependency type that has a value less than or equal to the maximum dependency type value; and
   reference picture set deriving means for generating an inter-layer reference picture set on the basis of the layer dependency type,
   wherein the maximum dependency type value decoding means decodes the maximum dependency type value that has a value greater than or equal to zero,
   the dependency type decoding means decodes the layer dependency type from coded data in a case where the maximum dependency type value is other than zero or derives the layer dependency type as zero in a case where the maximum dependency type value is zero, and
   the dependency type decoding means further derives a sample dependency flag SamplePredEnableFlag and a motion dependency flag MotionPredEnableFlag according to the layer dependency type and sets the sample dependency flag SamplePredEnableFlag and the motion dependency flag MotionPredEnableFlag to one in a case where the layer dependency type is zero, the sample dependency flag SamplePredEnableFlag being a flag indicating whether a dependent layer is a sample dependent layer and the motion dependency flag MotionPredEnableFlag being a flag indicating whether a dependent layer is a motion dependent layer.

10. A moving image decoding device comprising:

    layer dependency information decoding means for decoding actual dependent layer information that is information indicating a picture of a reference layer referenced by a target picture;
    reference picture set deriving means for generating at least an inter-layer reference picture set on the basis of the actual dependent layer information; and
    reference picture list generating means for generating a reference picture list,
    wherein the reference picture list generating means adds an inter-layer reference picture in a predetermined order in a case of generating an L0 reference list and adds the inter-layer reference picture in an order different from the predetermined order in a case of generating an L1 reference list.

11. The moving image decoding device according to Claim 10, further comprising:

    means for decoding an inter-layer reference list addition order flag that is used to decode a flag indicating an order of addition of an inter-layer reference picture list,
    wherein the reference picture list generating means, in a case where the inter-layer reference list addition order flag has a certain value, adds the inter-layer reference picture in ascending order in the case of generating the L0 reference list and adds the inter-layer reference picture in descending order in the case of generating the L1 reference list and, conversely, in a case where the inter-layer reference list addition order flag does not have the value, adds the inter-layer reference picture in descending order in the case of generating the L0 reference list and adds the inter-layer reference picture in ascending order in the case of generating the L1 reference list.

# FIG. 1

# FIG. 2

(a) SEQUENCE LAYER

| VPS | SPS#0 | SPS#1 | PPS#0 | PPS#1 | SEI | PICT #0 | PICT #1 |

(b) PICTURE LAYER

| SLICE 0 | SLICE 1 | ............................. | SLICE NS−1 |

(c) SLICE LAYER

| SLICE HEADER (SH) | SLICE DATA (SDATA) |

(d) SLICE DATA LAYER

| CODING TREE UNIT (CTU) | CTU | CTU | CTU | CTU | CTU | CTU | CTU | CTU |

(e) CODING TREE LAYER

CTU (0)
├ CTU (10)
├ CTU (11)
├ CTU (12)
└ CTU (13)

CU (10) | CU (12)

CTU (11):
- CU (10)
- CTU (110) → CU (110)
- CTU (111) → CU (111)
- CTU (112) → CU (112)
- CTU (113) → CU (113)

CU (12):
- CTU (120) → CU (120)
- CTU (121) → CU (121)
- CTU (122) → CU (122)
- CTU (123) → CU (123)

CTU (13):
- CTU (130)
- CTU (131) → CU (131)
- CTU (132) → CU (132)
- CTU (133) → CU (133)

(f) CODING UNIT LAYER

| CUH | PU#0 | PU#1 | PU#2 | PU#3 | TU#0 | TU#1 | TU#2 | TU#3 |

# FIG. 3

refIdxLX

| P0 | P1 | Q2 | P3 | P4 |

601

# FIG. 4

# FIG. 5

31

**400**

HEADER DECODER

Te

**401**

PARAMETER
SET DECODER

**402**

SLICE SEGMENT HEADER DECODER

**403**

ACTUAL DEPENDENT
LAYER DECODER

**404**

REFERENCE PICTURE
SET DERIVING UNIT

PARAMETER SET
INFORMATION

SLICE SEGMENT HEADER
INFORMATION

REFERENCE PICTURE LIST

**300**

IMAGE DATA DECODER

Td

# FIG. 6

300

HEADER DECODER

301

ENTROPY DECODER

311

INVERSE QUANTIZATION/ INVERSE DCT UNIT

ADDER

312

DECODED VIEWPOINT IMAGE Td

DECODING INSTRUCTION SIGNAL

VALUE OF SYNTAX ELEMENT

PREDICTED PICTURE BLOCK P

PREDICTION PARAMETER DECODER

INTER-PREDICTION PARAMETER DECODER

303

INTRA-PREDICTION PARAMETER DECODER

304

302

PREDICTED IMAGE GENERATOR

INTER-PREDICTION IMAGE GENERATOR

309

INTRA-PREDICTION IMAGE GENERATOR

310

308

PREDICTION PARAMETER

PREDICTION PARAMETER

PREDICTION PARAMETER MEMORY

307

REFERENCE PICTURE MEMORY

306

REFERENCE PICTURE MANAGER 500

# FIG. 7

11

**1400**

HEADER CODER

**1401**

PARAMETER SET CODER

**1402**

SLICE SEGMENT HEADER CODER

HI

Te

**500**

REFERENCE PICTURE MANAGER

**1000**

IMAGE DATA CODER

VD

T

# FIG. 8

# FIG. 9

| vps_extension( ) { | Descriptor |
|---|---|
|     while( !byte_aligned( ) ) | |
|         vps_extension_byte_alignment_reserved_one_bit | u(1) |
| **avc_base_layer_flag** | u(1) |
| **splitting_flag** | u(1) |
|     for( i = 0, NumScalabilityTypes = 0; i < 16; i++ ) { | |
|         **scalability_mask[ i ]** | u(1) |
|         NumScalabilityTypes += scalability_mask[ i ] | |
|     } | |
|     for( j = 0; j < ( NumScalabilityTypes − splitting_flag ); j++ ) | |
|         **dimension_id_len_minus1[ j ]** | u(3) |
|     **vps_nuh_layer_id_present_flag** | u(1) |
|     for( i = 0; i <= vps_max_layers_minus1; i++ ) { | |
|         if( vps_nuh_layer_id_present_flag && i > 0 ) | |
|             **layer_id_in_nuh[ i ]** | u(6) |
|         if( !splitting_flag ) | |
|             for( j = 0; j < NumScalabilityTypes; j++ ) | |
|                 **dimension_id[ i ][ j ]** | u(v) |
|     } | |
|     for( i = 1; i <= vps_max_layers_minus1; i++ ) | |
|         for( j = 0; j < i; j++ ) | |
|             **direct_dependency_flag[ i ][ j ]** | u(1) |
|     for( i = 0; i< vps_max_layers_minus1; i++ ) | |
|         **max_tid_il_ref_pics_plus1[ i ]** | u(3) |
|     **vps_number_layer_sets_minus1** | u(10) |
|     **vps_num_profile_tier_level_minus1** | u(6) |
| ... | |
|     **max_one_active_ref_layer_flag** | u(1) |
|     **direct_dep_type_len_minus2** | ue(v) |
|     for( i = 1; i <= vps_max_layers_minus1; i++ ) | |
|         for( j = 0; j < i; j++ ) | |
|             if( direct_dependency_flag[ i ][ j ] ) | |
|                 **direct_dependency_type[ i ][ j ]** | u(v) |
|     **vps_shvc_reserved_zero_flag** | u(1) |
| } | |

# FIG. 10

| slice_segment_header( ) { | Descripto r |
|---|---|
| **first_slice_segment_in_pic_flag** | u(1) |
| … | |
| if( !dependent_slice_segment_flag ) { | |
| … | |
| if( nuh_layer_id > 0 && NumDirectRefLayers[ nuh_layer_id ] > 0 ) { | |
| **inter_layer_pred_enabled_flag** | u(1) |
| if( inter_layer_pred_enabled_flag && NumDirectRefLayers[ nuh_layer_id ] > 1) { | |
| if( !max_one_active_ref_layer_flag ) | |
| **num_inter_layer_ref_pics_minus1** | u(v) |
| for( i = 0; i < NumActiveRefLayerPics; i++ ) | |
| **inter_layer_pred_layer_idc[ i ]** | u(v) |
| } | |
| } | |
| if(NumActiveSamplePredRefLayers > 0 ) | |
| **inter layer sample pred only flag** | u(1) |
| | |
| if( slice_type == P \|\| slice_type == B ) { | |
| | |
| if( slice_temporal_mvp_enabled_flag ) { | |
| if( nuh_layer_id > 0 && NumActiveMotionPredRefLayers > 0 ) | |
| **alt_collocated_indication_flag** | u(1) |
| if( alt_collocated_indication_flag ) | |
| if( NumActiveMotionPredRefLayers > 1 ) | |
| **collocated_ref_layer_idx** | ue(v) |
| else { | |
| if( slice_type == B ) | |
| **collocated from l0 flag** | u(1) |
| if( ( collocated_from_l0_flag && num_ref_idx_l0_active_minus1 > 0 ) \|\| ( !collocated_from_l0_flag && num_ref_idx_l1_active_minus1 > 0 ) ) | |
| **collocated ref idx** | ue(v) |
| } | |
| | |

# FIG. 11

nuh_layer_id    0   1   2   3     0   1   2   3

dependency_flag    1    0    1    1   ⇨

DEPENDENT LAYER

PrefLayers[][]={0, 2, 3}

NumDirectRefLayers = 3

DECODE FROM PARAMETER SET

# FIG. 12

nuh_layer_id    0    1    2    3       0    1    2    3

direct_dependency_flag             1    0    1

DEPENDENT LAYER

RefLayers[][]={0, 2, 3}

NumDirectRefLayers=3

DEPENDENT LAYER

RefPicLayerId[][]={0, 3}

NumActiveRefLayerPics = 2

DECODE FROM
PARAMETER SET

DECODE FROM
SLICE SEGMENT HEADER

# FIG. 13

nuh_layer_id   0   1   2   3          0   1   2   3

ActiveSamplePredRefLayerId[][]={0, 3}

dependency_type

SAMPLE
DEPENDENCY FLAG
SamplePredEnableFlag    1   0   0   1

NumActiveSamplePredRefLayers = 2

MOTION
DEPENDENCY FLAG
MotionPredEnableFlag    1   0   1   1

DECODE FROM
PARAMETER SET

DECODE FROM
SLICE SEGMENT HEADER

# FIG. 14

| slice_segment_header( ) { | Descr iptor |
|---|---|
| … | |
| | |
| If( nuh_layer_id > 0 && NumDirectRefLayers[ nuh_layer_id ] > 0 ) { | |
| inter_layer_pred_enabled_flag | u(1) |
| if( inter_layer_pred_enabled_flag && NumDirectRefLayers[ nuh_layer_id ] > 1) { | |
| for( i = 0; i < NumDirectRefLayers[ nuh_layer_id ] ; i++) | |
| **active_direct_dependency_flag[ i ]** | u(1) |
| } | |
| } | |
| if( NumSamplePredRefLayers[ nuh_layer_id ] > 0 && NumActiveRefLayerPics > 0 ) | |

# FIG. 15

```
NumActiveRefLayerPics = 0
for( i = 0, j = 0; i < NumDirectRefLayers[nuh_layer_id] ; i++)
{
if ( active_direct_dependency_flag[i] )
{
    // (a)
RefPicLayerId[ j++ ] = RefLayerId[nuh_layer_id][i]
    // (b)
if( SamplePredEnabledFlag[nuh_layer_id][i] )
{
ActiveSamplePredRefLayerId[k++] = RefLayerId[nuh_layer_id][i]
}
    // (c)
if( MotionPredEnabledFlag[nuh_layer_id][i] )
{
ActiveMotionPredRefLayerId[l++] = RefLayerId[nuh_layer_id][i]
}
}
}
NumActiveRefLayerPics = j;
NumActiveSamplePredRefLayers = k
NumActiveMotionPredRefLayers = l
```

# FIG. 16

(a)

```
for( i = 0; i < NumActiveSamplePredRefLayers; i++ ) {
        if( REFERENCE PICTURE picX IN WHICH nuh_layer_id MATCHES ActiveSamplePredRefLayerId[ i ] EXISTS IN
DPB ){
                RefPicSetInterLayer[ i ] = picX
                MARK RefPicSetInterLayer[ i ] AS USED FOR LONG-TERM PREDICTION REFERENCE "used for long-term reference"
        } else
                RefPicSetInterLayer[ i ] = NO REFERENCE PICTURE "no reference picture"
}
```

(b)

```
NumPocTotalCurr += NumActiveSamplePredRefLayers
```

# FIG. 17

(a)

If NumActiveSamplePredRefLayers[ nuh_layer_id ] is greater than 0,
    InterRefEnabledInRPLFlag is set equal to !inter_layer_sample_pred_only_flag.
Otherwise,
    InterRefEnabledInRPLFlag is set equal to 1

(b)

```
if( InterRefEnabledInRPLFlag ) {
    for( i = 0; i < NumPocStCurrBefore  &&  rIdx < NumRpsCurrTempList0; rIdx++, i++ )
        RefPicListTemp0[ rIdx ] = RefPicSetStCurrBefore[ i ]              (S302)
    for( i = 0;  i < NumPocStCurrAfter  &&  rIdx < NumRpsCurrTempList0; rIdx++, i++ )
        RefPicListTemp0[ rIdx ] = RefPicSetStCurrAfter[ i ]              (S303)
    for( i = 0; i < NumPocLtCurr  &&  rIdx < NumRpsCurrTempList0; rIdx++, i++ )
        RefPicListTemp0[ rIdx ] = RefPicSetLtCurr[ i ]                  (S304)
}
for( i = 0; i< NumActiveRefLayerPics; rIdx++, i++ )
    RefPicListTemp0[ rIdx ] = RefPicSetInterLayer[ i ]                  (S305)
```

EP 3 021 589 A1

# FIG. 18

| slice_segment_header( ) { | Descriptor |
|---|---|
| ... | |
| If( nuh_layer_id > 0 && NumDirectRefLayers[ nuh_layer_id ] > 0 ) { | |
| for( i = 0; i < NumDirectRefLayers[ nuh_layer_id ] ; i++) | |
| **active_direct_dependency_flag[ i ]** | u(1) |
| } | |
| } | |
| if( NumSamplePredRefLayers[ nuh_layer_id ] > 0 && NumActiveRefLayerPics > 0 ) | |

# FIG. 19

31A3

400A3

HEADER DECODER

Te

PARAMETER
SET DECODER

401

SLICE SEGMENT HEADER DECODER

402A3

ACTUAL DEPENDENT
LAYER DECODER

403A3

REFERENCE PICTURE
SET DERIVING UNIT

404

PARAMETER SET
INFORMATION

SLICE SEGMENT HEADER
INFORMATION

REFERENCE PICTURE LIST

300

IMAGE DATA DECODER

Td

## FIG. 20

(a)

```
for( i = 0, k = 0; i < NumActiveRefLayerPics; i++) {
    if( SamplePredEnabledFlag[ nuh_layer_id ][ inter_layer_pred_layer_idc[ i ] ] )
        ActiveSamplePredRefLayerId[ k++ ] = RefLayerId[ nuh_layer_id ][ inter_layer_pred_layer_idc[ i ] ]
}
NumActiveSamplePredRefLayers = k
```

(b)

```
for( i = 0, j = 0; i < NumActiveRefLayerPics; i++) {
    if( SamplePredEnabledFlag[ nuh_layer_id ][ inter_layer_pred_layer_idc[ i ] ] )
    else if( MotionPredEnabledFlag[ nuh_layer_id ][ inter_layer_pred_layer_idc[ i ] ] )
        ActiveMotionPredRefLayerId[ j++ ] =
            RefLayerId[ nuh_layer_id ][ inter_layer_pred_layer_idc[ i ] ]
}
NumActiveMotionPredRefLayers = j
```

EP 3 021 589 A1

# FIG. 21

```
NumActiveRefLayerPics = 0
inter_layer_pred_enabled_flag = 0
for( i = 0, j = 0; i < NumDirectRefLayers[ nuh_layer_id ] ; i++)
{
  if ( active_direct_dependency_flag[i] )
  {
    // (a)
    RefPicLayerId[ j++ ] = RefLayerId[ nuh_layer_id ][i]
    inter_layer_pred_enabled_flag = 1
  // (b)
    if( SamplePredEnabledFlag[ nuh_layer_id ][ i ] )
    {
      ActiveSamplePredRefLayerId[ k++ ] = RefLayerId[ nuh_layer_id ][ i ]
    }
  // (c)
    if( MotionPredEnabledFlag[ nuh_layer_id ][ i ] )
    {
      ActiveMotionPredRefLayerId[ l++ ] = RefLayerId[ nuh_layer_id ][ i ]
    }
  }
}
NumActiveRefLayerPics = j;
NumActiveSamplePredRefLayers = k
NumActiveMotionPredRefLayers = l
```

# FIG. 22

| slice_segment_header( ) { | Descr iptor |
|---|---|
| ... | |
| if( nuh_layer_id > 0 && NumDirectRefLayers[ nuh_layer_id ] > 0 ) { | |
| **inter_layer_pred_enabled_flag** | u(1) |
| if( inter_layer_pred_enabled_flag && NumDirectRefLayers[ nuh_layer_id ] > 1) { | |
| if( !max_one_active_ref_layer_flag ) | |
| **num_inter_layer_ref_pics_minus1** | U(v) |
| if (NumActiveRefLayerPics < NumDirectRefLayers[ nuh_layer_id ] ) | |
| for( i = 0; i < NumActiveRefLayerPics; i++ ) | |
| **inter_layer_pred_layer_idc[ i ]** | u(v) |
| else | |
| for( i = 0; i < NumActiveRefLayerPics; i++ ) | |
| inter_layer_pred_layer_idc[ i ] = i | |
| } | |

# FIG. 23

31A4

400A4

HEADER DECODER

Te

401
A4

PARAMETER
SET DECODER

402A4

SLICE SEGMENT HEADER DECODER

403A4

ACTUAL DEPENDENT
LAYER DECODER

404

REFERENCE PICTURE
SET DERIVING UNIT

PARAMETER SET
INFORMATION

SLICE SEGMENT HEADER
INFORMATION

REFERENCE PICTURE LIST

300

IMAGE DATA DECODER

Td

# FIG. 24

| vps_extension( ) { | Des cript or |
|---|---|
|  |  |
| active_dependency_present_flag | u(1) |
| } |  |

# FIG. 25

| slice_segment_header( ) { | Descriptor |
|---|---|
| … | |
| if( nuh_layer_id > 0  && NumDirectRefLayers[ nuh_layer_id ] > 0 && active_dependency_present_flag ) { | |
| **inter_layer_pred_enabled_flag** | u(1) |
| if( inter_layer_pred_enabled_flag  && NumDirectRefLayers[ nuh_layer_id ] > 1) { | |
| if( !max_one_active_ref_layer_flag ) | |
| **num_inter_layer_ref_pics_minus1** | u(v) |
| for( i = 0; i < NumActiveRefLayerPics; i++ ) | |
| **inter_layer_pred_layer_idc[ i ]** | u(v) |
| else | |
| for( i = 0; i < NumActiveRefLayerPics; i++ ) | |
| inter_layer_pred_layer_idc[ i ] = i | |
| } | |

# FIG. 26

31B1

400B1

HEADER DECODER

Te

401B1

PARAMETER
SET DECODER

402B1

SLICE SEGMENT HEADER DECODER

403B1

ACTUAL DEPENDENT
LAYER DECODER

404

REFERENCE PICTURE
SET DERIVING UNIT

PARAMETER SET
INFORMATION

SLICE SEGMENT HEADER
INFORMATION

REFERENCE PICTURE LIST

300

IMAGE DATA DECODER

Td

# FIG. 27

# FIG. 28

| vps_extension( ) { | Descriptor |
|---|---|
| **max_active_ref_layers** | ue(v) |

# FIG. 29

| slice_segment_header( ) { | Descriptor |
|---|---|
| ... | |
|   if( nuh_layer_id > 0 && NumDirectRefLayers[ nuh_layer_id ] > 0 ) { | |
|     **inter_layer_pred_enabled_flag** | u(1) |
|     if( inter_layer_pred_enabled_flag && NumDirectRefLayers[ nuh_layer_id ] > 1) { | |
|       if(max_active_ref_layers > 1 ) | |
|       **num_inter_layer_ref_pics_minus1** | u(v) |
|       for( i = 0; i < NumActiveRefLayerPics; i++ ) | |
|       **inter_layer_pred_layer_idc[ i ]** | u(v) |
| | |

# FIG. 30

| slice_segment_header( ) { | Descriptor |
|---|---|
| . . . | |
| If( nuh_layer_id > 0 && NumDirectRefLayers[ nuh_layer_id ] > 0 ) { | |
| NumActiveRefLayerPics = 0 | |
| for( I = 0; i < NumDirectRefLayers[ nuh_layer_id ] && NumActiveRefLayerPics < max_active_dependent_layers; i++) | |
| **active_direct_dependency_flag[ i ]** | u(1) |
| if (active_direct_dependency_flag[ i ]) | |
| NumActiveRefLayerPics++ | |
| } | |
| } | |
| if( NumSamplePredRefLayers[ nuh_layer_id ] > 0 && NumActiveRefLayerPics > 0 ) | |

# FIG. 31

31C1

400C1

HEADER DECODER

Te

401C0

PARAMETER
SET DECODER

402

SLICE SEGMENT HEADER DECODER

403

ACTUAL DEPENDENT
LAYER DECODER

404

REFERENCE PICTURE
SET DERIVING UNIT

PARAMETER SET
INFORMATION

SLICE SEGMENT HEADER
INFORMATION

REFERENCE PICTURE LIST

300

IMAGE DATA DECODER

Td

# FIG. 32

| vps_extension( ) { | Descr iptor |
|---|---|
| **direct_dep_type_len** | ue(v) |
| for( i = 1; i <= vps_max_layers_minus1; i++ ) | |
| for( j = 0; j < i; j++ ) | |
| if( direct_dependency_flag[ i ][ j ] && direct_d ep_type_len > 0) | |
| **direct_dependency_type[ i ][ j ]** | u(v) |
| else | |
| direct_dependency_type[ i ][ j ] = 0 | |
| | |

# FIG. 33

(a)

| direct_depenency_type | SAMPLE DEPENDENCY FLAG SamplePredEnableFlag | MOTION DEPENDENCY FLAG MotionPredEnableFlag |
|---|---|---|
| 0 | 1 | 1 |
| 1 | 0 | 1 |
| 2 | 1 | 0 |
| ... | | |

(b)

```
for( i = 1; i <= vps_max_layers_minus1; i++ ) {
    iNuhLId = layer_id_in_nuh[ i ]
      for( j = 0; j < i; j++ )
        if( direct_dependency_flag[ i ][ j ] ) {
            RefLayerId[ iNuhLId ][ NumDirectRefLayers[ iNuhLId ]++ ] = layer_id_in_nuh[ j ]
            SamplePredEnabledFlag[ iNuhLId ][ j ] = ( ( 3 − (direct_dependency_type[ i ][ j ]&3) )
& 1 )
            NumSamplePredRefLayers[ iNuhLId ] += SamplePredEnabledFlag[ iNuhLId ][ j ]
            MotionPredEnabledFlag[ iNuhLId ][ j ] = ( ( ( 3 − (direct_dependency_type[ i ][ j ]&3) )
& 2 ) >> 1 )
            NumMotionPredRefLayers[ iNuhLId ] += MotionPredEnabledFlag[ iNuhLId ][ j ]
        }
}
```

EP 3 021 589 A1

# FIG. 34

31D1

400D1

HEADER DECODER

Te

PARAMETER SET DECODER — 401

SLICE SEGMENT HEADER DECODER — 402D1

ACTUAL DEPENDENT LAYER DECODER — 403

REFERENCE PICTURE SET DERIVING UNIT — 404 D1

PARAMETER SET INFORMATION

SLICE SEGMENT HEADER INFORMATION

REFERENCE PICTURE LIST

IMAGE DATA DECODER — 300

Td

# FIG. 35

31D2

400D2

HEADER DECODER

Te

401D2

PARAMETER
SET DECODER

402D2

SLICE SEGMENT HEADER DECODER

403

ACTUAL DEPENDENT
LAYER DECODER

404
D2

REFERENCE PICTURE
SET DERIVING UNIT

PARAMETER SET
INFORMATION

SLICE SEGMENT HEADER
INFORMATION

REFERENCE PICTURE LIST

300

IMAGE DATA DECODER

Td

FIG. 36

```
if( InterRefEnabledInRPLFlag ) {
    for( i = 0; i < NumPocStCurrBefore  &&  rIdx < NumRpsCurrTempList0; rIdx++, i++ )      (S302)
        RefPicListTemp0[ rIdx ] = RefPicSetStCurrBefore[ i ]
    for( i = 0;  i < NumPocStCurrAfter  &&  rIdx < NumRpsCurrTempList0; rIdx++, i++ )       (S303)
        RefPicListTemp0[ rIdx ] = RefPicSetStCurrAfter[ i ]
    for( i = 0; i < NumPocLtCurr  &&  rIdx < NumRpsCurrTempList0; rIdx++, i++ )             (S304)
        RefPicListTemp0[ rIdx ] = RefPicSetLtCurr[ i ]
}
for( i = 0; i< NumActiveRefLayerPics; rIdx++, i++ )                                          (S305)
    RefPicListTemp0[ rIdx ] = RefPicSetInterLayer[ i ]
```

EP 3 021 589 A1

## FIG. 37

```
if( InterRefEnabledInRPLFlag ) {
    for( i = 0; i < NumPocStCurrBefore  &&  rIdx < NumRpsCurrTempList1; rIdx++, i++ )      (S303)
        RefPicListTemp1[ rIdx ] = RefPicSetStCurrAfter[ i ]
    for( i = 0;  i < NumPocStCurrAfter  &&  rIdx < NumRpsCurrTempList1; rIdx++, i++ )       (S302)
        RefPicListTemp1[ rIdx ] = RefPicSetStCurrBefore[ i ]
    for( i = 0; i < NumPocLtCurr  &&  rIdx < NumRpsCurrTempList1; rIdx++, i++ )
        RefPicListTemp1[ rIdx ] = RefPicSetLtCurr[ i ]                                       (S304)
}
for( i = 0; i< NumActiveRefLayerPics; rIdx++, i++ )
    RefPicListTemp1[ rIdx ] = RefPicSetInterLayer[NumActiveRefLayerPics - i - 1 ]           (S305D1L1)
```

EP 3 021 589 A1

# FIG. 38

```
if( InterRefEnabledInRPLFlag ) {
    for( i = 0; i < NumPocStCurrBefore  &&  rIdx < NumRpsCurrTempList1; rIdx++, i++ )      (S303)
        RefPicListTemp1[ rIdx ] = RefPicSetStCurrAfter [ i ]
    for( i = 0;  i < NumPocStCurrAfter  &&  rIdx < NumRpsCurrTempList1; rIdx++, i++ )      (S302)
        RefPicListTemp1[ rIdx ] = RefPicSetStCurrBefore[ i ]
    for( i = 0; i < NumPocLtCurr  &&  rIdx < NumRpsCurrTempList1; rIdx++, i++ )           (S304)
        RefPicListTemp1[ rIdx ] = RefPicSetLtCurr[ i ]
}
for( i = 0; i< NumActiveRefLayerPics && i < 2; rIdx++, i++ )
    RefPicListTemp1[ rIdx ] = RefPicSetInterLayer[ 1 - i ]                                (S305D1L1'
for( i< NumActiveRefLayerPics; rIdx++, i++ )                                              ')
    RefPicListTemp1[ rIdx ] = RefPicSetInterLayer[ i ]
```

EP 3 021 589 A1

# FIG. 39

| pps_extension( ) { | Desc ripto r |
|---|---|
| **inter_layer_pic_list_order_flag** | u(1) |

# FIG. 40

```
if( InterRefEnabledInRPLFlag ) {
    for( i = 0; i < NumPocStCurrBefore  &&  rIdx < NumRpsCurrTempList0; rIdx++, i++ )      (S302)
        RefPicListTemp0[ rIdx ] = RefPicSetStCurrBefore[ i ]
    for( i = 0;  i < NumPocStCurrAfter  &&  rIdx < NumRpsCurrTempList0; rIdx++, i++ )       (S303)
        RefPicListTemp0[ rIdx ] = RefPicSetStCurrAfter[ i ]
    for( i = 0; i < NumPocLtCurr  &&  rIdx < NumRpsCurrTempList0; rIdx++, i++ )
        RefPicListTemp0[ rIdx ] = RefPicSetLtCurr[ i ]                                      (S304)
}
if (inter_layer_pic_list_order_flag == 0) {
    for( i = 0; i< NumActiveRefLayerPics; rIdx++, i++ )
        RefPicListTemp0[ rIdx ] = RefPicSetInterLayer[ i ]
}
else
{
 for( i = 0; i< NumActiveRefLayerPics; rIdx++, i++ )                                        (S305D2)
        RefPicListTemp0[ rIdx ] = RefPicSetInterLayer[ i ]
}
```

## FIG. 41

```
if( InterRefEnabledInRPLFlag ) {
    for( i = 0; i < NumPocStCurrBefore  &&  rIdx < NumRpsCurrTempList1; rIdx++, i++ )      (S303)
        RefPicListTemp1[ rIdx ] = RefPicSetStCurrAfter[ i ]
    for( i = 0;  i < NumPocStCurrAfter  &&  rIdx < NumRpsCurrTempList1; rIdx++, i++ )      (S302)
        RefPicListTemp1[ rIdx ] = RefPicSetStCurrBefore[ i ]
    for( i = 0; i < NumPocLtCurr  &&  rIdx < NumRpsCurrTempList1; rIdx++, i++ )            (S304)
        RefPicListTemp1[ rIdx ] = RefPicSetLtCurr[ i ]
}
if (inter_layer_pic_list_order_flag == 0) {
    for( i = 0; i< NumActiveRefLayerPics; rIdx++, i++ )
        RefPicListTemp1[ rIdx ] = RefPicSetInterLayer[ NumActiveRefLayerPics - i - 1 ]
}
else
{
 for( i = 0; i< NumActiveRefLayerPics; rIdx++, i++ )                                      (S305D2L1)
        RefPicListTemp1[ rIdx ] = RefPicSetInterLayer[ i ]
}
```

EP 3 021 589 A1

## INTERNATIONAL SEARCH REPORT

| International application No. |
|---|
| PCT/JP2014/068169 |

**A. CLASSIFICATION OF SUBJECT MATTER**
*H04N19/70(2014.01)i, H04N19/30(2014.01)i*

According to International Patent Classification (IPC) or to both national classification and IPC

**B. FIELDS SEARCHED**

Minimum documentation searched (classification system followed by classification symbols)
H04N19/00-19/98

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| E,X | WO 2014/104725 A1 (ELECTRONICS AND TELECOMMUNICATIONS RESEARCH INSTITUTE), 03 July 2014 (03.07.2014), page 27 (Family: none) | 1 |
| P,X | Sachin Deshpande, "Comments On SHVC and MV-HEVC", Joint Collaborative Team on Video Coding (JCT-VC) of ITU-T SG 16 WP 3 and ISO/IEC JTC 1/SC 29/WG 11 14th Meeting: Vienna, AT, 25 July - 2 Aug. 2013, [JCTVC-N0195] | 1 |
| P,X | Yong He, Xiaoyu Xiu, Yan Ye, Yuwen He, "On SHVC High Level Syntax", Joint Collaborative Team on Video Coding (JCT-VC) of ITU-T SG 16 WP 3 and ISO/IEC JTC 1/SC 29/WG 11 14th Meeting: Vienna, AT, 25 July - 2 Aug. 2013, [JCTVC-N0217r1] | 1 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 September, 2014 (24.09.14) | 07 October, 2014 (07.10.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

## INTERNATIONAL SEARCH REPORT

International application No.

PCT/JP2014/068169

| C (Continuation). | DOCUMENTS CONSIDERED TO BE RELEVANT | |
|---|---|---|
| Category* | Citation of document, with indication, where appropriate, of the relevant passages | Relevant to claim No. |
| P,X | Jun Xu, Ali Tabatabai, Ohji Nakagami, Teruhiko Suzuki, "MV-HEVC/SHVC HLS: On inter-layer prediction related syntax", Joint Collaborative Team on Video Coding (JCT-VC) of ITU-T SG 16 WP 3 and ISO/IEC JTC 1/SC 29/WG 11 14th Meeting: Vienna, AT, 25 July - 2 Aug. 2013, [JCTVC-N0081_r1] | 1 |
| A | Jianle Chen, Jill Boyce, Yan Ye, Miska M. Hannuksela, "SHVC Working Draft 2", Joint Collaborative Team on Video Coding (JCT-VC) of ITU-T SG16 WP3 and ISO/IEC JTC1/SC29/WG11 13th Meeting: Incheon, KR, 2013-06-14, [JCTVC-M1008_v3], pp.7-8,41,46-47 | 1 |

Form PCT/ISA/210 (continuation of second sheet) (July 2009)

## INTERNATIONAL SEARCH REPORT

International application No.

PCT/JP2014/068169

| Box No. II | Observations where certain claims were found unsearchable (Continuation of item 2 of first sheet) |
| --- | --- |

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |
| --- | --- |

This International Searching Authority found multiple inventions in this international application, as follows:
        (See extra sheet.)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
        1

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2014/068169

Continuation of Box No.III of continuation of first sheet(2)

The technical feature common to claims 1, 2, 3, 6, 9, 10 is "a moving image decoding device" provided with any of "a layer dependency information decoding means", "an active dependency layer information decoding means", and "a reference picture set derivation means".

However, since this technical feature makes no contribution over the prior art in the light of the contents of the disclosure of document (Jianle Chen, Jill Boyce, Yan Ye, Miska M. Hannuksela, "SHVC Working Draft 2", Joint Collaborative Team on Video Coding (JCT-VC) of ITU-T SG16 WP3 and ISO/IEC JTC1/SC29/WG11 13th Meeting: Incheon, KR, 2013-06-14, [JCTVC-M1008_v3], pp.7-8,41,46-47), this technical feature cannot be considered to be a special technical feature (direct_dependency_flag in this document corresponds to "dependency layer information", num_inter_layer_ref_pics_minus1 and inter_layer_pred_layer_idc in this document correspond to "active dependency layer information", and the derivation of a reference picture set is described in column G.8.1.2 of this document).

Further, there is no other same or corresponding special technical feature among these inventions.

Accordingly, claims are classified into six inventions each of which has a special technical feature indicated below.

(Invention 1) claim 1
A moving image decoding device, wherein the active dependency layer information decoding means decodes the number of active dependency layers that indicates the number of pictures of the reference layer, and only when the number of active dependency layers is different from the number of dependency layers, decodes active dependency layer indexes indicating elements of a dependency layer list from coded data.

(Invention 2) claim 2
A moving image decoding device provided with an active dependency flag present flag decoding means which indicates whether or not active dependency layer information is decoded by a slice segment header, wherein the active dependency layer information decoding means decodes an active dependency layer list decoded from coded data only when the active dependency flag present flag decoded by the active dependency flag present flag decoding means is a value indicating presence.

Claim 2 is not relevant to an invention which involves all of the matters to define the invention in claim 1 and which has a same category.

Further, as a result of the search which has been carried out with respect to claims classified into Invention 1, claim 2 is not relevant to an invention on which it is substantially possible to carry out a search without an additional prior-art search and judgment, and there is no other reason for that it can be considered that it is efficient to carry out a search on claim 2 together with claim 1, and consequently, it is impossible to classify claim 2 into Invention 1.

(Invention 3) claims 3-5
A moving image decoding device, wherein the layer dependency information decoding means decodes an active layer dependency flag indicating whether or not a picture of each layer belonging to a dependency layer list is referred to by an object picture, and a coding device corresponding to the moving image decoding device.

(Continued to next extra sheet)

**INTERNATIONAL SEARCH REPORT**

International application No.

PCT/JP2014/068169

Claims 3-5 are not relevant to inventions which involve all of the matters to define the invention in claim 1 or 2 and which have a same category.

Further, as a result of the search which has been carried out with respect to claims classified into Invention 1 or 2, claims 3-5 are not relevant to inventions on which it is substantially possible to carry out a search without an additional prior-art search and judgment, and there is no other reason for that it can be considered that it is efficient to carry out a search on claims 3-5 together with claim 1 or 2, and consequently, it is impossible to classify claims 3-5 into Invention 1 or 2.

(Invention 4) claims 6-8

A moving image decoding device provided with an active maximum layer number decoding means which decodes an active maximum dependency layer number that is the maximum value of pictures of the reference layer, to which a picture of an object layer refers, wherein the layer dependency information decoding means decodes an active dependency layer indicating elements of a dependency layer list, the number of elements being less than or equal to the active maximum layer number.

Claims 6-8 are not relevant to inventions which involve all of the matters to define the invention in claim 1, 2 or 3 and which have a same category.

Further, as a result of the search which has been carried out with respect to claims classified into Inventions 1-3, claims 6-8 are not relevant to inventions on which it is substantially possible to carry out a search without an additional prior-art search and judgment, and there is no other reason for that it can be considered that it is efficient to carry out a search on claims 6-8 together with claims 1-5, and consequently, it is impossible to classify claims 6-8 into Inventions 1-3.

(Invention 5) claim 9

A moving image decoding device provided with "a dependency type maximum value decoding means" and "a dependency type decoding means".

Claim 9 is not relevant to an invention which involves all of the matters to define the invention in claim 1, 2, 3 or 6 and which has a same category.

Further, as a result of the search which has been carried out with respect to claims classified into Inventions 1-4, claim 9 is not relevant to an invention on which it is substantially possible to carry out a search without an additional prior-art search and judgment, and there is no other reason for that it can be considered that it is efficient to carry out a search on claim 9 together with claims 1-8, and consequently, it is impossible to classify claim 9 into Inventions 1-4.

(Invention 6) claims 10-11

A moving image decoding device provided with a reference picture list generation means which generates a reference picture list, wherein the reference picture list generation means makes an addition in a predetermined order from an interlayer reference picture when generating an L0 reference list, and makes an addition in a different order from the predetermined order from the interlayer reference picture when generating an L1 reference list.

(Continued to next extra sheet)

Form PCT/ISA/210 (extra sheet) (July 2009)

**INTERNATIONAL SEARCH REPORT**

| International application No. |
| --- |
| PCT/JP2014/068169 |

Claims 10-11 are not relevant to inventions which involve all of the matters to define the invention in claim 1, 2, 3, 6 or 9, and which have a same category.

Further, as a result of the search which has been carried out with respect to claims classified into Inventions 1-5, claims 10-11 are not relevant to inventions on which it is substantially possible to carry out a search without an additional prior-art search and judgment, and there is no other reason for that it can be considered that it is efficient to carry out a search on claims 10-11 together with claims 1-9, and consequently, it is impossible to classify claims 10-11 into Inventions 1-5.

Form PCT/ISA/210 (extra sheet) (July 2009)

**EP 3 021 589 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Recommendation ITU-T H.265 High efficiency video coding. *TELECOMMUNICATION STANDARDIZATION SECTOR OF ITU,* April 2013
- SHVC Working Draft 2. *JCTVC-M1008, JCT-VC,* 18 April 2013
- MV-HEVC Draft Text 4. *JCT3V-D1004, JCT-3V,* 20 April 2013